(19) **Europäisches Patentamt / European Patent Office / Office européen des brevets**

(11) **EP 4 346 302 A1**

(12) **EUROPEAN PATENT APPLICATION**

(43) Date of publication:
**03.04.2024 Bulletin 2024/14**

(21) Application number: **23200948.0**

(22) Date of filing: **29.09.2023**

(51) International Patent Classification (IPC):
**H04W 72/02** *(2009.01)* **H04W 72/20** *(2023.01)*

(52) Cooperative Patent Classification (CPC):
**H04W 72/02;** H04W 72/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 US 202263411630 P**

(71) Applicant: **Comcast Cable Communications LLC**
**Philadelphia, Pennsylvania 19103 (US)**

(72) Inventors:
• **RASTEGARDOOST, Nazanin**
  **Philadelphia, 19103 (US)**
• **JEON, Hyoungsuk**
  **Philadelphia, 19103 (US)**
• **DINAN, Esmael Hejazi**
  **Philadelphia, 19103 (US)**
• **HUI, Bing**
  **Philadelphia, 19103 (US)**
• **KIM, Taehun**
  **Philadelphia, 19103 (US)**
• **HONG, Jongwoo**
  **Philadelphia, 19103 (US)**

(74) Representative: **V.O.**
**P.O. Box 87930**
**2508 DH Den Haag (NL)**

(54) **CHANNEL OCCUPANCY ASSISTANCE INFORMATION FOR SIDELINK**

(57) A wireless device may communicate with one or more (other) wireless devices, for example, by using sidelink resources for sidelink transmissions. A wireless device may access a channel for a time period and may share the time period with one or more other wireless devices. To avoid collision and improve efficiency, the wireless device may request for assistance information from candidate wireless devices, and may determine, based on the assistance information, whether and/or how to share with one or more of the candidate wireless devices.

FIG. 40

EP 4 346 302 A1

**Description**

CROSS-REFERENCE TO RELATED APPLICATIONS

This application claims the benefit of U.S. Provisional Application No. 63/411,630, filed on September 30, 2022. The above-referenced application is hereby incorporated by reference in its entirety.

BACKGROUND

A base station and a wireless device communicate via uplink and/or downlink communication. A wireless device communicates with another device (e.g., other wireless devices) via sidelink communications.

SUMMARY

The following summary presents a simplified summary of certain features. The summary is not an extensive overview and is not intended to identify key or critical elements.
A wireless device may communicate with one or more (other) wireless devices, for example, by using sidelink resources for sidelink transmissions. A wireless device may access a channel for a time period (e.g., Channel Occupancy Time (COT)). The wireless device may share the time period with one or more other wireless devices. To avoid collision and improve efficiency, the wireless device may request for assistance information from candidate wireless devices, and may determine, based on the assistance information, whether and/or how to share with one or more of the candidate wireless devices. For example, the assistance information may indicate preferred/non-preferred resources of a candidate wireless device. The wireless device may determine to share a portion (e.g., one or more resources) of the time period with the candidate wireless device, for example, if that portion does not include the non-preferred resources. The wireless device may send (e.g., transmit) information of shared time period to the candidate wireless device for shared use of the time period.
These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.
FIG. 2A shows an example user plane.
FIG. 2B shows an example control plane configuration.
FIG. 3 shows example of protocol layers.
FIG. 4A shows an example downlink data flow for a user plane configuration.
FIG. 4B shows an example format of a Medium Access Control (MAC) subheader in a MAC Protocol Data Unit (PDU).
FIG. 5A shows an example mapping for downlink channels.
FIG. 5B shows an example mapping for uplink channels.
FIG. 6 shows example radio resource control (RRC) states and RRC state transitions.
FIG. 7 shows an example configuration of a frame.
FIG. 8 shows an example resource configuration of one or more carriers.
FIG. 9 shows an example configuration of bandwidth parts (BWPs).
FIG. 10A shows example carrier aggregation configurations based on component carriers.
FIG. 10B shows example group of cells.
FIG. 11A shows an example mapping of one or more synchronization signal/physical broadcast channel (SS/PBCH) blocks.
FIG. 11B shows an example mapping of one or more channel state information reference signals (CSI-RSs).
FIG. 12A shows examples of downlink beam management procedures.
FIG. 12B shows examples of uplink beam management procedures.
FIG. 13A shows an example four-step random access procedure.
FIG. 13B shows an example two-step random access procedure.
FIG. 13C shows an example two-step random access procedure.
FIG. 14A shows an example of control resource set (CORESET) configurations.
FIG. 14B shows an example of a control channel element to resource element group (CCE-to-REG) mapping.
FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17 shows an example of wireless communications.

FIG. 18 shows an example of a resource pool for communication link (e.g., a sidelink).

FIG. 19 shows an example of sidelink symbols in a slot.

FIG. 20 shows an example of a resource indication for a transport block (TB) and a resource reservation for a TB.

FIG. 21 shows an example of configuration information for sidelink (SL) communication.

FIG. 22 shows an example of configuration information for sidelink communication.

FIG. 23 shows an example format of a MAC subheader for a sidelink shared channel (SL-SCH).

FIG. 24 shows an example timing of a resource selection procedure.

FIG. 25 shows an example timing of a resource selection procedure.

FIG. 26 shows an example flowchart of a resource selection procedure by a wireless device for sending (e.g., transmitting) a TB via sidelink.

FIG. 27 shows an example of the resource selection procedure among layers of the wireless device.

FIG. 28 shows an example configuration of a sidelink resource pool in a frequency band.

FIG. 29 shows an example configuration of a sidelink resource pool in a frequency band.

FIG. 30 shows an example of a sidelink inter-wireless-device coordination.

FIG. 31 shows an example of a sidelink inter-wireless-device coordination.

FIG. 32 shows an example of channel access priority classes for SL channel access procedure.

FIG. 33 shows an example of COT sharing between a base station and a wireless device.

FIG. 34 shows an example of COT sharing between a base station and a wireless device.

FIG. 35 shows an example of sidelink wireless devices operating in unlicensed spectrum.

FIG. 36 shows an example of wireless-device-to-wireless-device (e.g., UE-to-UE) COT sharing in SL-U.

FIG. 37 shows an example of COT sharing in SL-U with multiple switching points.

FIG. 38 shows an example of hidden node issue in sidelink operation in unlicensed spectrum.

FIG. 39 shows an example of COT assistance information (AI) signaling between two wireless devices in SL-U.

FIG. 40 shows an example of COT sharing using COT AI.

FIG. 41 shows an example of COT assistance mechanism in SL-U.

FIG. 42 shows an example of COT sharing based on COT AI.

FIG. 43 shows another example of COT sharing based on COT AI.

FIG. 44A shows an example method of COT sharing based on COT AI.

FIG. 44B shows an example method of COT sharing based on COT AI.

FIG. 44C shows an example method of COT AI signaling.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems.

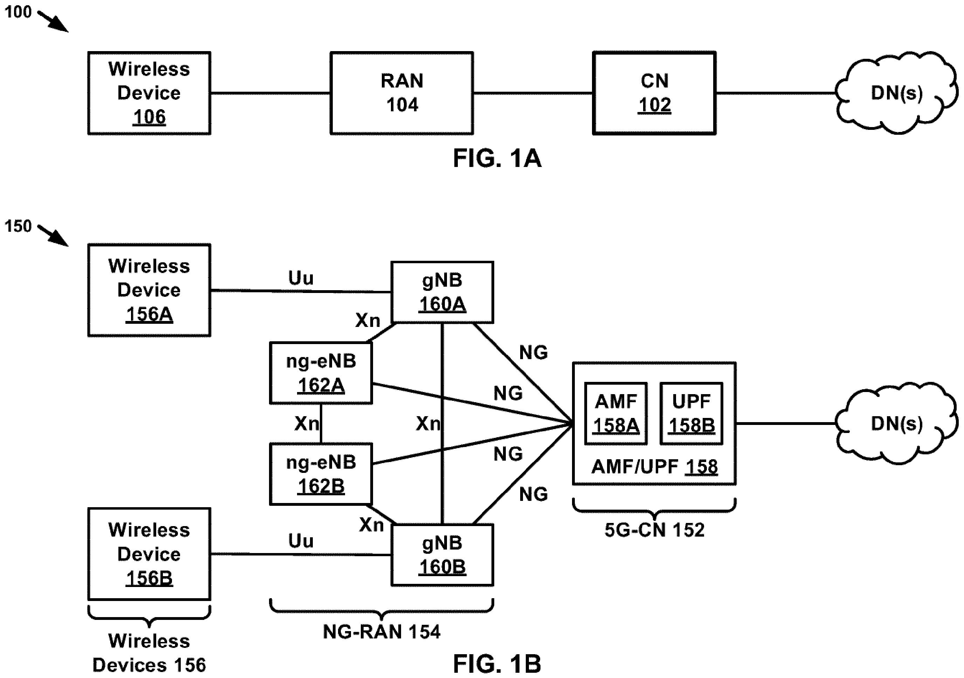

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g.,

the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/LTPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/LTPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/LTPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

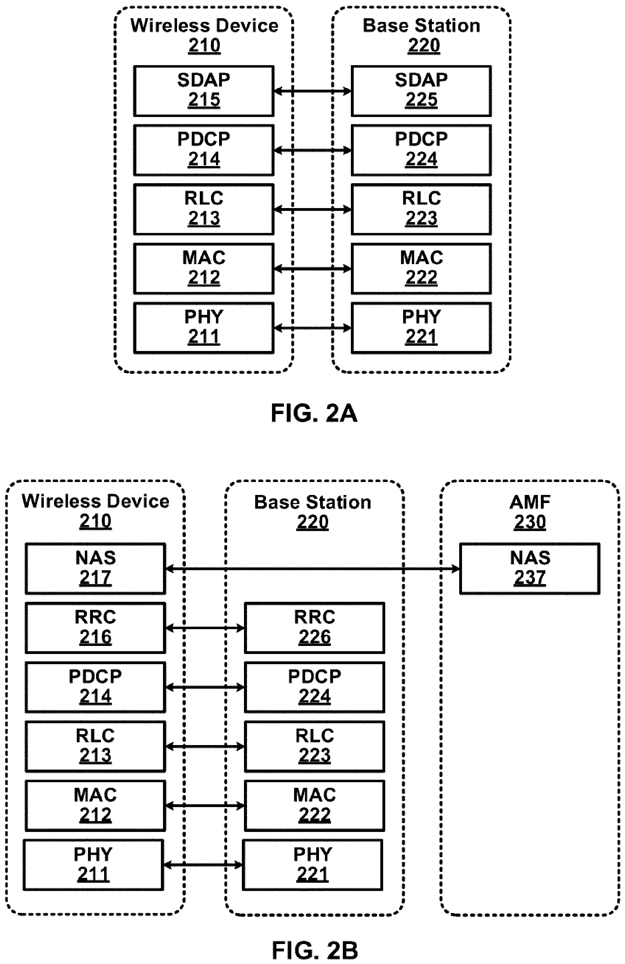

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

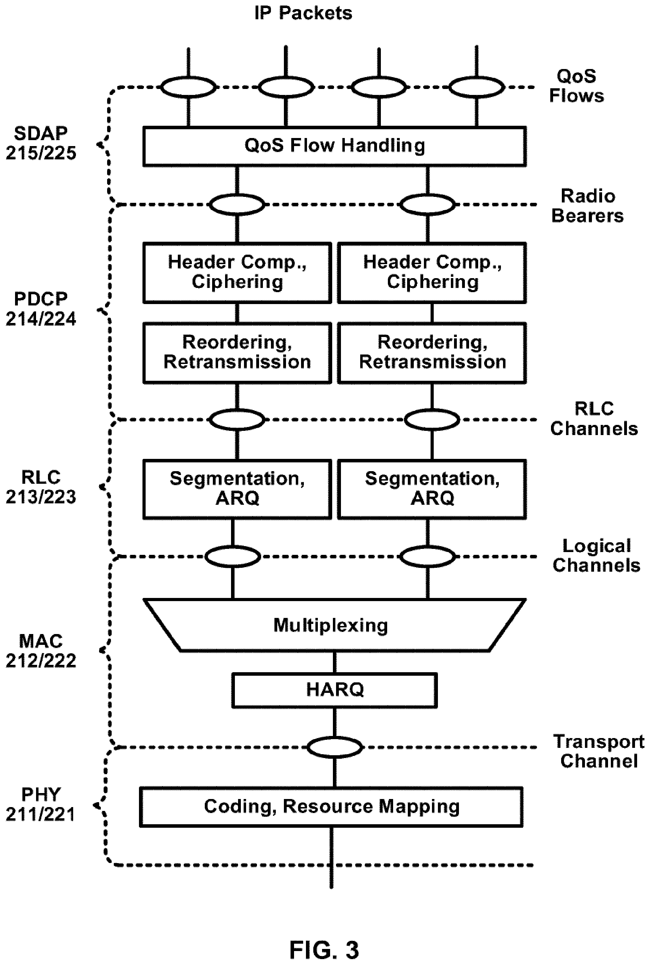

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be sent (e.g., transmitted) over the air interface, ciphering/deciphering to prevent unauthorized decoding of data sent (e.g., transmitted) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

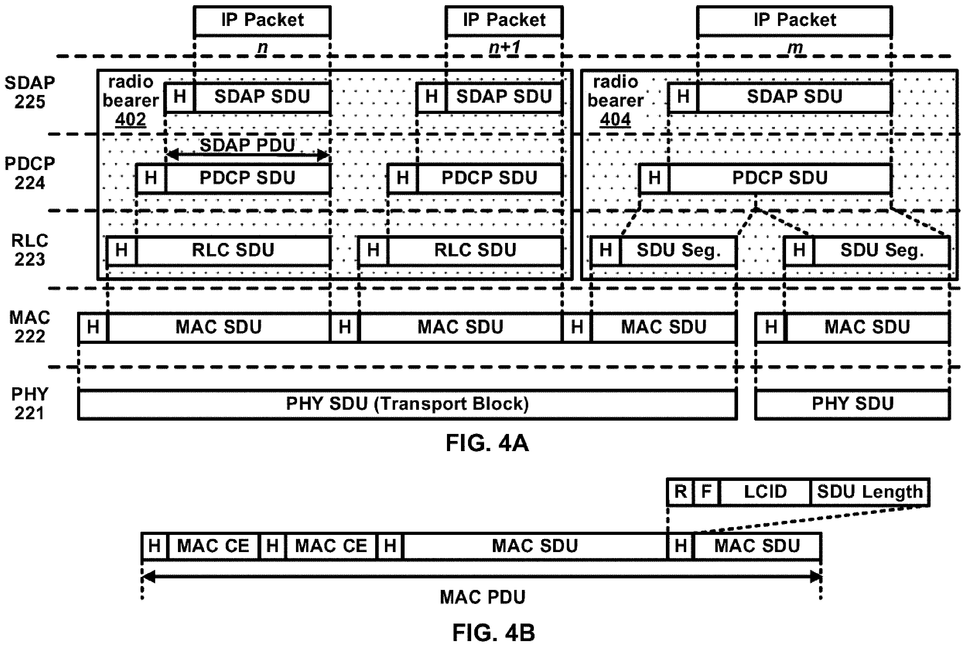

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

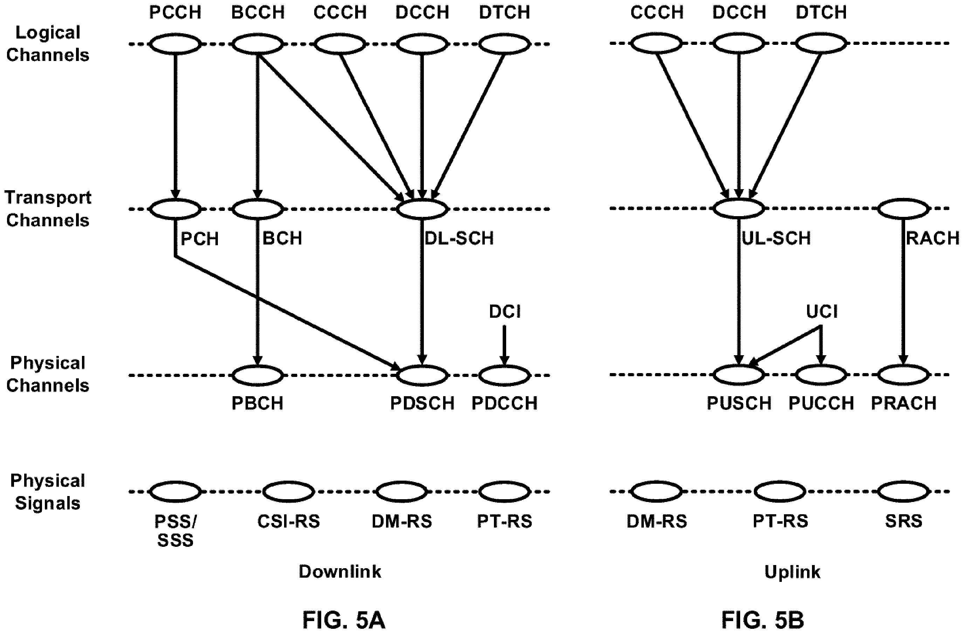

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

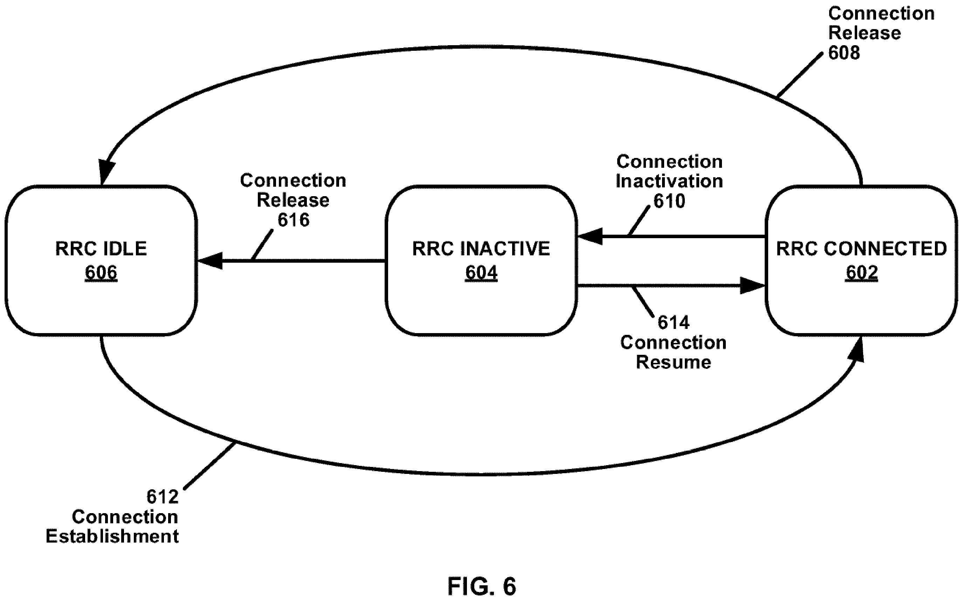

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device.

During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

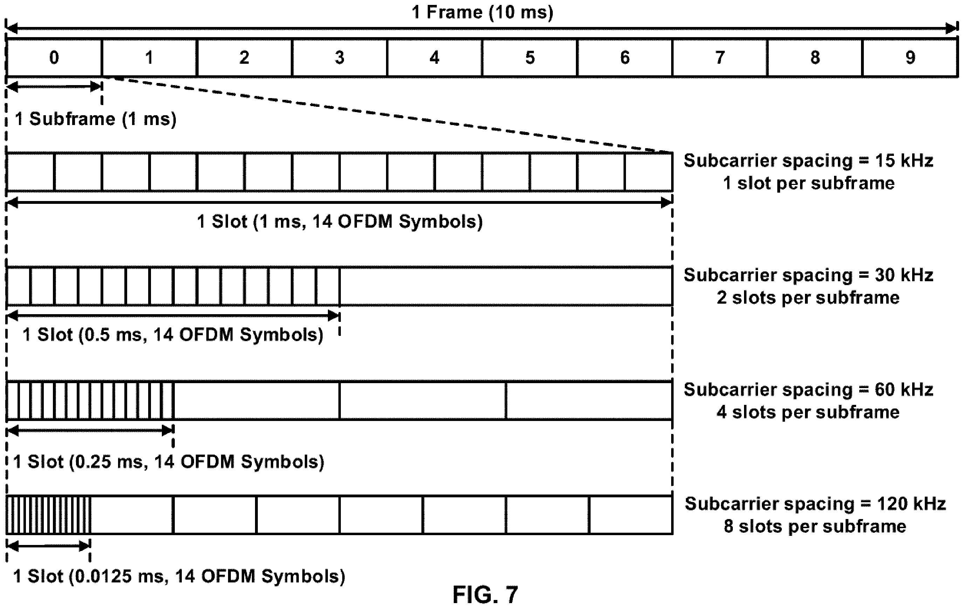

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

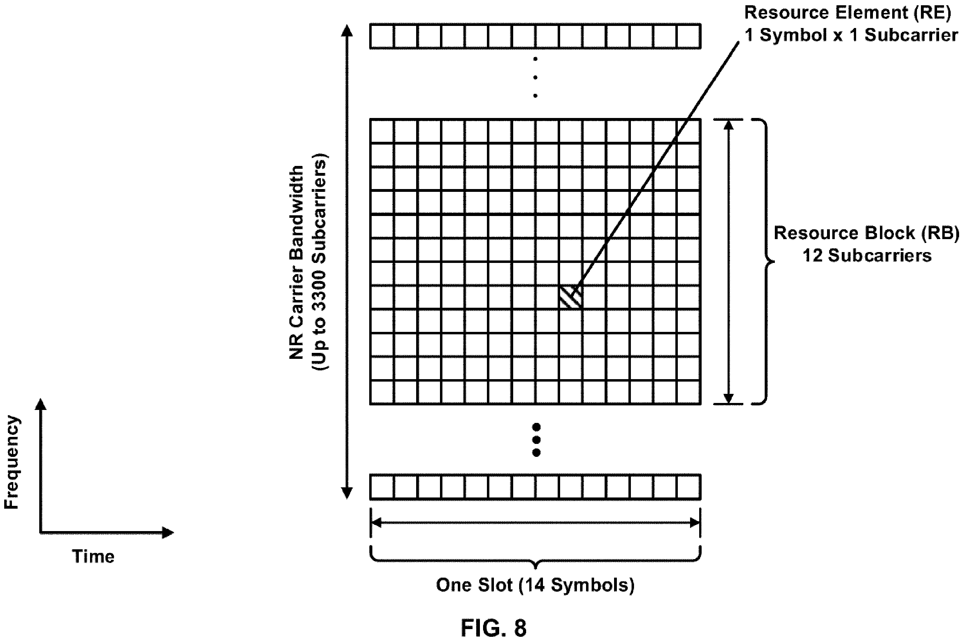

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

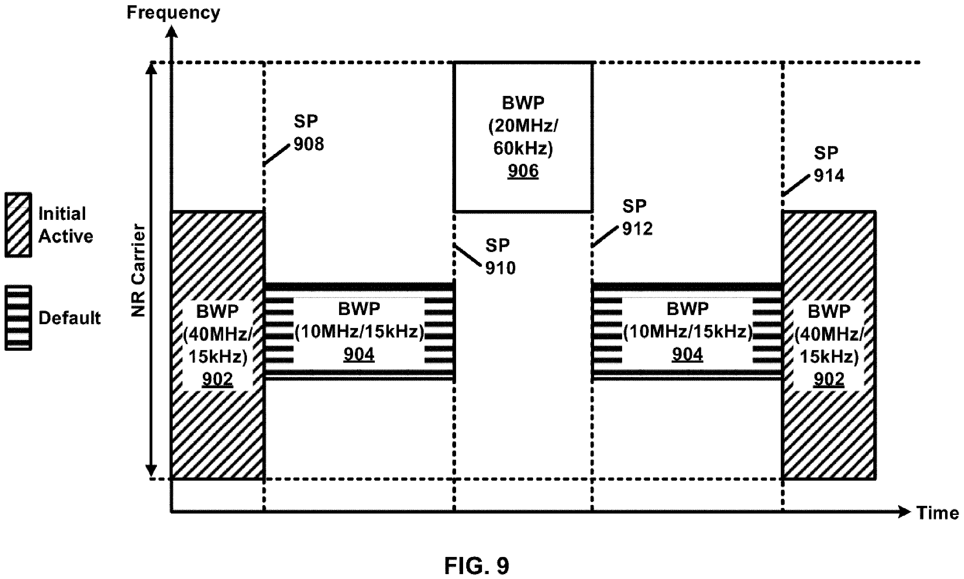

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

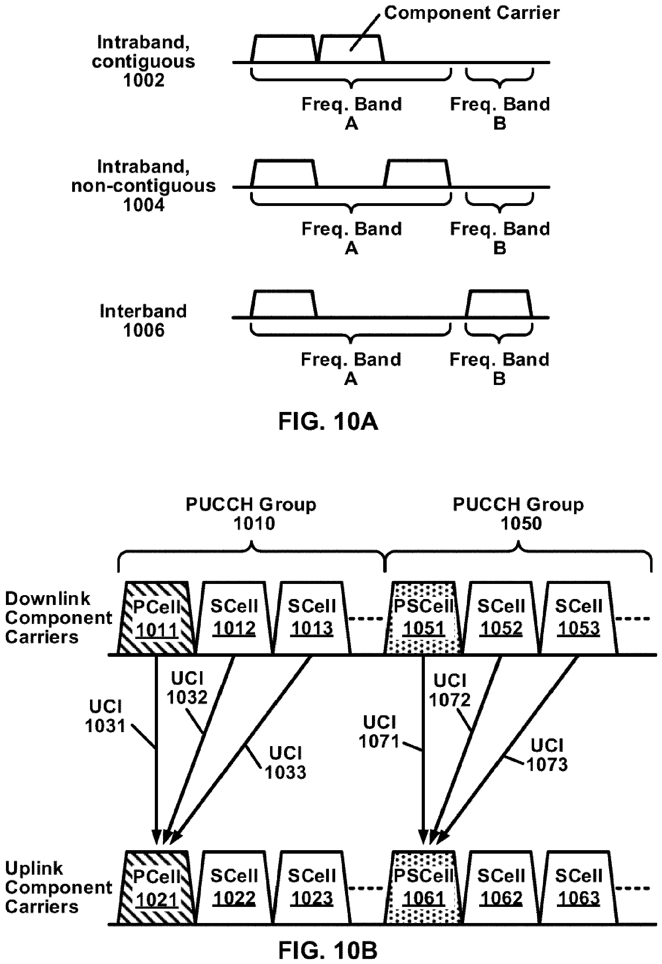

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

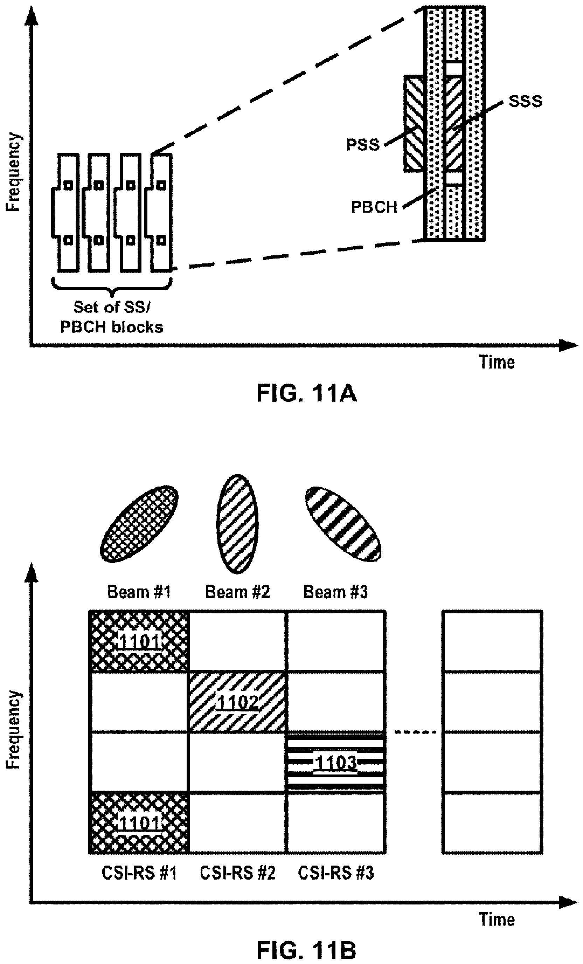

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB 1). The SIB 1 may comprise information for the wireless device to access the cell. The wireless device may use one or more parameters of the MIB to monitor a PDCCH, which may be used to schedule a PDSCH. The PDSCH may comprise the SIB 1. The SIB1 may be decoded using parameters provided/comprised in the MIB. The PBCH may indicate an absence of SIB1.The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g., the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

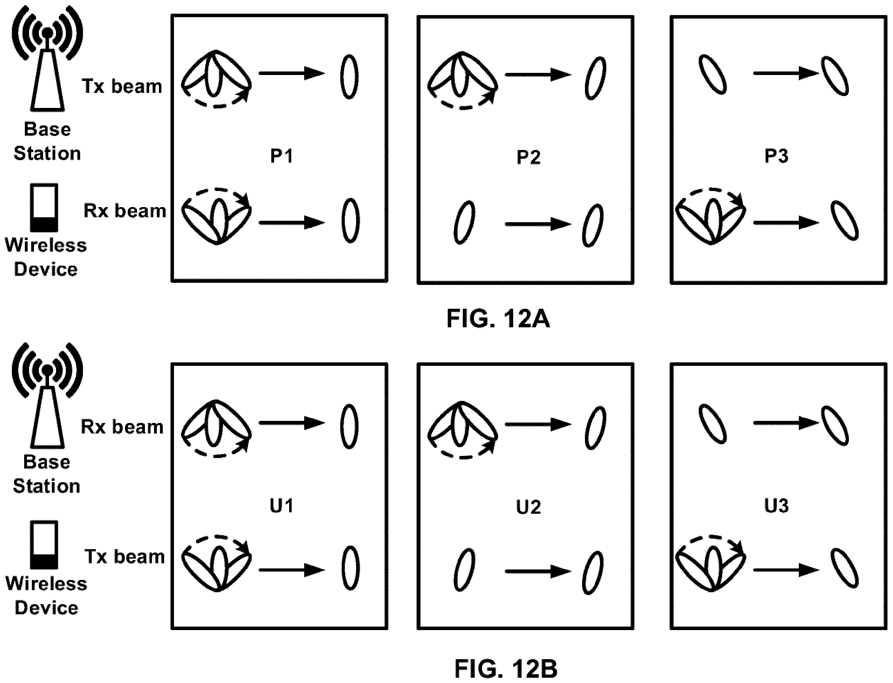

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

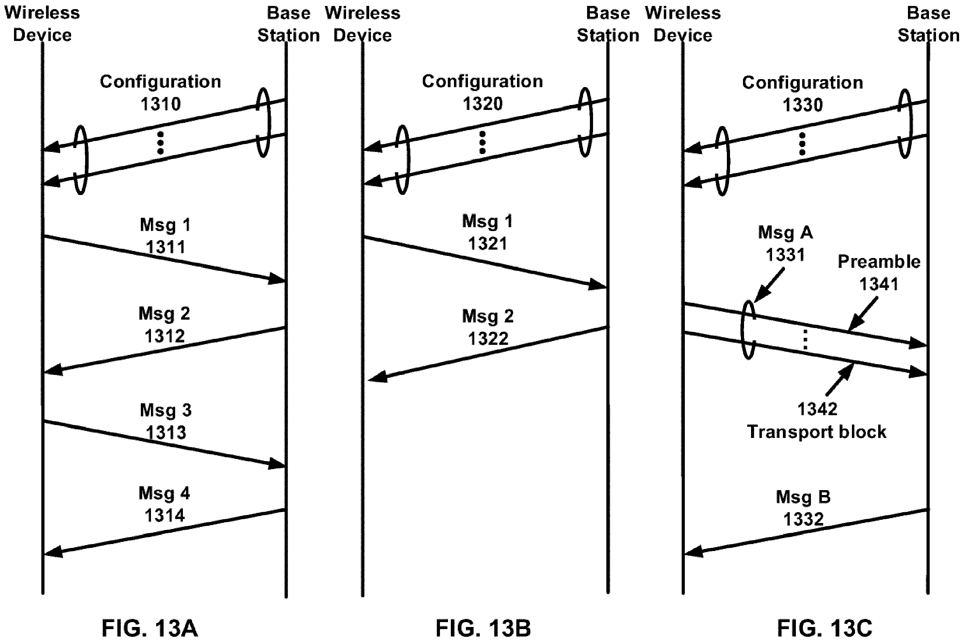

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC CONNECTED) state and/or in an RRC inactive (e.g., an RRC INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, for facilitating detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

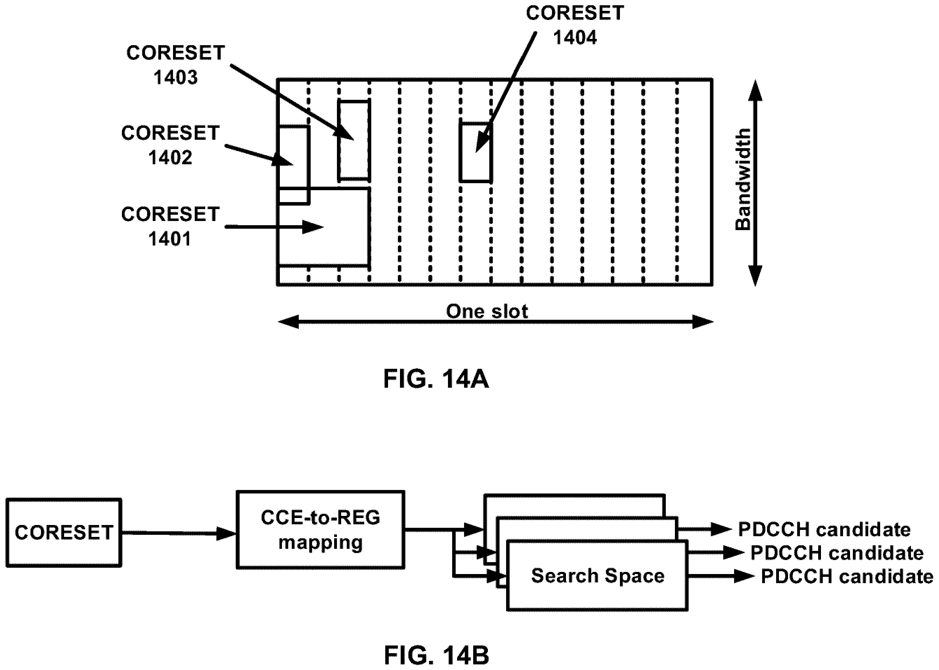

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to abase station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

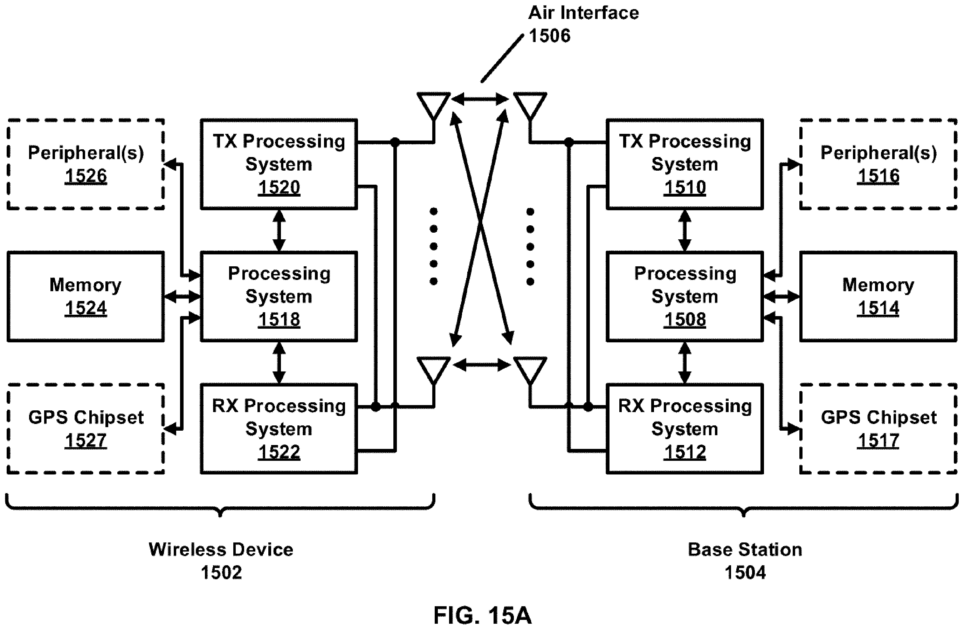

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

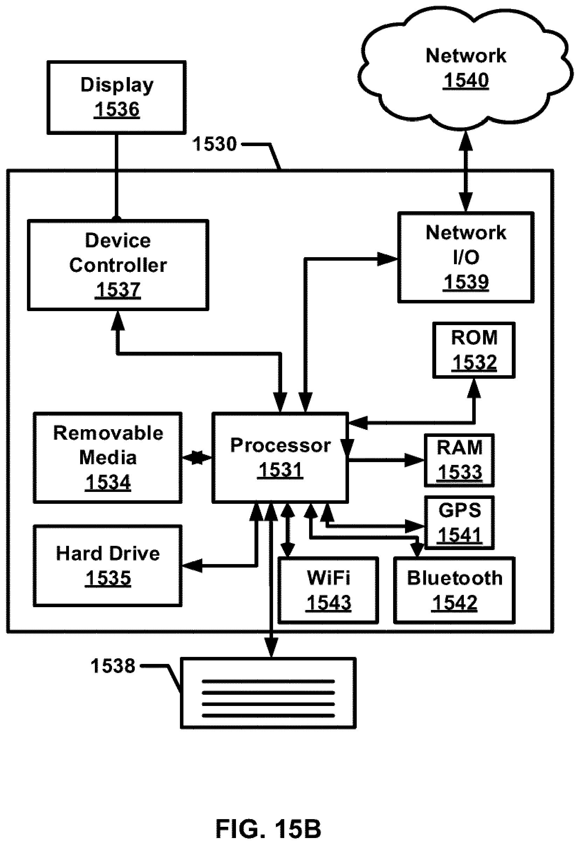

FIG. 15B shows example elements of a computing device that may be used to implement any of the various devices described herein, including, for example, the base station 160A, 160B, 162A, 162B, 220, 1504, 1710, and/or 1711, the wireless device 106, 156A, 156B, 210, 1502, 1701, 1702, 1703, 1704, 1705, and/or 2710, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

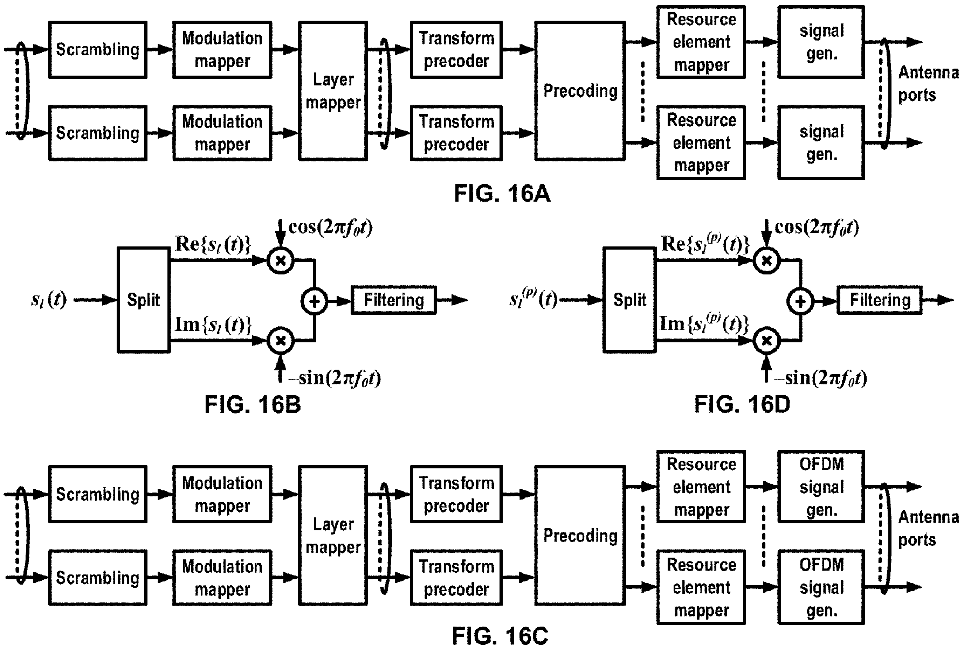

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

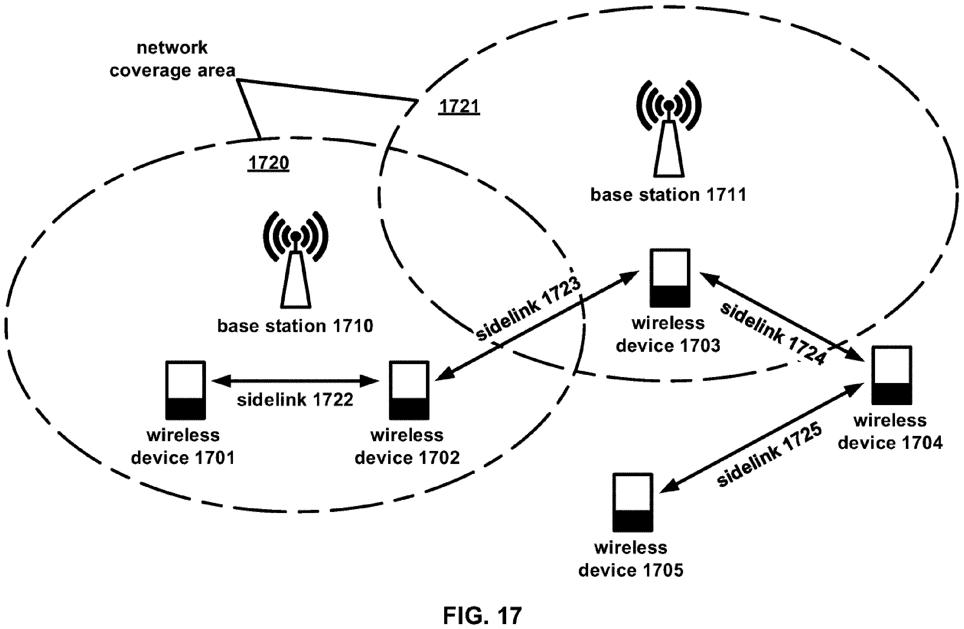

FIG. 17 shows an example of wireless communications. There may be a direct communication between wireless devices, for example, in wireless communication (e.g., sidelink communications, device-to-device (D2D) communications, vehicle-to-everything (V2X) communications, etc.). The direct communication may be performed via a communications link, such as a sidelink (SL) or any other link. The wireless devices may exchange communications, such as sidelink communications, via an interface such as a sidelink interface (e.g., a PC5 interface). The direct communications, such as sidelink communications, may differ from uplink communications (e.g., in which a wireless device may communicate to a base station) and/or downlink communications (e.g., in which a base station may communicate to a wireless device). Reference made herein to sidelink, SL, and/or to sidelink communications may comprise any link and/or any link communications, including, for example, any direct link and/or any direct link communications between any user devices (e.g., wireless devices, user devices, user equipments, etc.). Although sidelink is used as an example, one skilled in the art will appreciate that any communications can use these concepts. A wireless device and a base station may exchange uplink and/or downlink communications via an interface, such as a user plane interface (e.g., a Uu interface).

A first wireless device (e.g., a wireless device 1701) and a second wireless device (e.g., a wireless device 1702) may be in a first coverage area (e.g., a coverage area 1720) of a first base station (e.g., a base station 1710). The first wireless device and the second wireless device may communicate with the first base station, for example, via a Uu interface. The coverage area may comprise any quantity of wireless devices that may communicate with the base station. A third wireless device (e.g., a wireless device 1703) may be in a second coverage area (e.g., a coverage area 1721) of a second base station (e.g., abase station 1711). The second coverage area may comprise any quantity of wireless devices that may communicate with the second base station. The first base station and the second base station may share a network and/or may jointly establish/provide a network coverage area (e.g., 1720 and 1721). A fourth wireless device (e.g., a wireless device 1704) and a fifth wireless device (e.g., a wireless device 1705) may be outside of the network coverage area (e.g., 1720 and 1721). Any quantity of wireless devices may be outside of the network coverage area (e.g., 1720 and 1721).

Wireless communications may comprise in-coverage D2D communication. In-coverage D2D communication may be performed, for example, if two or more wireless devices share a network coverage area. The first wireless device and the second wireless device may be in the first coverage area of the first base station. The first wireless device and the second wireless device may perform a direct communication (e.g., an in-coverage intra-cell direct communication via a sidelink 1722). The second wireless device and the third wireless device may be in the coverage areas of different base stations (e.g., 1710 and 1711) and/or may share the same network coverage area (e.g., 1720 and/or 1721). The second wireless device and the third wireless device may perform a direct communication (e.g., an in-coverage inter-cell direct communication via a sidelink 1723). Partial-coverage direct communications (e.g., partial-coverage D2D communications, partial-coverage V2X communications, partial-coverage sidelink communications, etc.) may be performed. Partial-coverage direct communications may be performed, for example, if one wireless device is within the network coverage area and the other wireless device is outside the network coverage area. The third wireless device and the fourth wireless device may perform a partial-coverage direct communication (e.g., via a sidelink 1724). Out-of-coverage direct communications may be performed. Out-of-coverage direct communications may be performed, for example, if both wireless devices are outside of a network coverage area. The fourth wireless device and the fifth wireless device may perform an out-of-coverage direct communication (e.g., via a sidelink 1725).

Wireless communications, such as sidelink communications, may be configured using physical channels. Wireless communications, such as sidelink communications, may be configured using physical channels, for example, a physical sidelink broadcast channel (PSBCH), a physical sidelink feedback channel (PSFCH), a physical sidelink discovery channel (PSDCH), a physical sidelink control channel (PSCCH), and/or a physical sidelink shared channel (PSSCH). PSBCH may be used by a first wireless device to send broadcast information to a second wireless device. A PSBCH may be similar in some respects to a PBCH. The broadcast information may comprise a slot format indication, resource pool information, a sidelink system frame number, and/or any other suitable broadcast information. A PSFCH may be used by a first wireless device to send feedback information to a second wireless device. The feedback information may comprise HARQ feedback information. A PSDCH may be used by a first wireless device to send discovery information to a second wireless device. The discovery information may be used by a wireless device to signal its presence and/or the availability of services to other wireless devices in the area. A PSCCH may be used by a first wireless device to send sidelink control information (SCI) to a second wireless device. A PSCCH may be similar in some respects to PDCCH and/or PUCCH. The control information may comprise time/frequency resource allocation information (e.g., RB size, a number of retransmissions, etc.), demodulation related information (e.g., DM-RS, MCS, redundancy version (RV), etc.), identifying information for a sending (e.g., transmitting) wireless device and/or a receiving wireless device, a process identifier (e.g., HARQ, etc.), and/or any other suitable control information. The PSCCH may be used to allocate, prioritize, and/or reserve sidelink resources for sidelink transmissions. PSSCH may be used by a first wireless device to send and/or relay data and/or network information to a second wireless device. PSSCH may be similar in some respects to PDSCH and/or PUSCH. A sidelink channel may be associated with one or more demodulation reference signals. For example, each of the sidelink channels may be associated with one or more demodulation reference signals. Sidelink operations may utilize sidelink synchronization signals to establish a timing of sidelink operations. Wireless devices configured for sidelink operations may send sidelink synchronization signals, for example, with the PSBCH. The sidelink synchronization signals may include primary sidelink synchronization signals (PSSS) and/or secondary sidelink synchronization signals (SSSS).

A wireless device may be configured with wireless resources (e.g., sidelink resources). A wireless device may be configured (e.g., pre-configured) for a sidelink. A wireless device may be configured (e.g., pre-configured) with sidelink resource information. A network may broadcast system information relating to a resource pool for a sidelink. A network may configure a particular wireless device with a dedicated sidelink configuration. The configuration may identify/indicate sidelink resources to be used for sidelink operation (e.g., configure a sidelink band combination).

A wireless device may operate in one or more (e.g., different) modes. The wireless device may operate in an assisted mode (e.g., mode 1) and/or an autonomous mode (e.g., mode 2). Mode selection may be based on a coverage status of the wireless device, a radio resource control status of the wireless device, information and/or instructions from the network, and/or any other suitable factors. The wireless device may select to operate in autonomous mode. The wireless device may select to operate in autonomous mode, for example, if the wireless device is idle or inactive, or if the wireless device is outside of network coverage. The wireless device may select to operate (or be instructed by a base station to operate) in an assisted mode. The wireless device may select to operate (or be instructed by a base station to operate) in an assisted mode, for example, if the wireless device is in a connected mode (e.g., connected to a base station). The network (e.g., a base station) may instruct a connected wireless device to operate in a particular mode.

The wireless device may request scheduling from the network. The wireless device may request scheduling from the network, for example, in an assisted mode. The wireless device may send a scheduling request to the network and the network may allocate sidelink resources to the wireless device. Assisted mode may be referred to as network-assisted mode, gNB-assisted mode, or a base station-assisted mode. The wireless device may select sidelink resources. The wireless device may select sidelink resources, for example, in an autonomous mode. The wireless device may select sidelink resources, for example, based on measurements within one or more resource pools (e.g., pre-configured resource pools, network-assigned resource pools), sidelink resource selections made by other wireless devices, and/or sidelink resource usage of other wireless devices.

A wireless device may use a sensing window. A wireless device may use a selection window. A wireless device may use a sensing window and/or a selection window, for example, to determine/select sidelink resources. The wireless device may receive/determine SCI sent (e.g., transmitted) by other wireless devices using a sidelink resource pool. The wireless device may receive/determine SCI sent (e.g., transmitted) by other wireless devices using the sidelink resource pool, for example, in the sensing window. The SCIs may identify/determine resources that may be used and/or reserved for sidelink transmissions. The wireless device may determine/select resources within the selection window (e.g., resources that are different from the resources identified in the SCIs). The wireless device may determine/select resources within the selection window, for example, based on the resources identified in the SCIs. The wireless device may send (e.g., transmit) using the selected sidelink resources.

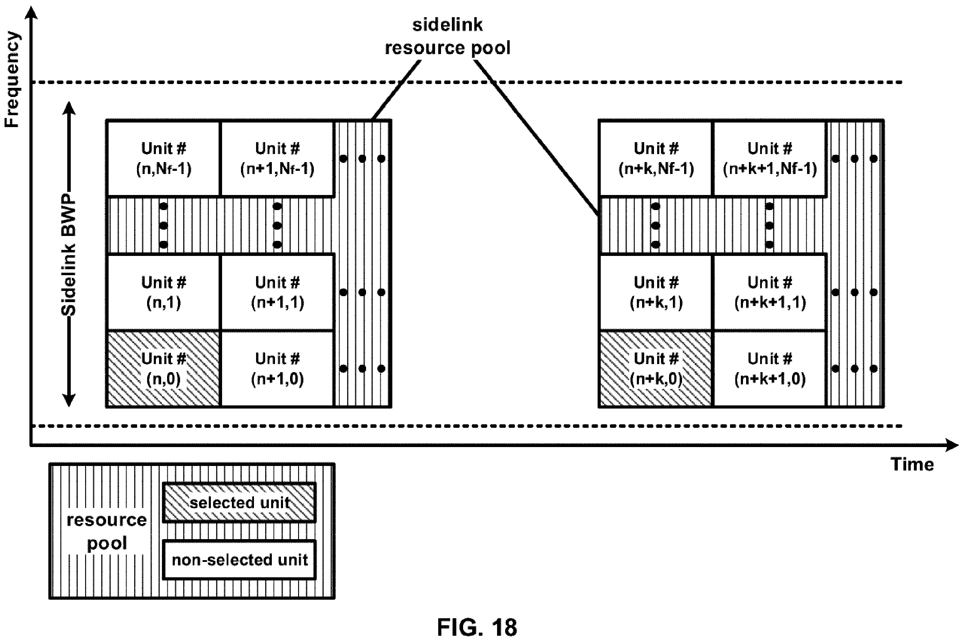

FIG. 18 shows an example of a resource pool for sidelink operations. A wireless device may operate using one or more sidelink cells. A sidelink cell may include one or more resource pools. A resource pool (e.g., each resource pool) may be configured to operate in accordance with a particular mode (e.g., assisted mode, autonomous mode, and/or any other mode). The resource pool may be divided into one or more resource units (e.g., one or more resources). Each resource unit may comprise one or more resource blocks. Each resource unit may comprise one or more resource blocks, for example, in the frequency domain. Each resource unit may comprise one or more resource blocks, for example, which may be referred to as a sub-channel. Each resource unit may comprise one or more slots, one or more subframes, and/or one or more OFDM symbols. Each resource unit may comprise one or more slots, one or more subframes, and/or one or more OFDM symbols, for example, in the time domain. The resource pool may be continuous or non-continuous in the frequency domain and/or the time domain (e.g., comprising contiguous resource units or non-contiguous resource units). The resource pool may be divided into repeating resource pool portions. The resource pool may be shared among one or more wireless devices. Each wireless device may attempt to send (e.g., transmit) using different resource units, for example, to avoid collisions.

A resource pool (e.g., a sidelink resource pool) may be arranged in any suitable manner. The resource pool may be non-contiguous in the time domain and/or confined to a single sidelink BWP, for example, as shown in FIG. 18. Frequency resources may be divided into Nf resource units per unit of time, for example, as shown in FIG. 18. Frequency resources may be numbered from zero to Nf-1, for example, as shown in FIG. 18. The example resource pool may comprise a plurality of portions (e.g., non-contiguous portions) that may repeat every k units of time. Time resources may be numbered as n, n+1... n+k, n+k+1..., etc., for example, as shown in FIG. 18.

A wireless device may determine/select for transmission one or more resource units from a resource pool. The wireless device may select resource unit (n,0) for sidelink transmission. The wireless device may determine/select periodic resource units in later portions of the resource pool, for example, resource unit (n+k,0), resource unit (n+2k,0), resource unit (n+3k,0), etc. The wireless device may determine/select periodic resource units, for example, based on a determination that a transmission using resource unit (n,0) will not (or is not likely) to collide with a sidelink transmission of a wireless device that shares the sidelink resource pool. The determination may be based on behavior of other wireless devices that share the resource pool. The wireless device may select resource unit (n,0), resource (n+k,0), etc., for example, if no sidelink transmissions are detected in resource unit (n-k,0). The wireless device may avoid selection of resource unit (n,1), resource (n+k,1), etc., for example, if a sidelink transmission from another wireless device is detected in resource unit (n-k,1).

Different sidelink physical channels may use different resource pools. PSCCH may use a first resource pool and PSSCH may use a second resource pool. Different resource priorities may be associated with different resource pools. Data associated with a first QoS, service, priority, and/or other characteristic may use a first resource pool and data associated with a second QoS, service, priority, and/or other characteristic may use a second resource pool. A network (e.g., a base station) may configure a priority level for each resource pool, a service to be supported for each resource pool, etc. A network (e.g., a base station) may configure a first resource pool for use by unicast wireless devices (e.g., UEs), a second resource pool for use by groupcast wireless devices (e.g., UEs), etc. A network (e.g., a base station) may configure a first resource pool for transmission of sidelink data, a second resource pool for transmission of discovery messages, etc.

A direct communication between wireless devices may include vehicle-to-everything (V2X) communications. In vehicle-to-everything (V2X) communications via a Uu interface and/or a PC5 interface, the V2X communications may be vehicle-to-vehicle (V2V) communications. The wireless device in the V2V communications may be a vehicle. The V2X communications may be vehicle-to-pedestrian (V2P) communications. A wireless device in the V2P communications may be a pedestrian equipped with a mobile phone (e.g., a handset). The V2X communications may be vehicle-to-infrastructure (V2I) communications. The infrastructure in the V2I communications may be a base station, an access point, a node, and/or a road side unit. A wireless device in the V2X communications may be a sending (e.g., transmitting) wireless device performing one or more sidelink transmissions with a receiving wireless device. The wireless device in the V2X communications may be a receiving wireless device that receives one or more sidelink transmissions from a sending (e.g., transmitting) wireless device.

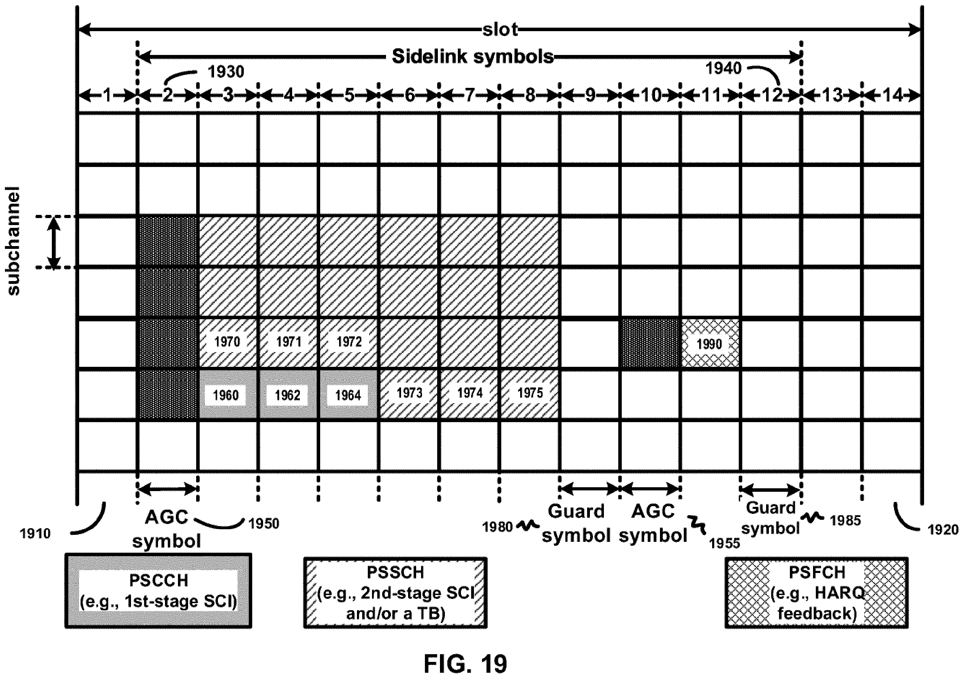

FIG. 19 shows an example of sidelink symbols in a slot. A sidelink transmission may be sent (e.g., transmitted) in a slot in the time domain. A wireless device may send (e.g., transmit) data via sidelink. The wireless device may segment the data into one or more transport blocks (TBs). The one or more TBs may comprise different pieces of the data. A TB of the one or more TBs may be a data packet of the data. The wireless device may send (e.g., transmit) the TB (e.g., the data packet) of the one or more TBs via one or more sidelink transmissions (e.g., via PSCCH and/or PSSCH in one or more slots). A sidelink transmission (e.g., occupying a slot) may comprise SCI. The sidelink transmission may further comprise a TB. The SCI may comprise a 1st-stage SCI and/or a 2nd-stage SCI. A PSCCH of the sidelink transmission may comprise the 1st-stage SCI for scheduling a PSSCH (e.g., the TB). The PSSCH of the sidelink transmission may comprise the 2nd-stage SCI. The PSSCH of the sidelink transmission may further comprise the TB. Sidelink symbols in a slot may or may not start from the first symbol of the slot 1910. The sidelink symbols in the slot may or may not end at the last symbol of the slot 1920. Sidelink symbols in a slot may start from the second symbol of the slot 1930. The sidelink symbols in the slot may end at the twelfth symbol of the slot 1940. A first sidelink transmission may comprise a first automatic gain control (AGC) symbol 1950 (e.g., the second symbol in the slot), a PSCCH 1960 - 1964 (e.g., in the third, fourth and the fifth symbols in a subchannel in the slot), a PSSCH 1970 - 1975 (e.g., from the third symbol to the eighth symbol in the slot), and/or a first guard symbol 1980 (e.g., the ninth symbol in the slot). A second sidelink transmission may comprise a second AGC symbol 1955 (e.g., the tenth symbol in the slot), a PSFCH 1990 (e.g., the eleventh symbol in the slot), and/or a second guard symbol 1985 for the second sidelink transmission (e.g., the twelfth symbol in the slot). One or more HARQ feedbacks (e.g., a positive acknowledgement or ACK and/or a negative acknowledgement or NACK) may be sent (e.g., transmitted) via the PSFCH 1990. The PSCCH 1960 - 1964, the PSSCH 1970 - 1975, and the PSFCH 1990 may have a different number of subchannels (e.g., a different number of frequency resources) in the frequency domain.

A 1st-stage SCI may be SCI format 1-A. The SCI format 1-A may comprise a plurality of fields used for scheduling of a first TB on a PSSCH and a 2nd-stage SCI on the PSSCH. The following information may be sent (e.g., transmitted) by means of the SCI format 1-A:

- *A priority* of the sidelink transmission. The priority may be a physical layer (e.g., a layer 1) priority of the sidelink transmission. The priority may be determined, for example, based on logical channel priorities of the sidelink transmission;
- *Frequency resource assignment* of a PSSCH;
- *Time resource assignment* of a PSSCH;
- *Resource reservation period/interval* for a second TB;
- *Demodulation reference signal (DMRS) pattern*;
- *A format of the 2nd-stage SCI*;
- *Beta offset indicator*;
- *Number of DMRS port*;
- *Modulation and coding scheme* of a PSSCH;
- *Additional MCS table indicator*;
- *PSFCH overhead indication*; and/or
- *Reserved bits.*

A 2nd-stage SCI may be SCI format 2-A. The SCI format 2-A may be used for decoding of a PSSCH. The SCI format 2-A may be used with a HARQ operation when the HARQ-ACK information includes an ACK and/or a NACK. The SCI format 2-A may be used when there is no feedback of HARQ-ACK information. The SCI format 2-A may comprise a plurality of fields indicating the following information:

- *HARQ process number*;
- *New data indicator*;
- *Redundancy version*;
- *Source ID of a transmitter* (e.g., a sending (transmitting) wireless device) of a sidelink transmission;
- *Destination ID of a receiver* (e.g., a receiving wireless device) of the sidelink transmission;
- *HARQ feedback enabled/disabled indicator*;
- *Cast type indicator* indicating that the sidelink transmission is a broadcast, a groupcast, and/or a unicast; and/or
- *CSI request.*

A 2nd-stage SCI may be SCI format 2-B. The SCI format 2-B may be used for decoding a PSSCH. The SCI format 2-B may be used with HARQ operation when HARQ-ACK information includes only NACK. The SCI format 2-B may be used when there is no feedback of HARQ-ACK information. The SCI format 2-B may comprise a plurality of fields indicating the following information:

- *HARQ process number;*
- *New data indicator;*
- *Redundancy version;*
- *Source ID of a transmitter* (e.g., a sending (transmitting) wireless device) of a sidelink transmission;
- *Destination ID of a receiver* (e.g., a receiving wireless device) of the sidelink transmission;
- *HARQ feedback enabled/disabled indicator;*
- *Zone ID* indicating a zone where a transmitter (e.g., a sending (transmitting) wireless device) of the sidelink transmission is geographically located; and/or
- *Communication range requirement* indicating a communication range of the sidelink transmission.

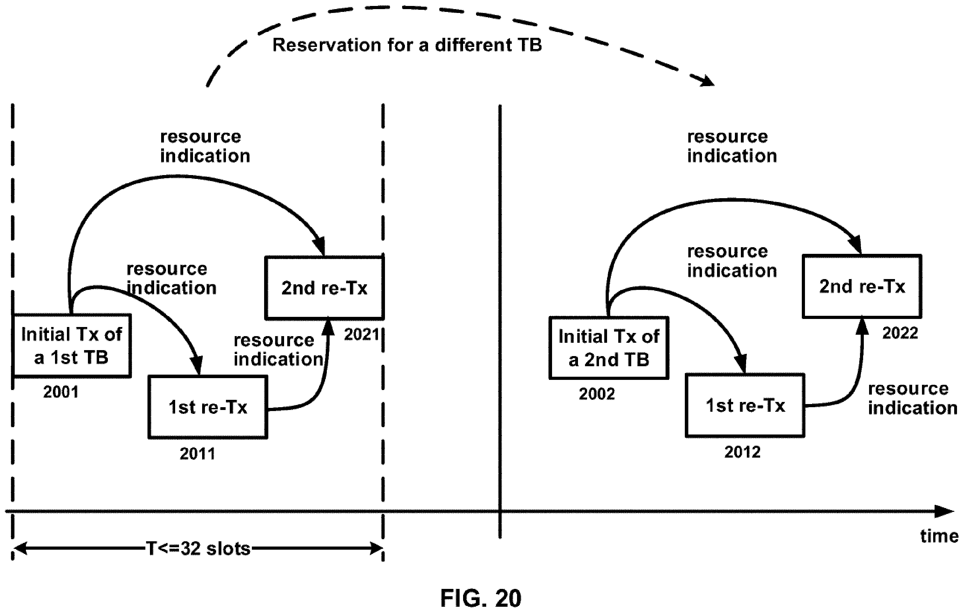

FIG. 20 shows an example of resource indication for a first TB (e.g., a first data packet) and resource reservation for a second TB (e.g., a second data packet). SCI of an initial transmission (e.g., a first transmission, initial Tx of 1st TB) 2001 and/or a retransmission (e.g., 1st re-Tx, 2nd re-Tx) 2011 and 2021 of the first TB (e.g., 1st TB) may comprise one or more first parameters (e.g., Frequency resource assignment and Time resource assignment) indicating one or more first time and/or frequency (T/F) resources for transmission (e.g., initial Tx) 2001 and/or retransmission (e.g., 1st re-Tx, 2nd re-Tx) 2011 and 2021, respectively, of the first TB (e.g., 1st TB). The SCI may further comprise one or more second parameters (e.g., Resource reservation period) indicating a reservation period (interval, etc.) of one or more second T/F resources for initial transmission (e.g., initial Tx of 2nd TB) 2002 and/or retransmission (e.g., 1st re-Tx, 2nd re-Tx) 2012 and 2022 of the second TB (e.g., 2nd TB).

A wireless device may determine/select one or more first T/F resources for transmission and/or retransmission of a first TB. A wireless device may determine/select one or more first T/F resources for (initial) transmission and/or retransmission of the first TB, for example, based on triggering a resource selection procedure (e.g., as described herein in FIG. 19). The wireless device may select three resources for sending (e.g., transmitting) the first TB, for example, such as shown in FIG. 20. The wireless device may send (e.g., transmit) an initial transmission (e.g., an initial Tx of a first TB in FIG. 20) of the first TB via a first resource 2001 of the three resources. The wireless device may send (e.g., transmit) a first retransmission (e.g., a 1st re-Tx in FIG. 20) of the first TB via a second resource 2011 of the three resources. The wireless device may send (e.g., transmit) a second retransmission (e.g., a 2nd re-Tx in FIG. 20) of the first TB via a third resource 2021 of the three resources. A time duration between a starting time of the initial transmission of the first TB (e.g., via the first resource 2011) and the second retransmission of the first TB (e.g., via the third resource 2021) may be smaller than or equal to 32 sidelink slots (e.g., $T \leq 32$ slots in FIG. 20) or any other quantity of sidelink slots or any other duration. A first SCI may associate with the initial transmission of the first TB. The first SCI may indicate a first T/F resource indication for the initial transmission of the first TB, the first retransmission of the first TB, and the second retransmission of the first TB. The first SCI may indicate a reservation period/interval of resource reservation for a second TB, for example, via a fourth resource 2002. A second SCI may associate with the first retransmission of the first TB. The second SCI may indicate a second T/F resource indication for the first retransmission of the first TB (e.g., via the second resource 2011) and the second retransmission of the first TB (e.g., via a fifth resource 2012). The second SCI may indicate the reservation period/interval of resource reservation for the second TB. A third SCI may associate with the second retransmission of the first TB. The third SCI may indicate a third T/F resource indication for the second retransmission of the first TB (e.g., via a sixth resource 2022). The third SCI may indicate the reservation period/interval of resource reservation for the second TB.

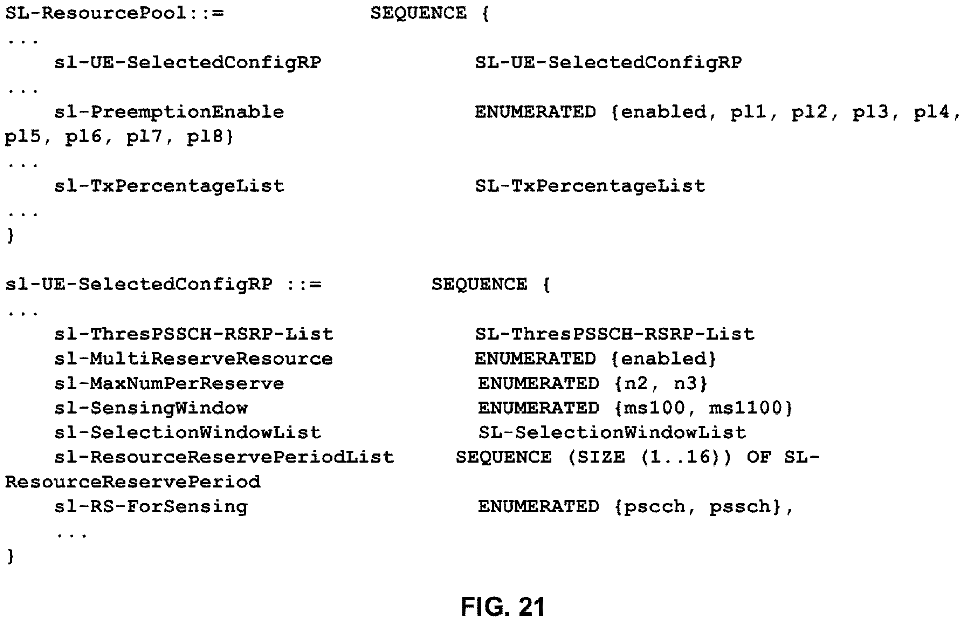

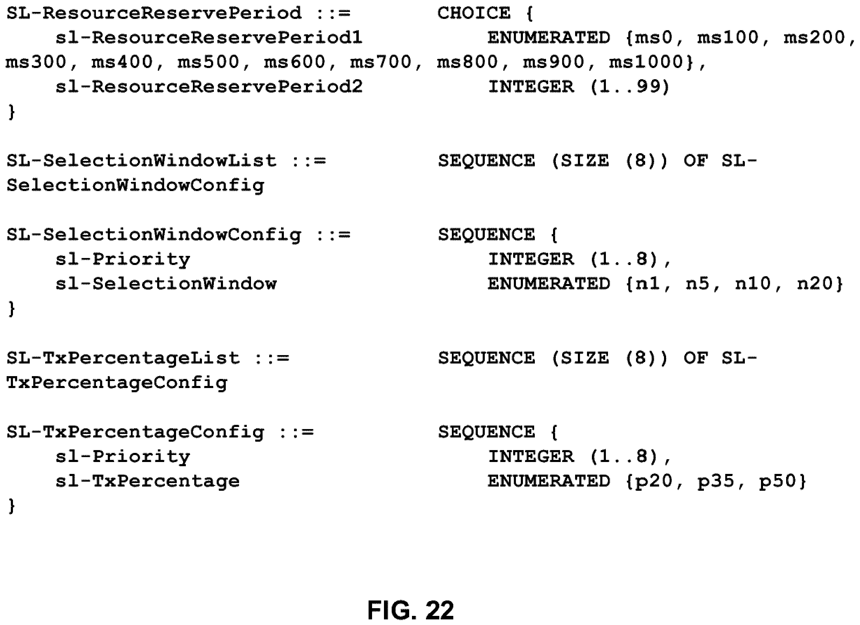

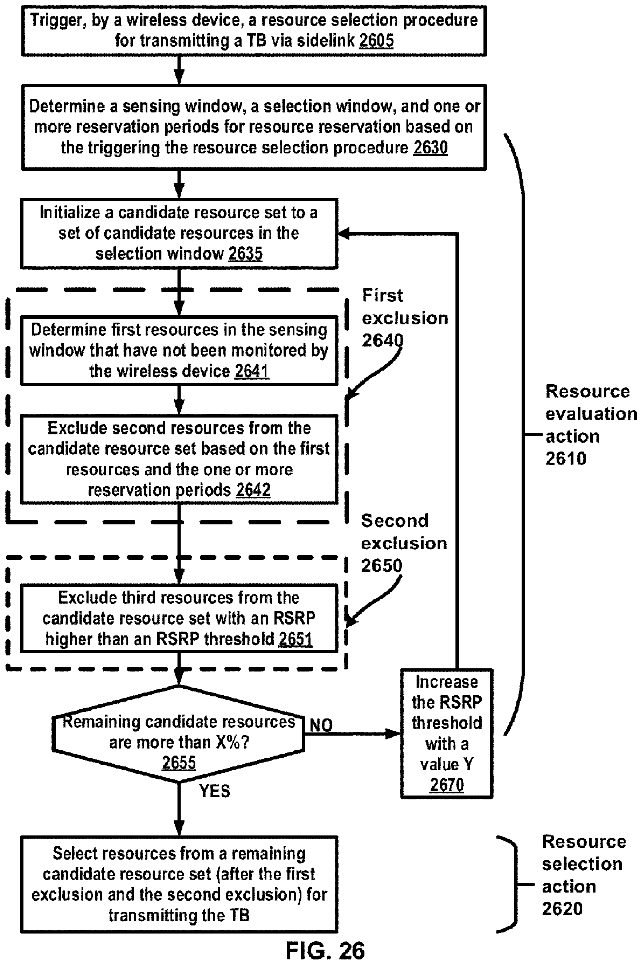

FIG. 21 and FIG. 22 show examples of configuration information for sidelink communication. A base station may send (e.g., transmit) one or more radio resource control (RRC) messages to a wireless device for delivering the configuration information for the sidelink communication. Specifically, FIG. 21 shows an example of configuration information for sidelink communication that may comprise a field of *SL-UE-SelectedConfigRP.* A parameter *sl-ThresPSSCH-RSRP-List* in the field may indicate a list of 64 thresholds. A wireless device may receive first sidelink control information (SCI) indicating a first priority. The wireless device may have second SCI to be sent (e.g., transmitted). The second SCI may indicate a second priority. The wireless device may select a threshold from the list based on the first priority in the first SCI and the second priority in the second SCI. The wireless device may exclude resources from candidate resource sets based on the threshold (e.g., as described herein in FIG. 26). A parameter *sl-MaxNumPerReserve* in the field may indicate a maximum number of reserved PSCCH and/or PSSCH resources indicated in SCI. A parameter *sl-MultiReserveResource* in the field may indicate that a reservation of a sidelink resource for an initial transmission of a TB by SCI associated with a different TB may be allowed, for example, based on or in response to a sensing and resource selection procedure. A parameter *sl-ResourceReservePeriodList* may indicate a set of possible resource reservation periods (intervals, etc.) (e.g., *SL-ResourceReservePeriod*) allowed in a resource pool. Up to 16 values may be configured per resource pool. A parameter *sl-RS-ForSensing* may indicate, for example, if DMRS of PSCCH and/or PSSCH are used for a layer 1 (e.g., physical layer) RSRP measurement in sensing operation. A parameter *sl-SensingWindow* may indicate the start of a sensing window. A parameter *sl-Selection WindowList* may indicate the end of a selection window in a resource selection procedure for a TB with respect to a priority indicated in SCI. Value n1 may correspond to $1 * 2\mu$, value $n5$ corresponds to $5 * 2\mu$, and so on, where $\mu = 0, 1, 2, 3$ for subcarrier spacing (SCS) of 15, 30, 60, and 120 kHz respectively. A parameter *SL-SelectionWindowConfig* (e.g., as described in FIG. 22) may indicate a mapping between a sidelink priority (e.g., *sl-Priority*) and the end of the selection window (e.g., *sl-SelectionWindow*).

Configuration information may further comprise a parameter *sl-PreemptionEnable* indicating a sidelink preemption status (e.g., disabled or enabled) in a resource pool. A priority level *p_preemption* may be configured, for example, if the sidelink pre-emption is enabled. The sidelink pre-emption may be applicable to all priority levels, for example, if the sidelink pre-emption is enabled, but the *p_preemption* is not configured.

As described in FIG. 22, configuration information may comprise a parameter *sl-TxPercentageList* indicating a portion of candidate single-slot PSSCH resources over total resources. A value of p20 may correspond to 20%. A parameter *SL-TxPercentageConfig* may indicate a mapping between a sidelink priority (e.g., *sl-Priority*) and a portion of candidate single-slot PSSCH resources over total resources (e.g., *sl-TxPercentage*).

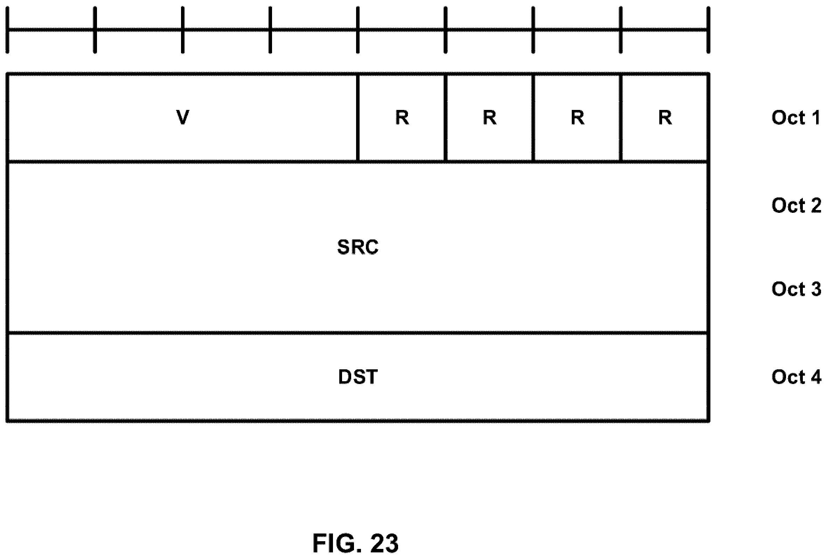

FIG. 23 shows an example format of a MAC subheader for a sidelink shared channel (SL-SCH). The MAC subheader for SL-SCH may comprise seven header fields a version number (V) 2310, reserved bits (R) 2320 - 2326, a source ID (SRC) 2330, and a destination ID (DST) 2340. The MAC subheader is octet aligned. The V field 2310 may be a MAC protocol data units (PDU) format version number field indicating which version of the SL-SCH subheader may be used. The SRC field 2330 may carry 16 bits of a Source Layer-2 identifier (ID) field set to a first identifier provided by upper layers. The DST field 2340 may carry 8 bits of the Destination Layer-2 ID set to a second identifier provided by upper layers. The second identifier may be a unicast identifier, for example, if the V field 2310 is set to "1." The second identifier may be a groupcast identifier, for example, if the V field 2310 is set to "2." The second identifier may be a broadcast identifier, for example, if the V field 2310 is set to "3."

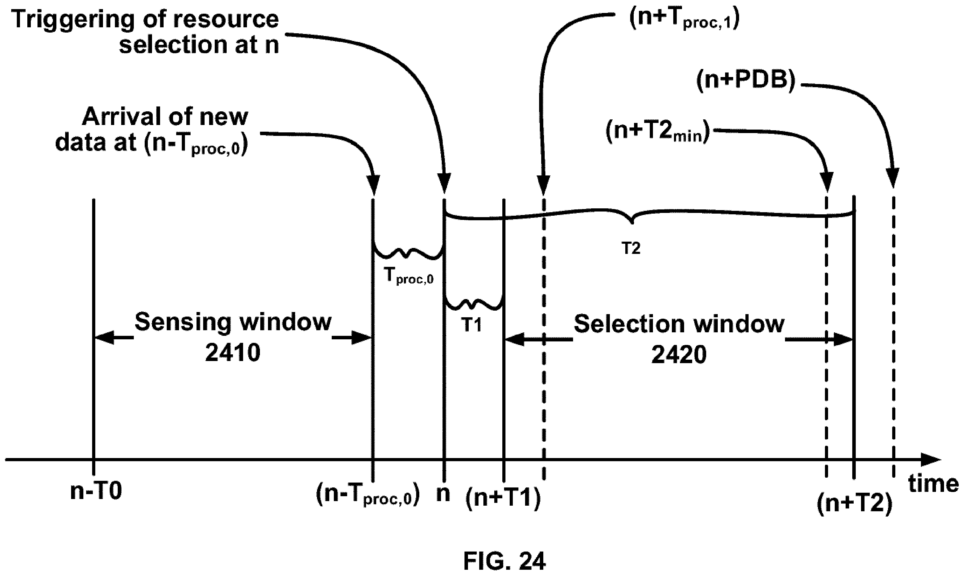

FIG. 24 shows an example timing of a resource selection procedure. A wireless device may perform a resource selection procedure to select resources for one or more sidelink transmissions. A sensing window 2410 of the resource selection procedure may start at a time ($n$ - T0) (e.g., a *sl-SensingWindow* parameter as described herein in FIG. 21). The sensing window 2410 may end at a time ($n$ - $T_{proc,0}$). New data of the one or more sidelink transmissions may arrive at the wireless device at time (n - $T_{proc,0}$). The time period $T_{proc,0}$ may be a processing delay of the wireless device in determining to trigger a resource selection procedure. The wireless device may determine to trigger the resource selection procedure at a time n to select the resources for the new data that arrived at the time (n - $T_{proc,0}$). The wireless device may complete the resource selection procedure at a time (n + T1). The wireless device may determine the parameter $T1$ based on a capability of the wireless device. The capability of the wireless device may be a processing delay of a processor of the wireless device. A selection window 2420 of the resource selection procedure may start at time ($n$ + $T1$). The selection window may end at time ($n$ + $T2$). The wireless device may determine the parameter $T2$ based on a parameter $T2min$ (e.g., *sl-SelectionWindow*). The wireless device may determine the parameter $T2$ so that $T2min \leq T2 \leq PDB$, for example, if the PDB (packet delay budget) is the maximum allowable delay (e.g., a delay budget) for successfully sending (e.g., transmitting) new data via the one or more sidelink transmissions. The wireless device may determine the parameter $T2min$, for example, based on or in response to a corresponding value for a priority of the one or more sidelink transmissions (e.g., based on a parameter *SL-SelectionWindowConfig* indicating a mapping between a sidelink priority *sl-Priority* and the end of the selection window *sl-SelectionWindow*). A wireless device may set the parameter $T2 = PDB$, for example, if the parameter $T2min > PDB$.

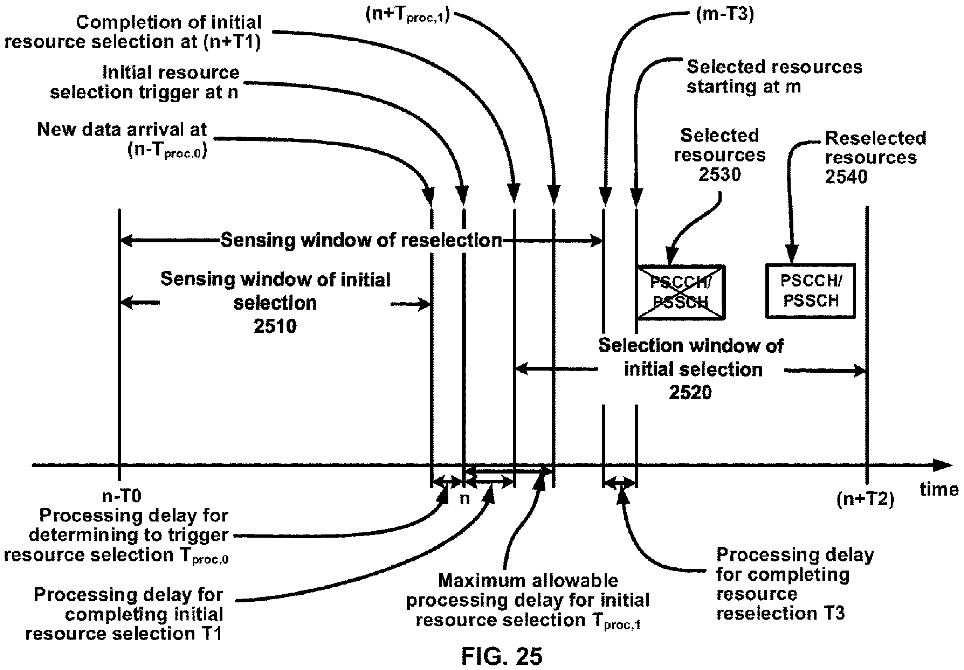

FIG. 25 shows an example timing of a resource selection procedure. A wireless device may perform the resource selection procedure for selecting resources for one or more sidelink transmissions. A sensing window of initial selection 2510 may start at a time ($n$ - $T0$). The sensing window of initial selection 2510 may end at a time ($n$ - $T_{proc,0}$). New data of the one or more sidelink transmissions may arrive at the wireless device at the time ($n$ - $T_{proc,0}$). The time period $T_{proc,0}$ may be a processing delay for the wireless device to determine to trigger the initial selection of the resources. The wireless device may determine to trigger the initial selection at a time n to select the resources for the new data arrived at the time ($n$ - $T_{proc,0}$). The wireless device may complete the initial resource selection procedure at a time ($n$ + $T1$), where $T1$ is the processing delay for completing a resource selection procedure. The time (n + $T_{proc,1}$) may be the maximum allowable processing latency (e.g., $T_{proc,1}$, where $0 < T1 \leq T_{proc,1}$) for completing the resource selection procedure that was triggered at the time n. A selection window of initial selection 2520 may start at a time ($n$ + $T1$). The selection window of initial selection 2520 may end at a time ($n$ + $T2$). The parameter $T2$ may be configured, preconfigured, and/or determined by the wireless device.

A wireless device may determine first resources (e.g., selected resources) 2530 for one or more sidelink transmissions based on the completion of an initial resource selection procedure at a time ($n$ + $T1$). The wireless device may select the first resources (e.g., selected resources) 2530 from candidate resources in a selection window of initial selection 2520, for example, based on or in response to measurements in the sensing window for initial selection 2510. The wireless device may determine a resource collision between the first resources (e.g., selected resources) 2530 and other resources reserved by another wireless device. The wireless device may determine to drop first resources (e.g., selected resources) 2530 to avoid interference. The wireless device may trigger a resource reselection procedure (e.g., a second resource selection procedure) at or before a time ($m - T3$). The time period $T3$ may be a processing delay for the wireless device to complete the resource reselection procedure (e.g., a second resource selection procedure). The wireless device may determine second resources (e.g., reselected resource) 2540 via the resource reselection procedure (e.g., a second resource selection procedure). The start time of the first resources (e.g., selected resources) 2530 may be the time $m$ (e.g., the first resources may be in slot $m$).

At least one of time parameters $T0$, $T_{proc,0}$, $T_{proc,1}$, $T2$, and/or $PDB$ may be configured by a base station for a wireless device. The at least one of the time parameters $T0$, $T_{proc,0}$, $T_{proc,1}$, $T2$, and $PDB$ may be preconfigured for a wireless device. The at least one of the time parameters $T0$, $T_{proc,0}$, $T_{proc,1}$, $T2$, and $PDB$ may be stored in a memory of the wireless device. The memory may be a Subscriber Identity Module (SIM) card. The times $n$, $m$, $T0$, T1, $T_{proc,0}$, $T_{proc,1}$, $T2$, $T2min$, $T3$, and $PDB$, as described herein in FIGS. 24 and 25, may be in terms of slots and/or slot index (e.g., as described herein in FIG. 19).

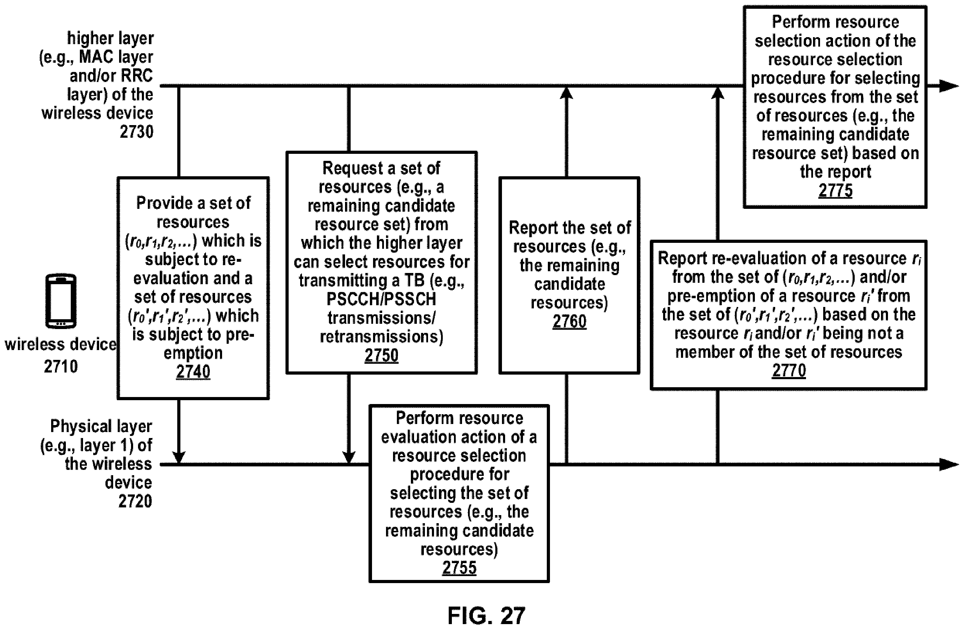

FIG. 26 shows an example flowchart of a resource selection procedure by a wireless device for sending (e.g., transmitting) a TB (e.g., a data packet) via sidelink. FIG. 27 shows an example of the resource selection procedure among layers of the wireless device.

Referring to FIGS. 26 and 27, a wireless device 2710 may send (e.g., transmit) one or more sidelink transmissions (e.g., a first transmission of the TB and one or more retransmissions of the TB) for sending (e.g., transmitting) the TB. A sidelink transmission of the one or more sidelink transmission may comprise a PSCCH, a PSSCH, and/or a PSFCH (e.g., as described herein in FIG. 19). As described in FIG. 26, the wireless device 2710 may trigger a resource selection procedure for sending (e.g., transmitting) the TB. The resource selection procedure may comprise two actions. The first action of the two actions may be a resource evaluation action 2610. As described in FIG. 27, the physical layer (e.g., layer 1) of the wireless device 2720 may perform the resource evaluation action 2755. The physical layer of the wireless device 2720 may determine a subset of resources based on the first action and report the subset of resources to a higher layer (e.g., a MAC layer and/or a RRC layer) of the wireless device 2730. As described in FIG. 26, the second action of the two actions may be a resource selection action 2620. The higher layer (e.g., the MAC layer and/or the RRC layer) of the wireless device 2730 may perform the resource selection action 2620 based on the reported subset of resources from the physical layer (e.g., layer 1) of the wireless device 2720.

A wireless device / higher layer (e.g., a MAC layer and/or a RRC layer) of a wireless device 2730 may trigger a resource selection procedure (e.g., at step 2605) for requesting the wireless device 2710 to determine a subset of resources. The wireless device / higher layer (e.g., the MAC layer and/or the RRC layer) of the wireless device 2730 may select resources from the subset of resources for a PSSCH and/or a PSCCH transmission. The wireless device / higher layer (e.g., the MAC layer and/or the RRC layer) of the wireless device 2730 may provide the following parameters for the PSSCH and/or the PSCCH transmission to trigger the resource selection procedure (e.g., in slot n):

- a resource pool, from which the wireless device may determine the subset of resources;
- layer 1 priority, $prio_{TX}$ (e.g., *sl-Priority* as described herein in FIGS. 21 and 22), of the PSSCH and/or the PSCCH transmission;
- remaining packet delay budget (PDB) of the PSSCH and/or the PSCCH transmission;
- a number of sub-channels, $L_{subCH}$, for the PSSCH and/or the PSCCH transmission in a slot; and/or
- a resource reservation period (interval, etc.), $P_{rsvp\_TX}$, in units of millisecond (ms).

A wireless device / higher layer (e.g., a MAC layer and/or a RRC layer) of the wireless device 2730 may provide sets of resources (e.g., a set ($r_0, r_1, r_2, ...$), which may be subject to a re-evaluation, and/or a set $(r'_0, r'_1, r'_2, ...)$, which may be subject to a pre-emption) 2740, for example, if the wireless device / higher layer (e.g., the MAC layer and/or the RRC layer) of the wireless device 2730 requests the wireless 2710 device to determine a subset of resources from which the higher layer will select the resources for PSSCH and/or PSCCH transmissions for re-evaluation and/or pre-emption 2750.

A base station (e.g., network) may send (e.g., transmit) a message comprising one or more parameters to a wireless device for performing a resource selection procedure. The message may be an RRC/SIB message, a MAC CE, and/or DCI. A second wireless device may send (e.g., transmit) a message comprising one or more parameters to the wireless device for performing the resource selection procedure. The message may be an RRC message, a MAC CE, and/or SCI. The one or more parameters may indicate the following information.

- *sl-SelectionWindowList* (e.g., *sl-SelectionWindow* as described herein in FIGS. 21 and 22): an internal parameter *T2min* (e.g., *T2min* as described herein in FIG. 24) may be set to a corresponding value from the parameter *sl-SelectionWindowList* for a given value of *prio$_{TX}$* (e.g., based on *SL-SelectionWindowConfig* as described herein in FIGS. 21 and 22).

- *sl-ThresPSSCH-RSRP-List* (e.g., *sl-ThresPSSCH-RSRP-List* as described herein in FIGS. 21 and 22): a parameter may indicate an RSRP threshold for each combination $(p_i, p_j)$, where $p_i$ is a value of a priority field in a received SCI format 1-A and $p_j$ is a priority of a sidelink transmission (e.g., the PSSCH and/or the PSCCH transmission) of the wireless device. In a resource selection procedure, $p_j$ may be defined as $p_j = prio_{TX}$.

- *sl-RS-ForSensing* (e.g., *sl-RS-ForSensing* as described herein in FIGS. 21 and 22): a parameter may indicate whether DMRS of a PSCCH and/or a PSSCH is used for layer 1 (e.g., physical layer) RSRP measurement in sensing operation by the wireless device.

- *sl-ResourceReservePeriodList* (e.g., *sl-ResourceReservePeriodList* as described herein in FIGS. 21 and 22)

- *sl-SensingWindow* (e.g., *sl-SensingWindow* as described herein in FIGS. 21 and 22): an internal parameter $T_0$ may be defined as a number of slots corresponding to *t0_SensingWindow ms.*

- *sl-TxPercentageList* (e.g., based on *SL-TxPercentageConfig* as described herein in FIGS. 21 and 22): an internal parameter *X* (e.g., *sl-TxPercentage* as described herein in FIGS. 21 and 22) for a given *prio$_{TX}$* (e.g., *sl-Priority* as described herein in FIGS. 21 and 22) may be defined as *sl-xPercentage(prio$_{TX}$)* converted from percentage to ratio.

- *sl-PreemptionEnable* (e.g., *p_preemption* as described herein in FIGS. 21 and 22): an internal parameter *prio$_{pre}$* may be set to a higher layer provided parameter *sl-PreemptionEnable.*

A resource reservation period (interval, etc.), $P_{rsvp\_TX}$ may be converted from units of *ms* to units of logical slots, resulting in $P'_{rsvp\_TX}$, for example, if the resource reservation period (interval, etc.) is provided.

A notation: ( $t_0^{SL}, t_1^{SL}, t_2^{SL}, \cdots$ ) may denote a set of slots of a sidelink resource pool.

For a resource evaluation action 2610 described in FIG. 26, a wireless device may determine a sensing window 2630 (e.g., a sensing window as described herein in FIGS. 24 and 25 based on *sl-SensingWindow*), for example, based on or in response to a triggering of a resource selection procedure. The wireless device may determine a selection window 2630 (e.g., a selection window as described herein in FIGS. 24 and 25 based on *sl-SelectionWindowList*), for example, based on or in response to the triggering of the resource selection procedure. The wireless device may determine one or more reservation periods (intervals, etc.) 2630 (e.g., parameter *sl-ResourceReservePeriodList*) for resource reservation. A candidate single-slot resource for transmission $R_{x,y}$ may be defined as a set of $L_{subCH}$ contiguous sub-channels with sub-channel $x + j$ in slot $t_y^{SL}$ where $j = 0,..., L_{subCH}$ - 1. The wireless device may assume that a set of $L_{subCH}$ contiguous sub-channels in the resource pool within a time interval $[n + T_1, n + T_2]$ correspond to one candidate single-slot resource (e.g., as described herein in FIGS. 24 and 25). A total number of candidate single-slot resources may be denoted by $M_{total}$. A sensing window may be defined as a number of slots in a time duration of $[n - T_0, n - T_{proc,0}]$ (e.g., as described herein in FIGS. 24 and 25). The wireless device may monitor a first subset of the slots, of a sidelink resource pool, within the sensing window. The wireless device may not monitor a second subset of the slots different than the first subset of the slots due to half duplex. The wireless device may perform the following actions based on PSCCH decoded and RSRP measured in the first subset of the slots. An internal parameter $Th(p_i, p_j)$ may be set to the corresponding value of the RSRP threshold indicated by the i-th field in *sl-ThresPSSCH-RSRP-List,* where $i = p_i + (p_j - 1) * 8$.

For a resource evaluation action 2610, as described in FIG. 26, a wireless device 2710 (e.g., as described herein in FIG. 27) may initialize a candidate resource set 2635 (e.g., a set $S_A$) to be a set of candidate resources. The candidate resource set may be a union of candidate resources within a selection window. A candidate resource may be a candidate single-subframe resource. A candidate resource may be a candidate single-slot resource, the set $S_A$ may be initialized to a set of all candidate single-slot resources.

For a resource evaluation action 2610 (e.g., as described herein in FIG. 26), a wireless device 2710 (e.g., as described herein in FIG. 27) may perform a first exclusion 2640 for excluding second resources from the candidate resource set based on first resources and one or more reservation periods (intervals) 2642. The wireless device 2710 may not monitor the first resources within a sensing window. The one or more reservation periods (intervals, etc.) may be configured and/or associated with a resource pool of the second resources. The wireless device 2710 may determine the second resources within a selection window which may be reserved by a transmission sent (e.g., transmitted) via the first resources based on the one or more reservation periods (intervals, etc.). The wireless device 2710 may exclude a candidate single-slot resource $R_{x,y}$ from the set $S_A$ based on following conditions:

- the wireless device has not monitored slot $t_m^{SL}$ in the sensing window.
- for any periodicity value allowed by the parameter *sl-ResourceReservePeriodList* and a hypothetical SCI format 1-A received in the slot $t_m^{SL}$ with "Resource reservation period" field set to that periodicity value and indicating all subchannels of the resource pool in this slot, *condition c of a second exclusion* would be met.

For a resource evaluation action 2610 (e.g., as described herein in FIG. 26), a wireless device may perform a second exclusion 2650 for excluding third resources from the candidate resource set. SCI may indicate a resource reservation of the third resources. The SCI may further indicate a priority value (e.g., indicated by a higher layer parameter sl-Priority). The wireless device may exclude the third resources from the candidate resource set based on a reference signal received power (RSRP) of the third resources satisfying (e.g., above, higher than, greater than, etc.) an RSRP threshold 2651 (e.g., indicated by a higher layer parameter sl-ThresPSSCH-RSRP-List). The RSRP threshold may be related to the priority value based on a mapping list of RSRP thresholds to priority values configured and/or pre-configured for the wireless device. A base station may send (e.g., transmit) a message to a wireless device to configure a mapping list. The message may be a radio resource control (RRC) message. The mapping list may be pre-configured for the wireless device. The mapping list may be stored in memory of the wireless device. A priority indicated by a priority value may be a layer 1 priority (e.g., a physical layer priority). The priority value (e.g., the layer 1 priority) may be associated with a respective priority level. A higher (larger, bigger, etc.) priority value may indicate a higher priority of a sidelink transmission, and/or a lower (smaller, etc.) priority value may indicate a lower priority of the sidelink transmission. A higher (larger, bigger, etc.) priority value may indicate a lower priority of the sidelink transmission, and/or A lower (smaller, etc.) priority value may indicate a higher priority of the sidelink transmission. A wireless device may exclude a candidate single-slot resource $R_{x,y}$ from a set $S_A$ based on following conditions:

a) the wireless device receives SCI format 1-A in slot $t_m^{SL}$ , and "Resource reservation period" field, if present, and "Priority" field in the received SCI format 1-A indicate the values $P_{rsvp\_RX}$ and $prio_{RX}$;

b) the RSRP measurement performed, for the received SCI format 1-A, is higher than $Th(prio_{RX,}prio_{TX})$;

c) the SCI format received in slot $t_m^{SL}$ or the same SCI format which, if and only if the "Resource reservation period" field is present in the received SCI format 1-A, is assumed to be received in slot(s) $t_{m+q\times P'_{rsvp\_RX}}^{SL}$ determines the set of resource blocks and slots which overlaps with $R_{x,y+j\times P'_{rsvp\_TX}}$ for q = 1, 2, ... , Q and *j* = 0, 1, ..., $C_{resel}$ - 1.

Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_RX} < T_{scal}$ and $n' - m \le P'_{rsvp\_RX}$, where $t_{n'}^{SL} = n$ if slot n belongs to the set $(t_0^{SL}, t_1^{SL}, \ldots, t_{Tmax}^{SL})$, otherwise slot $t_{n'}^{SL}$ is the first slot after slot n belonging to the set $(t_0^{SL}, t_1^{SL}, \ldots, t_{Tmax}^{SL})$; otherwise Q = 1. $T_{scal}$ is set to selection window size *T*2 converted to units of ms.

As described in FIGS. 26 and 27, in a resource evaluation action 2610, a wireless device 2710 may determine whether remaining candidate resources in a candidate resource set are sufficient for selecting resources for one or more sidelink transmissions of the TB, for example, after performing the first exclusion, the second exclusion, and/or based on or in response to a condition. The condition may be the total amount of the remaining candidate resources in the candidate resource set satisfying (e.g., above, higher than, greater than, more than, higher than or equal to, greater than or equal to, more than or equal to, larger than or equal to, etc.) X percent (e.g., as indicated by a higher layer parameter sl-TxPercentageList) of the candidate resources in the candidate resource set before performing the first exclusion and/or the second exclusion 2655. The wireless device 2710 may increase the RSRP threshold used to exclude the third resources with a value Y and iteratively re-perform the initialization, the first exclusion, and/or the second exclusion 2670, for example, until the condition is met (e.g., the number of remaining candidate single-slot resources in the set $S_A$ satisfies is $X \cdot M_{total}$). The wireless device 2710 may report the set $S_A$ (e.g., the remaining candidate resources of the candidate resource set) 2760 to the higher layer (e.g., MAC layer and/or RRC layer) of the wireless device 2730. The wireless device 2710 may report the set $S_A$ (e.g., the remaining candidate resources of the candidate resource set when the condition is met) 2760 to the higher layer (e.g., MAC layer and/or RRC layer) of the wireless device 2730, for example, based on or in response to the number of remaining candidate single-slot resources in the set $S_A$ being equal to or satisfying (e.g., above, higher than, greater than, more, etc.) $X \cdot M_{total}$.

As described in FIGS. 26 and 27, in a resource selection action 2620 the higher layer (e.g., MAC layer and/or RRC layer) of a wireless device 2710 may select fourth resources from the remaining candidate resources of the candidate resource set 2775 (e.g., a set $S_A$ reported by the physical layer (e.g., layer 1) of the wireless device 2720) for the one or more sidelink transmissions of the TB. The wireless device 2710 may randomly select the fourth resources from the remaining candidate resources of the candidate resource set.

As described in FIG. 27, a wireless device 2710 may report a re-evaluation of a resource $r_i$ 2770 to a higher layer (e.g., MAC layer and/or RRC layer) of the wireless device 2730, for example, if the resource $r_i$ from a set ($r_0$, $r_1$, $r_2$, ... ) is not a member of $S_A$ (e.g., the remaining candidate resources of the candidate resource set when the condition is met).

A wireless device 2710 may report a pre-emption of a resource $r_i'$ 2770 to a higher layers (e.g., MAC layer and/or RRC layer) of the wireless device 2730, for example, if the resource $r_i'$ from the set ( $(r_0', r_1', r_2', ...)$ meets the conditions below:

- $r_i'$ is not a member of $S_A$, and

- $r_i'$ meets the conditions for the second exclusion, with $Th(prio_{RX}, prio_{TX})$ set to a final threshold for reaching $X \cdot M_{total}$, and
- the associated priority $prio_{RX}$, satisfies one of the following conditions:
- *sl-PreemptionEnable* is provided and is equal to 'enabled' and $prio_{TX} > prio_{RX}$
- *sl-PreemptionEnable* is provided and is not equal to 'enabled', and $prio_{RX} < prio_{pre}$ and $prio_{TX} > prio_{RX}$

A higher layer (e.g., MAC layer and/or RRC layer) of a wireless device 2730 may remove a resource $r_i$ from a set ($r_0$, $r_1$, $r_2$, ... ), for example, if the resource $r_i$ is indicated for re-evaluation by the wireless device 2710 (e.g., the physical layer of the wireless device 2720). The higher layer of the wireless device 2730 may remove a resource $r_i'$ from a set $(r_0', r_1', r_2', ...)$ , for example, if the resource $r_i'$ is indicated for pre-emption by the wireless device 2710 (e.g., the physical layer of the wireless device 2720). The higher layer of the wireless device 2730 may randomly select new time and frequency resources from the remaining candidate resources of the candidate resource set (e.g., the set $S_A$ reported by the physical layer) for the removed resources $r_i$ and/or $r_i'$. The higher layer of the wireless device 2730 may replace the removed resources $r_i$ and/or $r_i'$ by the new time and frequency resources. The wireless device 2710 may remove the resources $r_i$ and/or $r_i'$ from the set ($r_0$, $r_1$, $r_2$, ... ) and/or the set $(r_0', r_1', r_2', ...)$ and add the new time and frequency resources to the set ($r_0$, $r_1$, $r_2$, ... ) and/or the set $(r_0', r_1', r_2', ...)$ based on the removing of the resources $r_i$ and/or $r_i'$.

Sidelink pre-emption may happen between a first wireless device and a second wireless device. The first wireless device may select first resources for a first sidelink transmission. The first sidelink transmission may have a first priority. The second wireless device may select second resources for a second sidelink transmission. The second sidelink transmission may have a second priority. The first resources may partially or fully overlap with the second resources. The first wireless device may determine a resource collision between the first resources and the second resources, for example, based on or in response to the first resources and the second resources being partially or fully overlapped. The resource collision may imply a partial and/or a full overlap between the first resources and the second resources in time, frequency, code, power, and/or spatial domain. The first resources may comprise one or more first sidelink resource units in a sidelink resource pool (e.g., as described herein in FIG. 18). The second resources may comprise one or more second sidelink resource units in the sidelink resource pool. A partial resource collision between the first resources and the second resources may indicate that the at least one sidelink resource unit of the one or more first sidelink resource units belongs to the one or more second sidelink resource units. A full resource collision between the first resources and the second resources may indicate that the one or more first sidelink resource units may be the same as, or a subset of, the one or more second sidelink resource units. A higher (bigger, larger, greater, etc.) priority value may indicate a lower (smaller, less, etc.) priority of a sidelink transmission. A lower (smaller, less, etc.) priority value may indicate a higher (bigger, larger, greater, etc.) priority of the sidelink transmission. The first wireless device may determine the sidelink pre-emption based on the resource collision and the second priority being higher than (greater than, bigger, etc.) the first priority. The first wireless device may determine the sidelink pre-emption, for example, based on or in response to the resource collision and a value of the second priority not satisfying (e.g., being smaller than, less than, lower than, etc.) a value of the first priority. A first wireless device may determine a sidelink pre-emption, for example, based on or in response to a resource collision, a value of the second priority not satisfying (e.g., being smaller than, lower than, less than, etc.) a priority threshold, and/or the value of the second priority being less (smaller, lower, etc.) than a value of the first priority.

A first wireless device may trigger a first resource selection procedure for selecting first resources (e.g., selected resources 2530 after a resource selection with collision as described herein in FIG. 25) for a first sidelink transmission. A second wireless device may send (e.g., transmit) SCI indicating resource reservation of the first resource for a second sidelink transmission. The first wireless device may determine a resource collision of the first resources between the first sidelink transmission and the second sidelink transmission. The first wireless device may trigger a resource re-evaluation (e.g., a resource evaluation action of a second resource selection procedure) at or before time ($m - T3$) (e.g., as described herein in FIG. 25) based on the resource collision. The first wireless device may trigger a resource reselection (e.g., a resource selection action of the second resource selection procedure) for selecting second resources (e.g., reselected resources 2540 after resource reselection as described herein in FIG. 25) based on the resource re-evaluation. The start time of the second resources may be time m (e.g., as described herein in FIG. 25).

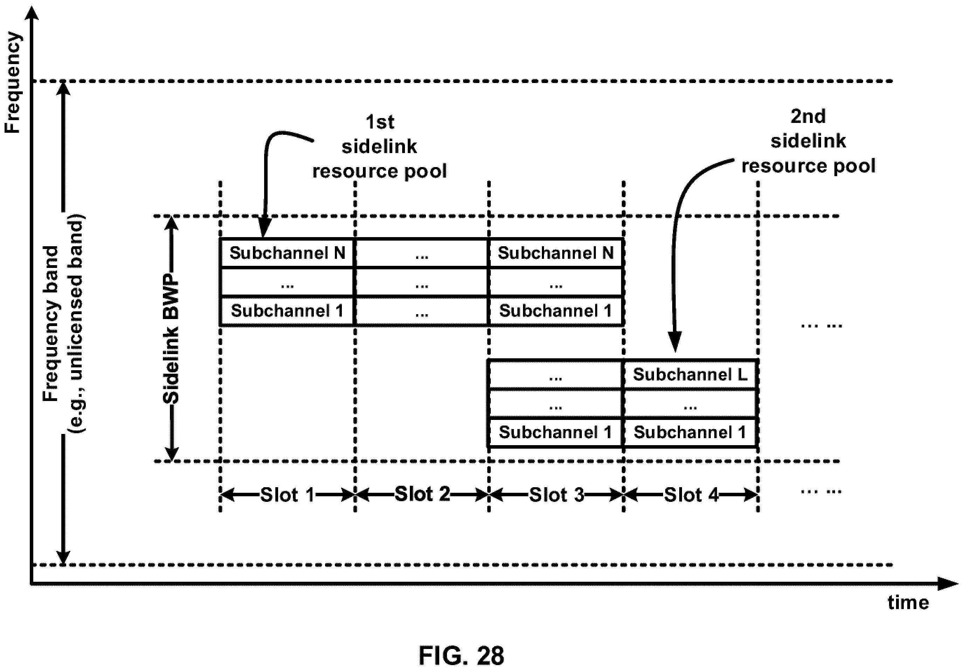

FIG. 28 shows an example configuration of a sidelink resource pool in a frequency band. In FIG. 28, a sidelink resource pool may refer to the one in FIG. 18. For example, a wireless device may receive a message (e.g., RRC message and/or a SIB) from a base station and/or another wireless device. The message may comprise one or more configuration parameters of sidelink BWP. The configuration parameters may indicate a bandwidth (e.g., and/or frequency size) of the sidelink BWP. The configuration parameters may indicate a first sidelink resource pool is configured in the sidelink BWP. The configuration parameters may indicate that the sidelink BWP is confined and/or configured in a particular frequency band (e.g., unlicensed band). For example, the size of the sidelink BWP may be equal to or smaller than a minimum regularized bandwidth for which the wireless device may perform a Listen Before Talk (LBT) procedure to gain access on a channel. For example, the size of the sidelink BWP may be smaller than or equal to 20MHz. For example, the particular frequency band is an unlicensed band in 5GHz, 6GHz, and/or FR1 band. For example, the configuration parameters may further indicate a second sidelink resource pool is configured in the sidelink BWP. A first sidelink resource of the first sidelink resource pool may overlap in time (e.g., Slot 3 in FIG. 28) with a second sidelink resource of the second sidelink resource pool.

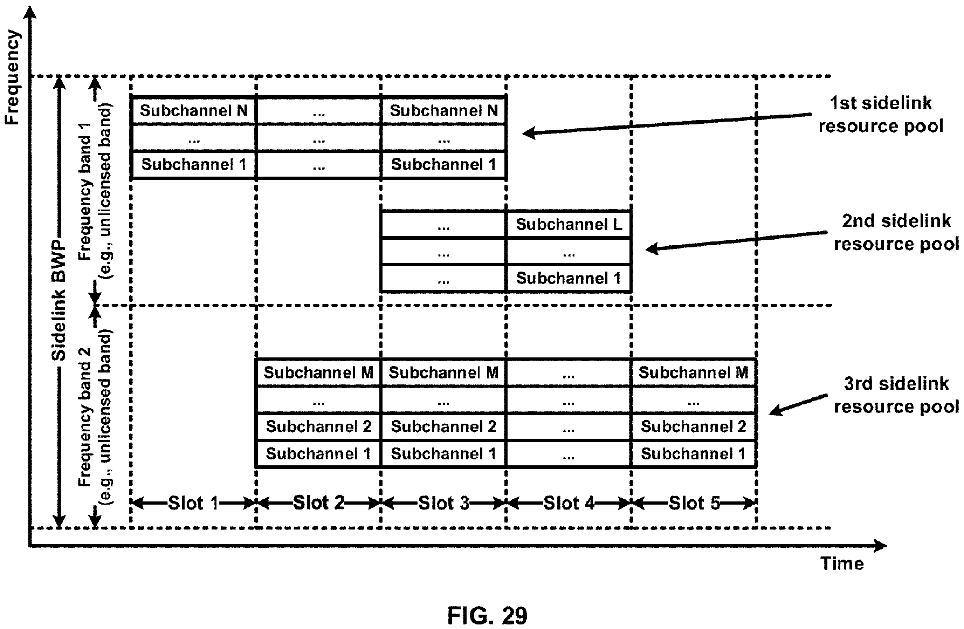

FIG. 29 shows an example configuration of a sidelink resource pool in a frequency band. In FIG. 29, a sidelink resource pool may refer to the one in FIG. 18. For example, a wireless device may receive a message (e.g., RRC message and/or a SIB) from a base station and/or another wireless device. The message may comprise configuration parameters of sidelink BWP. The configuration parameters may indicate a bandwidth (e.g., and/or frequency size) of the sidelink BWP. For example, the sidelink BWP may be a wideband sidelink BWP that has a bandwidth larger than a minimum regularized bandwidth for which the wireless device may perform an LBT procedure to gain access on a channel. For example, the sidelink BWP may be larger than 20MHz. The configuration parameters may indicate that one or more sidelink resource pools are configured in the sidelink BWP. The configuration parameters may indicate that each of the one or more sidelink resource pools is confined and/or configured in a respective frequency band (e.g., unlicensed band). For example, in FIG. 29, three sidelink resource pools are in a sidelink BWP. The sidelink BWP may comprise a frequency band 1 (e.g., unlicensed band 1) and a frequency band 2 (e.g., unlicensed band 2). The first sidelink resource pool and the second sidelink resource pool may be confined in the frequency band 1. The third sidelink resource pool may be confined in the frequency band 2. The frequency band 1 (e.g., unlicensed band 1) and the frequency band 2 (e.g., unlicensed band 2) may require different and/or independent LBT procedures. For example, the wireless device may perform a first LBT procedure that may indicate a channel of frequency band 1 being idle in Slot 3. The wireless device may send (e.g., transmit), for example, based on (e.g., in response to) the channel of frequency band 1 being idle in Slot 3, a sidelink data via a sidelink resource selected from the first sidelink resource pool or the second sidelink resource pool that are configured in the frequency band 1. The wireless device may not send (e.g., transmit), for example, based on (e.g., in response to) the channel of frequency band 1 being idle in Slot 3, a sidelink data via a sidelink resource selected from the third sidelink resource pool that are configured in the frequency band 2. Sending (e.g., transmitting) a sidelink data via a sidelink resource selected from the third sidelink resource pool that are configured in the frequency band 2 may require a second LBT procedure.

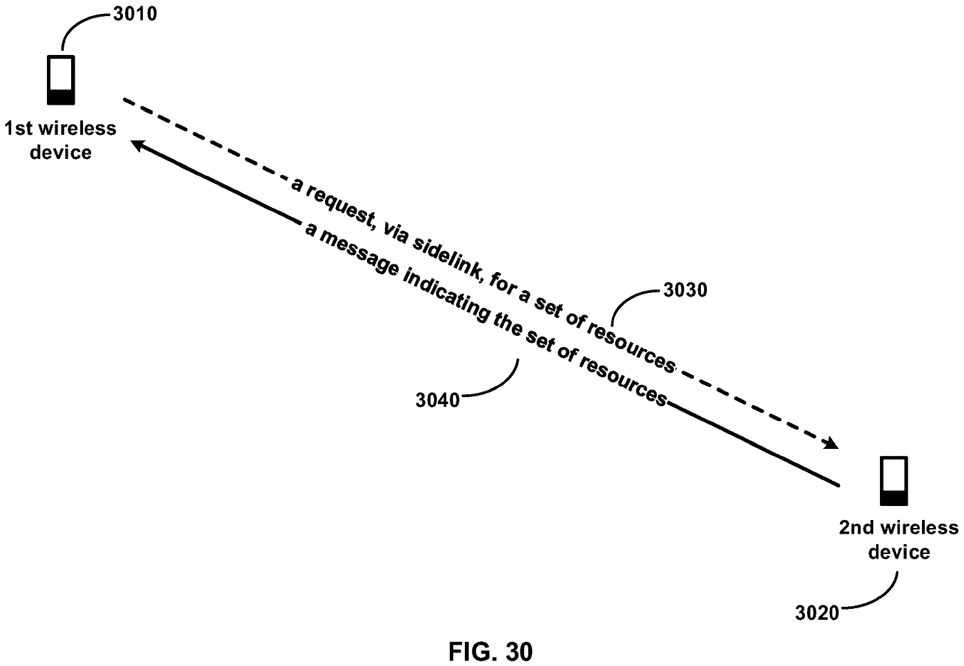

FIG. 30 shows an example of a sidelink inter-wireless-device coordination (e.g., an inter-UE coordination scheme 1). A first wireless device (e.g., 1st wireless device) 3010 and a second wireless device (e.g., 2nd wireless device) 3020 may receive an RRC message comprising sidelink configuration parameters (e.g., *SL-InterUE-CoordinationConfig* and/or SL-InterUE-CoordinationScheme 1) indicating the sidelink inter-wireless-device coordination (IUC) is enabled/configured, for example, for a resource pool. A first wireless device and a second wireless device may perform an inter-wireless-device coordination. The first wireless device (e.g., 1st wireless device) 3010 may be a requesting wireless device of the inter-wireless-device coordination between the first wireless device and the second wireless device. The first wireless device (e.g., 1st wireless device) 3010 may be a transmitter of one or more sidelink transmissions. The second wireless device (e.g., 2nd wireless device) 3020 may be a coordinating/coordinator wireless device of the inter-wireless-device coordination. The second wireless device (e.g., 2nd wireless device) 3020 may or may not be an intended receiver of the one or more sidelink transmissions by the first wireless device (e.g., 1st wireless device) 3010.

A sidelink transmission may comprise a PSCCH, a PSSCH and/or a PSFCH. SCI of the sidelink transmission may comprise a destination ID of the sidelink transmission (e.g., as described herein in FIG. 19). A wireless device may be an intended receiver of a sidelink transmission if the wireless device has an identical ID as the destination ID in the SCI.

A first wireless device (e.g., 1st wireless device) 3010 may request, via control signaling and from a second wireless device (e.g., 2nd wireless device) 3020, coordination information (e.g., assistance information) for the one or more sidelink transmissions, for example, before sending (e.g., transmitting) the one or more sidelink transmissions. For example, the sidelink configuration parameters may indicate that inter-wireless-device coordination information triggered by an explicit request is enabled (e.g., via *sl-IUC-Explicit*). A first wireless device (e.g., 1st wireless device) 3010 may send/transmit, to the second wireless device (e.g., 2nd wireless device) 3020 and via sidelink, a request message 3030, for the requesting of the coordination information (e.g., a set of resources), to trigger the inter-wireless-device coordination. For example, the first wireless device may send (e.g., transmit) a control signal (e.g., SCI or SCI format 2-C and/or MAC-CE) comprising an inter-wireless-device coordination request, to the second wireless device. A second wireless device (e.g., 2nd wireless device) 3020 may trigger the inter-wireless-device coordination, for example, based on the receiving of the request message 3030 from a first wireless device (e.g., 1st wireless device) 3010. A first wireless device (e.g., 1st wireless device) 3010 may not send (e.g., transmit) a request message 3030 to trigger an inter-wireless-device coordination. For example, the sidelink configuration parameters may indicate that inter-wireless-device coordination information triggered by an explicit request is disabled (e.g., via *sl-IUC-Explicit)*. A second wireless device (e.g., 2nd wireless device) 3020 may trigger the inter-wireless-device coordination, for example, based on an event and/or condition. For example, the sidelink configuration parameters may indicate that inter-wireless-device coordination information triggered by a condition is enabled (e.g., via *sl-IUC-Condition*), for example, other than/independent of the explicit request reception

The control signal (SCI/SCI format 2-C and/or MAC-CE) indicating inter-wireless-device coordination request may comprise: a Providing/Requesting indicator field indicating a value (e.g., 1) indicating that the control signal is used to request inter-wireless-device coordination information; a priority field indicating the priority of the one or more sidelink transmissions for which the inter-wireless-device coordination information is requested; Number of subchannels field indicating the number of subchannels required for the one or more sidelink transmissions for which the inter-wireless-device coordination information is requested; Resource reservation period (RP) field indicating the resource reservation period of the one or more sidelink transmissions for which the inter-wireless-device coordination information is requested; Resource selection window location (RSWL) field indicating the location of the resource selection window for the one or more sidelink transmissions for which the inter-wireless-device coordination information is requested; and/or Resource set type (RT) field indicating a request for inter-wireless-device coordination information providing preferred resource set (e.g., by value 0) or indicating a request for inter-wireless-device coordination information providing non-preferred resource set (e.g., by value 1).

An inter-wireless-device coordination information request may indicate a first set/window of time/frequency resources from which one or more resources are selected for transmitting the one or more sidelink transmissions. The first wireless device may use the coordination information received from the second wireless device for (e.g., during) the resource selection procedure of the one or more sidelink transmissions.

A second wireless device may trigger procedure for determining a set of preferred or non-preferred resources for the first wireless device's transmission (the one or more sidelink transmissions), for example, based on (e.g., in response to) the triggering the inter-wireless-device coordination (e.g., based on an explicit request and/or one or more conditions being met). The second wireless device may determine a resource selection window (e.g., $[n + T_1, n + T_2]$), for example, based on the RSWL, within which the preferred or non-preferred resources are to be determined. The second wireless device may, for example, when determining a preferred resource set (e.g., if the resource set type indicates preferred set), perform wireless device procedure for determining the subset of resources to be reported to higher layers in PSSCH resource selection in sidelink resource allocation mode 2 (e.g., resource selection procedure), for example, based on the determined resource selection window. The second wireless device may exclude candidate resource(s) belonging to slot(s) where the second wireless device does not expect to perform SL reception of a TB due to half-duplex operation, for example, if the second wireless device is a destination wireless device of the TB for whose transmission the preferred resource set is being determined. The second wireless device may, for example, when determining a non-preferred resource set, consider any resource(s) within the resource selection window, if indicated by a received explicit request, and satisfying at least one of the following conditions as non-preferred resource(s): resource(s) indicated by a received SCI (e.g., SCI format 1-A) wherein the RSRP measurement performed for the received SCI is higher than a threshold, and the threshold is associated with the priority field in the received SCI; and/or resource(s) indicated by a received SCI (e.g., SCI format 1-A) wherein the second wireless device is a destination wireless device of a TB associated with the received SCI, and the RSRP measurement performed for the received SCI is lower than a threshold, where the threshold is associated with the priority field in the received SCI; and/or resources(s) in slot(s) in which the second wireless device does not expect to perform SL reception due to half duplex operation, for example, if the second wireless device is a destination wireless device of a TB for whose transmission the non-preferred resource set is being determined.

A second wireless device may select a second set of resources, for example, a subset of the first set of resources indicated via the request, for the inter-wireless-device coordination, for example, based on (e.g., in response to) triggering the inter-wireless-device coordination. The second wireless device may trigger a first resource selection procedure for selecting the second set of resources. The second wireless device may not trigger a first resource selection procedure for selecting the first set of resources. The second wireless device may select the second set of resources based on resource reservation/allocation information at the second wireless device. For example, the second wireless device may select the second set of resources based on that the second set of resources are reserved for uplink transmissions of the intended receiver of the one or more sidelink transmissions. For example, the second wireless device may select the second set of resources based on that the intended receiver of the one or more sidelink transmissions would receive other sidelink transmissions via the second set of resources. The second set of resources may be a set of preferred resources by the first wireless device for the one or more sidelink transmissions. The second set of resources may be a set of preferred resources by an intended receiver of the one or more sidelink transmissions. The second set of resources may be a set of non-preferred resources by the first wireless device for the one or more sidelink transmissions. The second set of resources may be a set of non-preferred resources by the intended receiver of the one or more sidelink transmissions.

A second wireless device may send (e.g., transmit), to a first wireless device and via sidelink, a message (e.g., the coordination information) 3040 comprising/indicating the second set of resources. The message may comprise a RRC, MAC-CE, and/or SCI. The SCI may comprise a first stage SCI and/or a second stage SCI (e.g., as described herein with respect to FIG. 19). The first stage of the SCI may comprise/indicate the second set of resources. The second stage of the SCI may comprise/indicate the second set of resources.

A first wireless device may select a third set of resources based on a second set of resources, for example, based on (e.g., in response to) receiving the message 3040 comprising inter-wireless-device coordination information. The first wireless device may trigger a second resource selection procedure for the selecting of the third set of resources. The first wireless device may not trigger a second resource selection procedure for the selecting of the third set of resources. The first wireless device may select the third set of resources based on (e.g., from) the second set of resources. For example, the first wireless device may randomly select a resource, from the second set of resources, for the third set of resources. The first wireless device may select a resource, from the second set of resources, for the third set of resources, for example, if the resource is in a selection window of the second resource selection procedure. The first wireless device may select a resource, from the second set of resources, for the third set of resources, for example, if the resource is before a PDB (e.g., no later than the PDB) of the one or more sidelink transmissions.

An inter-wireless-device coordination may be an inter-UE coordination scheme 1. In the inter-UE coordination scheme 1, a coordinating/coordinator wireless device (e.g., a 2nd wireless device 3020) may select a set of preferred resources and/or a set of non-preferred resources for a requesting wireless device (e.g., a 1st wireless device 3010). A coordinating/coordinator wireless device (e.g., a 2nd wireless device 3020) may send (e.g., transmit, provide, indicate) a message indicating a set of preferred resources and/or a set of non-preferred resources (e.g., coordination information/assistance information) to a requesting wireless device (e.g., a 1st wireless device 3010). The requesting wireless device may send (e.g., transmit) one or more sidelink transmissions, for example, based on the set of preferred resources and/or the set of non-preferred resources.

A preferred resource, for sending (e.g., transmitting), by a requesting wireless device (e.g., a 1st wireless device 3010), and/or receiving, by a coordinating/coordinator wireless device (e.g., a 2nd wireless device 3020), of an inter-wireless-device coordination, a sidelink transmission, may be a resource with a RSRP (e.g., measured by the coordinating/coordinator wireless device) that does not satisfy (e.g., is below, lower than, less than etc.) a RSRP threshold. A preferred resource, for sending (e.g., transmitting), by a requesting wireless device (e.g., a 1st wireless device 3010), and/or receiving, by a coordinating/coordinator wireless device (e.g., a 2nd wireless device 3020), of the inter-wireless-device coordination, a sidelink transmission, may be a resource with a priority value that satisfies (e.g., is above, higher than, greater than, etc.) a priority threshold.

A non-preferred resource, for sending (e.g., transmitting), by a requesting wireless device (e.g., a 1st wireless device 3010), and/or receiving, by a coordinating/coordinator wireless device (e.g., a 2nd wireless device 3020), of the inter-wireless-device coordination, a sidelink transmission, may be a resource with a RSRP (e.g., measured by the coordinating/coordinator wireless device) that satisfies (e.g., is above, higher than, greater than, etc.) a RSRP threshold (e.g., hidden node problem with high interference level). A non-preferred resource, for sending (e.g., transmitting), by a requesting wireless device (e.g., a 1st wireless device 3010), and/or receiving, by a coordinating/coordinator wireless device (e.g., a 2nd wireless device 3020), of the inter-wireless-device coordination, a sidelink transmission, may be a resource with a priority value that does not satisfy (e.g., is below, lower than, less than, smaller than, etc.) the priority threshold (e.g., resource collision problem with another sidelink transmission/reception, which has a high priority). A non-preferred resource, for sending (e.g., transmitting), by a requesting wireless device (e.g., a 1st wireless device 3010) of an inter-wireless-device coordination, and/or receiving, by a coordinating/coordinator wireless device (e.g., a 2nd wireless device 3020) of the inter-wireless-device coordination, a sidelink transmission, may be a resource that may be reserved for a second sidelink and/or uplink transmission by the coordinating/coordinator wireless device and/or an intended receiver (e.g., half-duplex problem). The coordinating/coordinator wireless device may or may not perform a resource selection procedure for selecting a set of non-preferred resources. The coordinating/coordinator wireless device may select the set of non-preferred resources, for example, based on sensing results of the coordinating/coordinator wireless device.

A higher priority value may indicate a lower priority. A lower priority value may indicate a higher priority. For example, a first sidelink transmission may have a first priority value. A second sidelink transmission may have a second priority value. The first priority value may be greater than the second priority value, for example, if a first priority of the first sidelink transmission indicated by the first priority value is lower than a second priority of the second sidelink transmission indicated by the second priority value.

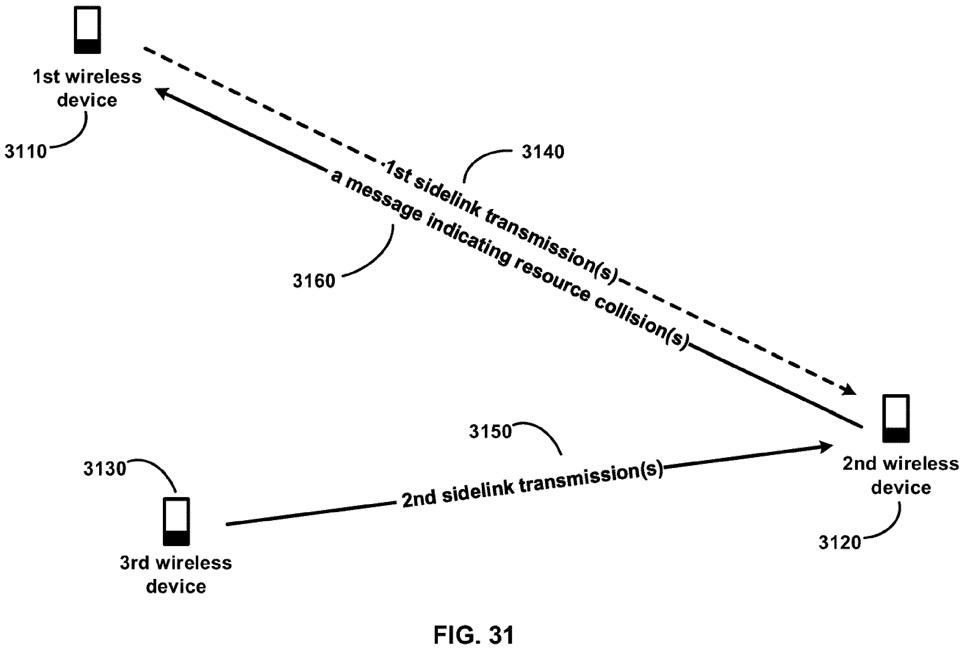

FIG. 31 shows an example of a sidelink inter-wireless-device coordination (e.g., an inter-UE coordination scheme 2). A first wireless device (e.g., 1st wireless device) 3110 and a second wireless device (e.g., 2nd wireless device) 3120 may perform an inter-wireless-device coordination. The first wireless device may be a requesting wireless device of the inter-wireless-device coordination between the first wireless device and the second wireless device. The first wireless device may be a sender (e.g., transmitter) of one or more first sidelink transmissions (e.g., 1st sidelink transmission(s)) 3140. The second wireless device may be a coordinating/coordinator wireless device of the inter-wireless-device coordination. The second wireless device may or may not be an intended receiver of the one or more first sidelink transmissions (e.g., 1st sidelink transmission(s)) 3140 by the first wireless device.

A sidelink transmission may comprise a PSCCH, a PSSCH and/or a PSFCH (e.g., as described herein in FIG. 19). SCI of the sidelink transmission may comprise a destination ID of the sidelink transmission. A wireless device may be an intended receiver of the sidelink transmission, for example, if the wireless device has an identical ID as a destination ID in the SCI.

A first wireless device (e.g., 1st wireless device) 3110 may request from a second wireless device (e.g., 2nd wireless device) 3120, coordination information (e.g., assistance information) for the one or more sidelink transmissions 3140. A first wireless device (e.g., 1st wireless device) 3110 may trigger an inter-wireless-device coordination by sending (e.g., transmitting), via sidelink, a request message requesting coordination information to a second wireless device (e.g., 2nd wireless device) 3120. The second wireless device may trigger an inter-wireless-device coordination, for example, based on receiving the request message from the first wireless device. Inter-wireless-device coordination may be triggered without the first wireless device (e.g., a first wireless device) 3110 sending (e.g., transmitting) a request message. The second wireless device may trigger the inter-wireless-device coordination, for example, based on an event and/or a condition.

A second wireless device (e.g., 2nd wireless device) 3120 may receive first SCI from a first wireless device (e.g., 1st wireless device) 3110. The first SCI may reserve one or more first resources for one or more sidelink transmissions (e.g., 1st sidelink transmission(s)) 3140. A request message may comprise the first SCI. One or more first sidelink transmissions (e.g., 1st sidelink transmission(s)) 3140 may comprise the first SCI. A second wireless device (e.g., 2nd wireless device) 3120 may receive, from a third wireless device (e.g., 3rd wireless device) 3130, one or more second sidelink transmissions (e.g., 2nd sidelink transmission(s)) 3150. One or more second sidelink transmissions (e.g., 2nd sidelink transmission(s)) 3150 may comprise second SCI. The second SCI may reserve one or more second resources for one or more second sidelink transmissions (e.g., 2nd sidelink transmission(s)) 3150. A second wireless device (e.g., 2nd wireless device) 3120 may or may not be an intended receiver of one or more second sidelink transmissions (e.g., 2nd sidelink transmission(s)) 3150.

A second wireless device (e.g., 2nd wireless device) 3120 may determine coordination information for an inter-wireless-device coordination, for example, based on (e.g., in response to) a triggering of the inter-wireless-device coordination. A second wireless device (e.g., 2nd wireless device) 3120 may determine coordination information based on first SCI. A second wireless device (e.g., 2nd wireless device) 3120 may determine one or more first resources comprising resources that the second wireless device may not use to receive one or more first sidelink transmissions (e.g., 1st sidelink transmission(s)) 3140, for example, if the second wireless device is an intended receiver of the one or more first sidelink transmissions. A second wireless device (e.g., 2nd wireless device) 3120 may send (e.g., transmit), via sidelink and/or uplink, a message indicating coordination information 3360. The message indicating coordination information 3360 may include resources that the second wireless device may not use to receive one or more first sidelink transmissions (e.g., 1st sidelink transmission(s)) 3140. A second wireless device (e.g., 2nd wireless device) 3120 may experience half-duplex when sending (e.g., transmitting) via the resources (e.g., sending (e.g., transmitting) via sidelink). Coordination information may comprise and/or indicate resources that a second wireless device (e.g., 2nd wireless device) 3120 may not use to receive one or more first sidelink transmissions (e.g., 1st sidelink transmission(s)) 3140, for example, if the second wireless device is an intended receiver of the one or more first sidelink transmissions. A second wireless device (e.g., 2nd wireless device) 3120 may determine coordination information based on the first SCI and/or the second SCI. A second wireless device (e.g., 2nd wireless device) 3120 may determine that one or more first resources partially or fully overlap with one or more second resources. A second wireless device (e.g., 2nd wireless device) 3120 may determine from coordination information that resources of one or more first resources and of one or more second resources overlap. Overlapping resources may be expected overlapped resources (e.g., potential (future) resources) and/or detected overlapped resources (e.g., past resources). Coordination information may comprise and/or indicate overlapped resources between one or more first resources and one or more second resources. A full overlap between a first set of resources and a second set of resources may indicate that the first set of resources may be identical with the second set of resources or that a subset of the first set of resources may be identical with a subset of the second set of resources. A partial overlap between a first set of resources and a second set of resources may indicate that the first set of resources and the second set of resources comprise one or more overlapped (e.g., identical) first sidelink resource units and/or one or more non-overlapped (e.g., different) second sidelink resource units.

A second wireless device (e.g., 2nd wireless device) 3120 may send (e.g., transmit), to a first wireless device (e.g., 1st wireless device) 3110 and via sidelink, a message 3160. The message 3160 comprising and/or indicating coordination (assistance) information (e.g., comprising an indication of one or more resources described herein) may comprise a RRC, MAC CE (or MAC-CE), SCI and/or a PSFCH (e.g., a PSFCH format 0). A PSFCH format 0 may be a pseudo-random (PN) sequence defined by a length-31 Gold sequence. An index of a PN sequence of a PSFCH format 0 may indicate a resource collision, for example, if the resource is associated with a PSFCH resource conveying the PSFCH format 0. SCI may comprise a first stage and a second stage (e.g., as shown in FIG. 19). A first stage of the SCI may comprise and/or indicate coordination information. A second stage of the SCI may comprise and/or indicate coordination information.

A first wireless device (e.g., 1st wireless device) 3110 may select and/or update a set of resources for one or more first sidelink transmissions (e.g., 1st sidelink transmission(s)) 3140, for example, based on (e.g., in response to) receiving a message. The first wireless device (e.g., 1st wireless device) 3110 may select and/or update a set of resources for one or more first sidelink transmissions (e.g., 1st sidelink transmission(s)) 3140, for example, based on the coordination information. A first wireless device (e.g., 1st wireless device) 3110 may or may not trigger a resource selection procedure for selecting/updating a set of resources. A first wireless device (e.g., 1st wireless device) 3110 may determine to resend (e.g., retransmit) one or more first sidelink transmissions (e.g., 1st sidelink transmission(s)) 3140 based on the coordination information.

FIG. 31 may be an example of an inter-UE coordination scheme 2. A coordinating/coordinator wireless device (e.g., 2nd wireless device) 3120 may determine coordination information based on an inter-UE coordination scheme 2 and on expected overlapped and/or collided resources (e.g., potential (future) resources) and/or on detected overlapped and/or collided resources (e.g., past resources) between a first set of resources reserved by a requesting wireless device (e.g., 1st wireless device) 3110 and a second set of resources reserved by a third wireless device (e.g., 3rd wireless device) 3130.

A sidelink resource pool may be configured in a sidelink carrier. The sidelink carrier may be configured, for example, by a base station, in an unlicensed carrier/frequency/band/spectrum. For example, the sidelink carrier may be configured for operation with shared spectrum channel access. For example, a wireless device may receive one or more RRC messages comprising configuration parameters of the sidelink carrier, and/or a serving cell associated with the sidelink carrier, for operation with shared spectrum channel access. The configuration parameters (e.g., channel access configuration parameters) may be used for channel access procedures of operation with shared spectrum channel access, for example, one or more types of channel access procedures and/or LBT procedures. The configuration parameters may comprise an energy detection configuration/threshold, and/or COT sharing configuration.

The parameters of COT sharing configuration may indicate: a COT sharing energy detection threshold; and/or energy detection threshold offset. The parameters of COT sharing configuration may indicate that COT sharing between sidelink wireless devices is allowed/enabled/configured. Configuration parameters of a sidelink resource pool may comprise COT sharing parameters, indicating that COT sharing is allowed/enabled/configured between wireless devices using/communicating via the resource pool.

A sidelink resource pool, configured for operation with shared spectrum channel access (unlicensed band), may be associated with one or more sidelink resource allocation modes (e.g., sidelink resource allocation mode 1 and/or sidelink resource allocation mode 2). A wireless device may use channel access procedures in combination with one or more sidelink resource allocation modes (e.g., resource allocation mode 1 and/or resource allocation mode 2). A wireless device may perform sidelink resource reservation by sending SCI indicating reservation of a time-frequency resource (transmission occasion) in the resource pool.

A wireless device performing transmission(s) on SL-unlicensed (SL-U) carrier(s) and/or channel(s), and/or a wireless device scheduling or configuring SL transmission(s) for a wireless device performing transmissions on channel(s), may perform the channel access procedures to access the channels on which the transmission(s) are performed. Transmissions from a wireless device may be considered as separate SL transmissions, irrespective of having a gap between transmissions or not. A wireless device may perform channel access procedures, for example, in dynamic channel access, unless a higher layer parameter indicates not to (e.g., if *ChannelAccessMode* is configured/provided and/or *ChannelAccessMode ='semiStatic',* or if a RRC parameter indicates absence of any other technology (RAT) sharing the carrier).

A wireless device may access a channel on which SL transmission(s) are performed according to one of a plurality of types of channel access procedures/LBTs (e.g., Type 1 SL channel access procedure and/or Type 2 SL channel access procedure). A wireless device may perform Type 1 channel access procedures and/or Type 2 (2A/2B/2C) channel access procedures to access a channel for a sidelink transmission.

In a channel access procedure, the wireless device may perform energy detection (ED). The wireless device may determine a successful LBT (e.g., idle/available channel), for example, if the detected energy during a sensing period (e.g., clear channel assessment (CCA) period) satisfies (e.g., is below, lower than, less than, etc.) an ED threshold. The wireless device may determine a failed LBT or LBT failure (e.g., busy channel), for example, if the detected energy during the sensing period (e.g., CCA period) does not satisfy (e.g., is higher than, greater than, above, etc.) the ED threshold. The ED threshold may be configured by RRC signaling. The wireless device may perform the sidelink transmission, for example, based on (e.g., in response to) determining a successful LBT. The wireless device may not perform (e.g., drop or cancel) the sidelink transmission, for example, based on (e.g., in response to) determining a failed LBT (failure of the LBT procedure). The terms LBT and channel access procedure may be used interchangeably.

A wireless device may access a channel for a time period. A wireless device may access the channel for a period referred to as Channel Occupancy Time (COT), for example, based on (e.g., upon) a successful LBT on a channel. This is referred to as COT initiation. A wireless device may initiate a COT using a first type of channel access procedure, for example, Type 1 channel access procedure or Type 1 LBT.

The device may start an extended CCA period (e.g., continue sensing and energy detection), in which the detected energy is again compared against the ED threshold until channel access is granted, for example, based on (e.g., upon) a failed LBT on a channel. The regulation may specify the CCA slot duration (e.g., 9 $\mu$s in the 5 GHz band, and 5 $\mu$s in the 60 GHz band), the initial and extended CCA check times (e.g., a multiple of 5 $\mu$s for initial CCA and 8+m$\times$5 $\mu$s for extended CCA in the 60 GHz band, where m controls the backoff), and the ED threshold (e.g., -72 dBm for a 20 MHz channel bandwidth in the 5 GHz band, and -47 dBm for 40 dBm of radiated power in the 60 GHz band).

Various example LBT mechanisms/procedures may be implemented. For some signals, in some implementation examples, in some situations, and/or in some frequencies no LBT procedure may be performed by a transmitting entity. An LBT procedure referred to in example(s) may comprise Type 1 LBT, Type 2A LBT, Type 2B LBT, and/or Type 2C LBT. A type of an LBT (e.g., Type 1 LBT, Type 2 LBT, Type 2A LBT, Type 2B LBT, and/or Type 2C LBT) may be indicated or determined by a wireless device.

A wireless device may use Type 2 channel access procedures, including Type 2A channel access procedure, Type 2B channel access procedure, and/or Type 2C channel access procedure. The time duration spanned by the sensing slots that are sensed to be idle before a SL transmission(s) may be deterministic, for example, in Type 2 channel access procedures.

Type 2C channel access procedure (Type 2C LBT, or CAT1 LBT e.g., no LBT) may be configured for one or more sidelink signals and/or channels. For example, a channel in unlicensed/shared band may be occupied by a first device (e.g., for uplink, downlink, and/or sidelink transmissions) for a duration of a channel occupancy time (COT). The first device may share the channel (e.g., a portion of the duration of the COT) with a second device. For example, a second device may take over the channel in unlicensed/shared band for uplink, downlink, and/or sidelink transmissions, for example, of a control signal (e.g., HARQ feedback of the uplink, downlink, and/or the sidelink transmissions) based on a Type 2C channel access procedure (e.g., without sensing the channel before the transmission). For example, the duration of the corresponding transmission may be less than a threshold (e.g., 584 micro seconds).

Type 2B channel access procedure (Type 2B LBT or CAT2 LBT that may be referred to as one-shot LBT and/or a short LBT) may be configured for one or more sidelink signals and/or channels. The Type 2B may be an LBT without random back-off. The duration of time determining that the channel is idle may be deterministic (e.g., by a regulation, e.g., 16 micro second). A transmitting device (e.g., a base station in Uu interface, a wireless device in Uu interface, and/or a transmitting device in a sidelink communication) may send (e.g., transmit) a grant (e.g., uplink grant and/or a sidelink grant) indicating a type of LBT (e.g., Type 2 BLBT) to a receiving device (e.g., a base station in Uu interface, a wireless device in Uu interface, and/or a receiving device in a sidelink communication). For example, a channel in unlicensed/shared band may be occupied by a first device (e.g., for uplink, downlink, and/or sidelink transmissions) for a duration of a channel occupancy time (COT). The first device may share the channel (e.g., a portion of the duration of the COT) with a second device. For example, a second device may take over the channel in unlicensed/shared band for uplink, downlink, and/or sidelink transmissions, for example, of a control signal (e.g., HARQ feedback of the uplink, downlink, and/or the sidelink transmissions) based on a Type 2B channel access procedure (e.g., with short/one-shot sensing the channel before the transmission). For example, the wireless device may send (e.g., transmit) the transmission based on (e.g., immediately after) sensing the channel to be idle within a duration $T_f$ (e.g., $T_f$ = 16$us$), including a sensing slot that occurs within the last time interval (e.g., 9us) of the duration $T_f$. The channel is considered to be idle within the duration $T_f$, for example, if the channel is sensed to be idle for total of at least 5$us$ with at least 4us of sensing occurring in the sensing slot.

Type 2A channel access procedure (Type 2A LBT or CAT3 LBT, e.g., LBT with deterministic back-off) may be configured for one or more sidelink signals and/or channels. A wireless device may be indicated to perform Type 2A channel access procedure in a SL grant. For example, a channel in unlicensed/shared band may be occupied by a first device (e.g., for uplink, downlink, and/or sidelink transmissions) for a duration of a channel occupancy time (COT). The first device may share the channel (e.g., a portion of the duration of the COT) with a second device. For example, a second device may take over the channel in unlicensed/shared band for uplink, downlink, and/or sidelink transmissions, for example, of a control signal (e.g., HARQ feedback of the uplink, downlink, and/or the sidelink transmissions) based on a Type 2A channel access procedure. For example, the wireless device may use Type 2A channel access procedures for a SL transmission. The wireless device may send (e.g., transmit) the transmission based on (e.g., immediately after) sensing the channel to be idle for at least a sensing interval $T_{short\_ul}$ (e.g., $T_{short\_ul}$ = 25$us$), consisting of a duration $T_f$ (e.g., $T_f$ = 16$us$) immediately followed by one sensing slot and $T_f$ including a sensing slot at start of $T_f$. The channel is considered to be idle for $T_{short\_ul}$, for example, if both sensing slots of $T_{short\_ul}$ are sensed to be idle.

Type 1 channel access procedure (Type 1 LBT or CAT4 LBT, e.g. LBT with random back-off with a contention window of variable size) may be implemented. The time duration spanned by the sensing slots that are sensed to be idle before a SL transmission(s) based on Type 1 LBT is random. A wireless device may send (e.g., transmit) a SL transmission using Type 1 channel access procedure, for example, after first sensing the channel to be idle during the slot durations of a defer duration $T_d$, and after a counter $N$ is zero. The wireless device may adjust the counter $N$ by sensing the channel for additional slot duration(s) according to the steps described below.

Type 1 channel access procedure may be applicable to SL transmissions comprising PSCCH and/or PSSCH and/or PSFCH transmission and/or SL-SSB. The SL transmission may be scheduled by a base station (e.g., mode 1). The SL transmission may be determined by a wireless device (e.g., mode 2).

Type 2 channel access procedure (e.g., Type 2A and/or Type 2B and/or Type 2C) may be applicable to SL transmissions comprising PSCCH and/or PSSCH and/or PSFCH transmission and/or SL-SSB. The SL transmission may be scheduled by a base station (e.g., mode 1). The SL transmission may be determined by a wireless device (e.g., mode 2).

A transmitting device may draw/determine a random number $N$ within a contention window (e.g., $N = N_{init}$, where $N_{init}$ is a random number uniformly distributed between 0 and $CW_p$), for example, in Type 1 channel access procedure. The size of contention window may be specified by the minimum and maximum value of $N$, for example, based on a channel access priority class (CAPC) associated with the corresponding SL transmission. The transmitting device may vary the size of the contention window, for example, when drawing the random number $N$. The random number N may be used in the LBT procedure to determine the duration of time that the channel is sensed to be idle before the transmitting device may send (e.g., transmit) on the channel. The wireless device may choose to decrement the counter, for example, set $N = N - 1$, if N>0. The wireless device may sense the channel for an additional slot duration. For example, if the additional slot duration is idle, the wireless device may stop if N=0. For example, if the additional slot duration is idle, the wireless device may decrement the counter N if N>0. For example, if the additional slot duration is busy (not idle), the wireless device may sense the channel until either a busy slot is detected within an additional defer duration $T_d$ or all the slots of the additional defer duration $T_d$ are detected to be idle. The wireless device may stop if N=0, for example, if the channel is sensed to be idle during all the slot durations of the additional defer duration $T_d$. The wireless device may decrement the counter N if N>0, for example, if the channel is sensed to be idle during all the slot durations of the additional defer duration $T_d$. The wireless device may sense the channel until either a busy slot is detected within an additional defer duration $T_d$ or all the slots of the additional defer duration $T_d$ are detected to be idle, for example, if the channel is sensed to be idle during all the slot durations of the additional defer duration $T_d$.

The wireless device may send (e.g., transmit) a transmission on the channel, for example, if a wireless device has not sent (e.g., transmitted) a SL transmission on a channel on which SL transmission(s) are performed after the above LBT procedure is stopped. The wireless device may send (e.g., transmit) a transmission on the channel, for example, if the channel is sensed to be idle at least in a sensing slot duration $T_{sl}$ when the wireless device is ready to send (e.g., transmit) the transmission and/or if the channel has been sensed to be idle during all the slot durations of a defer duration $T_d$ immediately before the transmission. The wireless device may reset the counter (e.g., set $N = N_{init}$) after sensing the channel to be idle during the slot durations of a defer duration $T_d$, for example, if the channel has not been sensed to be idle in a sensing slot duration $T_{sl}$ when the wireless device first senses the channel after it is ready to transmit, and/or if the channel has not been sensed to be idle during any of the sensing slot durations of a defer duration $T_d$ immediately before the intended transmission.

The defer duration $T_d$ may consist of duration $T_f$ = 16us immediately followed by $m_p$ consecutive slot durations, where each slot duration is $T_{sl}$ = 9us, and $T_f$ may include an idle slot duration $T_{sl}$ at start of $T_f$. The value of $m_p$ may depend on a channel access priority class of the corresponding SL transmission.

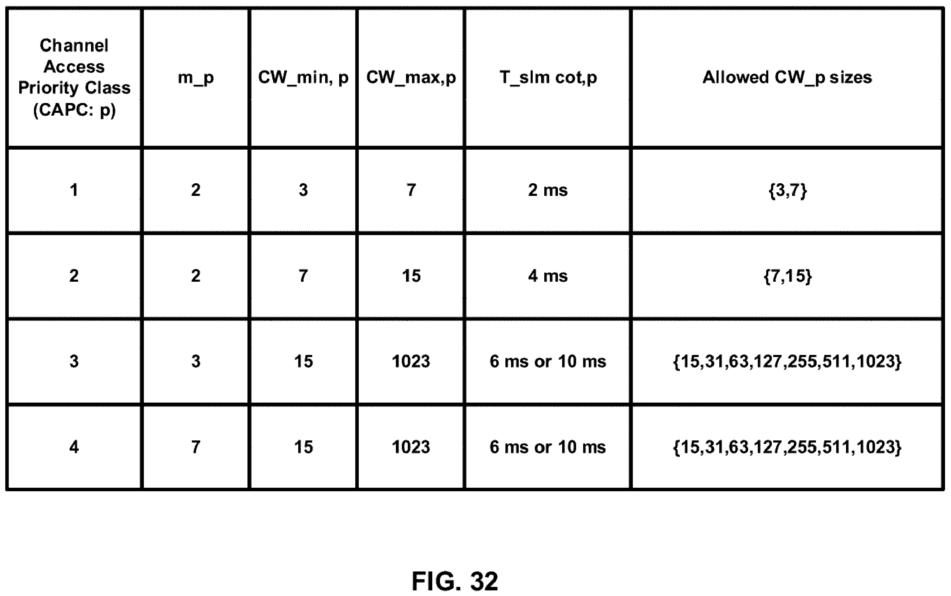

The value/size of the contention window $CW_p$ may be determined/adjusted, for example, based on a channel access priority class (CAPC) of the corresponding SL transmission, for example, $CW_{min,p} \leq CW_p \leq CW_{max,p}$, where $CW_{min,p}$ and $CW_{max,p}$ are based on the CAPC. $CW_{min,p}$ and $CW_{max,p}$ are chosen, for example, before the channel access procedure. For example, $m_p$, $CW_{min,p}$, and $CW_{max,p}$ are based on a channel access priority class (CAPC $p$) as shown in the Table of FIG. 32.

FIG. 32 shows an example of channel access priority classes for SL channel access procedure. The channel access priority class (CAPC $p$) may be signaled to a wireless device by a base station and/or another wireless device. The CAPC may be provided by the higher layers (e.g., MAC or RRC layer). The wireless device may determine the CAPC, for example, based on one or more priorities (e.g., PHY priority and/or logical channel priority) of one or more SL transmissions (e.g., the corresponding SL transmission). The table in FIG. 32 shows the allowed values of contention window size for a CAPC p. The table in FIG. 32 further shows values of $T_{slm,cot,p}$ for a CAPC p, which indicates a maximum duration for a channel occupancy time (COT) obtained by the channel access procedure based on the corresponding CAPC p.

A wireless device may obtain/initiate a channel occupancy time (COT), for example, based on (e.g., in response to) successful LBT (e.g., a successful Type 1 channel access procedure), performed for a sidelink transmission. A maximum duration of the COT may be based on the CAPC of the sidelink transmission based on which the wireless device performed the LBT/Type 1 channel access procedure (e.g., as shown in FIG. 32). The COT may comprise one or more transmissions and/or receptions by the wireless device, for example, SL and/or UL and/or DL transmissions. The wireless device may share the COT with one or more other wireless devices and/or the base station. For example, one or more second transmission by the one or more other wireless devices and/or the base station may follow the sidelink transmission that initiated the COT. The total COT of transmission(s) obtained by the channel access procedure (e.g., including the following DL/LTL transmission and/or SL transmissions by other wireless devices), for example, if the wireless device sets 'COT sharing indication' in SCI/MAC-CE to '1', may not exceed $T_{slm\ cot,p}$.

A transmission burst(s) may comprise a continuous (unicast, multicast, broadcast, and/or combination thereof) transmission on a carrier component (CC). A first transmission burst(s) may be a continuous transmission from a first device (e.g., a base station in Uu interface, a wireless device in Uu interface, and/or a transmitting device in a sidelink communication) to a second device (e.g., a base station in Uu interface, a wireless device in Uu interface, and/or a receiving device in a sidelink communication) on the channel of the CC in an unlicensed/shared band. A second transmission burst(s) may be a continuous transmission from the second device (e.g., a base station in Uu interface, a wireless device in Uu interface, and/or a transmitting device in a sidelink communication) to the first device (e.g., a base station in Uu interface, a wireless device in Uu interface, and/or a receiving device in a sidelink communication) on the channel of the CC in the unlicensed/shared band. The first transmission burst(s) and the second transmission burst(s) on the channel in the unlicensed/shared band may be scheduled in a TDM manner over the same unlicensed/shared band. Switching between the first transmission burst and the second transmission burst(s) may require a channel access procedure (e.g., Type 1 LBT, Type 2 LBT, Type 2A LBT, Type 2B LBT, and/or Type 2C LBT). For example, an instant in time may be part of the first transmission burst or the second transmission burst.

COT sharing may comprise a mechanism by which one or more devices share a channel, in an unlicensed/shared band, that is sensed as idle by at least one of the one or more devices. For example, one or more first devices may occupy the channel based on a first type of channel access procedure (e.g., Type 1 LBT: the channel is sensed as idle based on a Type 1 LBT, or a successful Type 1 channel access procedure). The one or more first devices may initiate the COT for a duration which is shorter and or equal to a maximum COT duration (MCOT limit). The maximum COT duration may be based on a CAPC of the first type channel access procedure used for initiating the COT. One or more second devices may use and/or share, for a transmission of the one or more second devices, the channel using a second type of channel access procedure (e.g., Type 2/2A/2B/2C LBT) within the duration of the COT.

Type 1 channel access procedure may be used to initiate a COT. Type 2 channel access procedure (Type 2A LBT, Type 2B LBT, and/or Type 2C LBT) may be used for transmissions within a duration of the COT. For example, Type 2 channel access procedure may be used by a COT initiator wireless device for the following transmissions after the COT is initiated. For example, Type 2 channel access procedure may be used by the COT sharing wireless device(s) for the following transmissions based on COT sharing.

Various types of LBT/channel access procedures may be used/employed for Channel occupancy time (COT) sharing. A transmitting device (e.g., a base station in Uu interface, a wireless device in Uu interface, and/or a transmitting device in a sidelink communication) may send (e.g., transmit) a grant (e.g., uplink grant and/or a sidelink grant) to a receiving device (e.g., a base station in Uu interface, a wireless device in Uu interface, and/or a receiving device in a sidelink communication). For example, the grant (e.g., uplink grant and/or a sidelink grant) may comprise an indication of the COT sharing and/or a type of LBT (e.g., Type 2 LBT, Type 2A LBT, Type 2B LBT, and/or Type 2C LBT) to be used for the receiving device (e.g., COT sharing device), for example, during the COT acquired and/or shared by the transmitting device.

A regulation of certain region(s), for example, Europe and Japan may prohibit continuous transmission in the unlicensed band and may impose limits on the COT, for example, the maximum continuous time a device may use a channel. The maximum continuous time in which the device gains an access based on LBT procedure and uses the channel may be referred to as a maximum channel occupancy time (MCOT). The MCOT in the 5 GHz band may be limited to a certain period, for example, 2 ms, 4 ms, or 6 ms, depending on the channel access priority class, and it may be increased up to 8-10 ms.

The MCOT in the 60 GHz band may be 9 ms. For example, the regulation (e.g., for the 5 GHz and 60 GHz bands) may allow the device (e.g., a wireless device of a Uu interface and/or a transmitting wireless device in a sidelink communication) to share the COT with associated devices. For example, an associated device may be a wireless device and/or a base station in the Uu interface. For example, an associated device may be a wireless device of the sidelink (e.g., unicast, multicast, and/or broadcast) communication. For example, the device may get an (e.g., initial) access to the channel through an LBT procedure, for example, for COT (or MCOT). A device may send (e.g., transmit), to an associated device, a control message and/or a control signal indicating sharing the COT (or MCOT) with the associated device and/or remaining duration of the COT, and starting/ending times (e.g., in terms of symbol(s), slot(s), SFN(s), and/or a combination thereof) of the shared COT that the associated device can use/share the channel. The associated device may skip (e.g., may not perform) a CCA check and/or may perform Type 2C LBT procedure on the channel, for example, during the shared COT. The associated wireless device may send (e.g., transmit) data via the channel, for example, during the shared COT based on a particular LBT type. The particular LBT type may comprise Type 2A, Type 2B, and/or Type 2C. For example, the MCOT may be defined and/or configured per priority class, logical channel priority, and/or device specific.

A first device may gain an access to a channel through a channel access procedure for a first (e.g., UL, DL, and/or sidelink) transmission in an unlicensed band. The channel access procedure may be based on a first type of channel access procedure (e.g., Type 1 LBT/channel access procedure). The first device may initiate a COT duration, for example, if the channel access procedure is successful and/or indicates an idle channel. A second device may, for example, if the first device shares COT with the second device, perform a second (e.g., UL, DL, and/or sidelink) transmission with a dynamic grant and/or a configured grant (e.g., Type 1 and/or Type2), for example, based on a second channel access procedure that the second device performs on the channel shared by a first device. The second channel access procedure may be based on a second type of channel access procedure (e.g., Type 2/2A/2B/2C LBT/channel access procedure). The second device may use and/or occupy, for example, by performing UL, DL, and/or sidelink transmission, the channel during a remainder duration of the shared COT. For example, the first device performing the first transmission based on a configured grant (e.g., Type 1, Type 2 SL) may send (e.g., transmit) a control information (e.g., DCI, UCI, SCI, and/or MAC CE) indicating the COT sharing. The COT sharing may comprise switching, within a (M)COT, from the first transmission (e.g., UL, DL, and/or sidelink transmission) of the first device to the second transmission (e.g., UL, DL, and/or sidelink transmission) of the second device. A starting and/or ending time of the second transmission in the COT sharing, for example, triggered by the first device, may be indicated in one or more ways. For example, one or more parameters in the control information may indicate the starting time of the COT sharing at which the second device starts to access the channel and/or an ending time of the COT sharing at which the second device terminates/ends to use the channel. For example, resource configuration(s) of configured grant(s) may indicate the starting time and/or the ending time.

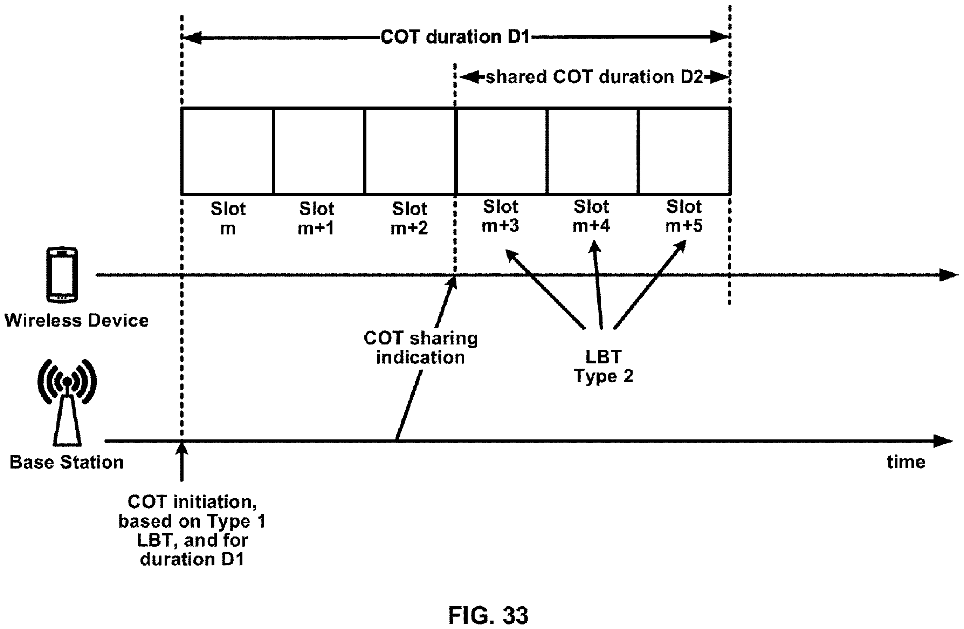

FIG. 33 shows an example of COT sharing between a base station and a wireless device. The base station may perform a first LBT based on a first type of LBT (e.g., Type 1 LBT) on a channel before a first transmission (e.g., a DL transmission) via the channel in slot m. The first LBT may be based on a CAPC associated with the first transmission. The base station may send (e.g., transmit) the first transmission if the first LBT on the channel is successful. The base station may initiate a COT/COT duration based on the first LBT. A duration of the COT (D1 in FIG. 33) may be less than or equal to a maximum COT (MCOT) duration. The MCOT duration may be based on the CAPC of the first transmission. In the example of FIG. 33, MCOT for the corresponding CAPC may be 6 slots. The base station may have access to the channel for the (M)COT duration. The base station may send (e.g., transmit) via the channel during slot m and slot m+1 and slot m+2. The base station may perform a second LBT based on a second type of LBT (e.g., Type 2/2A/2B/2C LBT) on the channel before one or more second transmissions, following the first transmission, in slot m+1 and slot m+2. The base station may share the access to the channel during the remainder of the (M)COT duration. In the example of FIG. 33, the base station may determine the remainder duration of the COT, for example, 3 slots of slot m+3 to slot m+5, as a duration of the shared COT, D2. For example, the base station may send (e.g., transmit) a signal, for example, control signal/DCI/MAC-CE, to a wireless device, indicating COT sharing. The signal may comprise the COT sharing information. For example, the signal may indicate to the wireless device that the channel is shared with the wireless device for the shared COT duration, D2. The COT sharing information may indicate the shared COT duration and/or a starting time of the shared COT (e.g., beginning/a first symbol of slot m+3) and/or an ending time of the shared COT (e.g., end/a last symbol of slot m+5). The wireless device may send (e.g., transmit) one or more third transmissions (e.g., UL and/or SL transmissions) on the channel within the shared COT duration. The wireless device may perform one or more third LBTs based on one or more second types of LBT (e.g., Type 2/2A/2B/2C LBT) on the channel before the one or more third transmissions. The second type of LBT may require shorter/no sensing compared to the first type, and thus, result in more chance of LBT success within the (shared) COT duration. The wireless device or the base station may not send (e.g., transmit) any transmissions based on the second type of LBT that goes beyond the MCOT duration limit. The wireless device may determine the MCOT limit based on the CAPC indicated in the COT sharing information.

A wireless device may be configured with sidelink resource allocation mode 1, comprising dynamic grant, Type 1 configured grants and/or Type 2 configured grants, for sidelink operation in a shared carrier, subject to applicable regional regulations. In operation with shared spectrum channel access (e.g., at least in dynamic channel access), a sidelink wireless device (e.g., SL UE) performs Type 1 LBT and/or one of the Type 2 LBTs (e.g., Type 2A/ Type 2B/ Type 2C) before a SL transmission using the allocated resource(s), in compliance with transmission gap and LBT sensing idle time requirements.

A wireless device may be configured with sidelink resource allocation mode 2, comprising dynamic grant, Type 1 configured grants and/or Type 2 configured grants, for sidelink operation in a shared carrier, subject to applicable regional regulations. In operation with shared spectrum channel access (e.g., at least in dynamic channel access), a sidelink wireless device (e.g., SL UE) performs Type 1 LBT and/or one of the Type 2 LBTs (e.g., Type 2A/ Type 2B/ Type 2C) before a SL transmission using the selected and/or reserved resources, in compliance with transmission gap and LBT sensing idle time requirements.

The wireless device may, for example, in SL resource allocation mode 1, use a type of channel access procedure, from the plurality of types of channel access procedures (e.g., Type 1 LBT, Type 2 LBT, Type 2A LBT, Type 2B LBT, and/or Type 2C LBT) for a sidelink transmission, that is indicated in a SL grant scheduling the sidelink transmission (e.g., via DCI or SCI). The wireless device may, for example, in SL resource allocation mode 2, use a first type of channel access procedure (e.g., Type 1 LBT) from the plurality of types of channel access procedures, for a sidelink transmission (e.g., via PSSCH, PSCCH, and/or PSFCH), unless one or more conditions are met. A wireless device may use a first type of LBT (e.g., Type 1 channel access procedures) for sending (e.g., transmitting) transmissions in a sidelink resource pool, including PSSCH transmission and/or PSCCH transmission and/or PSFCH transmission, unless one or more conditions are met. For example, the wireless device may perform Type 1 channel access procedure for a sidelink transmission (e.g., via PSSCH/PSCCH) unless the sidelink transmission is within a duration of a COT. For example, the wireless device may perform Type 2 channel access procedure (e.g., Type 2A/ Type 2B/ Type 2C) for a sidelink transmission (e.g., via PSSCH/PSCCH) that is within the duration of the COT. The COT may be initiated by the wireless device. The COT may be a shared COT. For example, a second wireless device may share the COT with the wireless device. For example, the wireless device may receive a signal (e.g., a first stage SCI and/or a second stage SCI and/or a MAC-CE) indicating a shared COT, for example, a starting/ending time and/or duration of the shared portion of the COT in time domain. The wireless device may be an intended recipient/destination of the signal.

A wireless device or abase station (BS) may initiate a COT, for example, based on a Type 1 LBT/channel access procedure, with a first duration which is limited by a maximum COT (MCOT) duration. The MCOT duration is based on a CAPC of the Type 1 LBT/channel access procedure. The wireless device/base station may share a portion/subset of the COT duration, for example, remainder of the COT duration referred to as a shared COT duration, with one or more second wireless devices. For example, the wireless device/base station may share a first portion of the remainder duration of the COT as a first shared COT duration with a first wireless device. For example, the wireless device/base station may share a second portion of the remainder duration of the COT as a second shared COT duration with a second wireless device. For example, the wireless device/base station may share a third portion of the remainder of the COT as a third shared COT duration with a third wireless device, and so forth. The wireless device/base station may share a fourth portion of the remainder of the COT as a fourth shared COT duration with a group of wireless devices (e.g., based on groupcast/multicast/broadcast signaling and/or based on multiple unicast signaling). The duration of the COT may comprise one or more (smaller) durations, each corresponding to a shared COT. Durations of two shared COTs, associated with a same COT, may not overlap in time (e.g., shared COTs may be disjoint). Durations of two shared COTs, associated with a same COT, may be contiguous (e.g., no gap beyond a threshold (e.g., 16us or 25 us) between the shared COTs). Durations of two shared COTs, associated with a same COT, may overlap in time (e.g., shared COTs may not be disjoint).

For example, the wireless device may perform Type 1 channel access procedure for a transmission that is not within a duration of a COT. For example, the wireless device may perform Type 1 channel access procedure for a first transmission on a channel. The wireless device may initiate a COT, for example, based on (e.g., in response to) a successful LBT result. A duration of the COT may be associated with the parameters of the Type 1 channel access procedure that was used to initiate the COT (e.g., the CAPC).

Type 2A channel access procedure may be applicable to transmission(s) by a wireless device following transmission(s) by another wireless device, for a gap $\geq 25\mu s$, in a shared channel occupancy (shared COT). Type 2B channel access procedure may be applicable to transmission(s) by a wireless device following transmission(s) by another wireless device at least if the gap is $16\mu s$ in a shared channel occupancy. Type 2C channel access procedure may be applicable to transmission(s) by a wireless device following transmission(s) by another wireless device for a gap $\leq 16\mu s$ in a shared channel occupancy and/or if the duration of the corresponding transmission is at most 584us.

Multi-consecutive slots transmission (MCSt) may be used for (e.g., Mode 1 and/or Mode 2) resource allocation in SL-unlicensed (SL-U) operations. MCSt may help to maintain an acquired/initiated COT easily, by back-to-back transmissions.

Wireless-device-to-wireless-device (e.g., UE-to-UE) COT sharing may be configured for sidelink operation in a shared channel (e.g., SL-U). For example, a wireless device may receive RRC message(s), from a base station and/or another wireless device, comprising SL configuration parameters indicating that UE-to-UE COT sharing is enabled for a sidelink carrier/BWP/resource pool/channel/signal. One or more SL channels and/or signals (e.g., PSCCH/PSSCH, PSFCH, S-SSB) may be applicable for shared COT access. For example, a wireless device may be allowed to share a COT with another wireless device, which sends the COT sharing indication, only if the wireless device (e.g., responding/COT sharing wireless device) has a PSCCH and/or PSSCH and/or PSFCH and/or S-SSB transmission within the shared COT (e.g., immediately after the COT is shared).

A responding a sidelink wireless device (e.g., SL UE) may use/utilize a COT shared by a COT initiator wireless device, for example, if the responding sidelink wireless device is a target receiver of the at least COT initiator wireless device's PSSCH data transmission in the COT. A responding a sidelink wireless device (e.g., SL UE) may use/utilize a COT shared by a COT initiator wireless device, for example, if the responding sidelink wireless device is a target receiver of the COT initiator wireless device's transmission in the COT. The responding wireless device may use the shared COT for its transmission that has an equal or smaller CAPC value than the CAPC value indicated in a shared COT/COT sharing information. The CAPC value indicated in the COT sharing information may be the CAPC of a first transmission, by the COT initiator wireless device, based on which the COT is initiated. The CAPC value indicated in the COT sharing information may be a highest CAPC of transmissions performed or allowed within the duration of the COT. The COT initiator wireless device is a target receiver of the responding wireless device's transmission(s), for example, if a responding wireless device uses a shared COT for its transmission(s).

A base station may initiate a COT and share a portion/remainder of the COT duration with a wireless device (or multiple wireless devices) for operation in sidelink. For example, the base station may send (e.g., transmit) a control signal/message (e.g., DCI and/or MAC-CE) to the wireless device, comprising the COT sharing indication/information. The COT may comprise time/frequency resources of a resource pool in a sidelink BWP/carrier.

A first wireless device may only be allowed to share a COT, for example, if the COT is initiated by a PSSCH transmission and/or PSCCH transmission and/or S-SSB transmission and/or PSFCH transmission. A second/responding wireless device may only be allowed to share the indicated COT, for example, if the second/responding wireless device's (first) transmission within the shared COT is a PSSCH transmission and/or PSCCH transmission and/or S-SSB transmission and/or PSFCH transmission.

A base station may relay/forward a wireless device initiated COT to another wireless device. A Mode 1 wireless device may report a COT and/or related information to a base station for aiding Mode 1 resource allocation/scheduling. A wireless device may perform/use CP extension (CPE) for NR sidelink operation in a shared channel, for example, to fill a gap within a (shared) COT, and/or between the end of the LBT procedure and the start of the SL transmission to retain channel access.

COT sharing may refer to sending (e.g., transmitting) signal(s) by a device/station, which has initiated or acquired or obtained a COT on a channel, to another device(s)/station(s), to indicate that a portion/remainder of the duration of the COT is shared with the other device(s)/station(s). The signal may be referred to as or may comprise COT sharing information. SCI (e.g., first stage SCI and/or second stage SCI) and/or a MAC-CE may comprise the signal indicating the COT sharing information.

COT sharing information may comprise a field/parameter indicating whether a COT is shared or not. A first value of the field/parameter may indicate that the COT is shared with the wireless device. A second value of the field/parameter may indicate that the COT is not shared with the wireless device. The COT sharing information may comprise a second field indicating a duration of the shared COT. The second field may indicate a duration of (the remainder/portion of) a COT initiated by the COT initiator wireless device. For example, the duration may be shared/provided to the responding/COT sharing wireless device for its access to the channel. The duration may be/comprise one or more (SL) slots and/or one or more (SL) symbols. For example, the second field may indicate a first number of (consecutive) SL slots and/or a second number of (consecutive) SL symbols, within the initiated/acquired/obtained COT, to be shared with the responding/COT sharing wireless device(s). The second field may indicate the duration in milli/micro seconds. The second field may indicate a first number of (consecutive) slots and/or a second number of (consecutive) symbols, comprising SL slots/symbols. For example, the responding/COT sharing wireless device may determine the duration of the shared COT, for example, based on intersection of the indicated slots/symbols and SL slot/symbols. The COT sharing information may comprise a third field indicating a starting time/location of the shared COT. For example, the third field may indicate an offset (e.g., a number of slots/symbols) from a reference point/time to the starting time of the shared COT. The reference point/time may be a slot/symbol, for example, if the SCI/MAC-CE/signal comprising the COT indication information is received/detected. The second/responding/COT sharing wireless device may determine a location/starting time/ending time/duration of the shared COT, for example, based on reference point/time and/or the indicated duration of the shared COT. For example, the second/responding/COT sharing wireless device may determine the starting time of the shared COT by applying/using the indicated offset to/for the end of the slot where the COT sharing information is detected. The COT sharing may be used after the determined starting time, for example, for the duration of the shared COT. The duration of the shared COT may be pre-defined (e.g., always x slots, x=1,2, ...). An RRC/SIB message, received from the base station/wireless device, may comprise a parameter indicating the duration of the shared COT.

A shared COT may refer to a portion/subset of a duration of a COT (initiated/acquired/obtained by a first wireless device) that is shared, for example, by the first wireless device, with one or more second wireless device. The one or more second wireless devices may have access to the shared (portion/subset of the) COT. The one or more second wireless devices may send (e.g., transmit) one or more SL/LTL transmissions within a duration of the shared (portion/subset of the) COT.

For unlicensed sidelink operation (e.g., SL-U), at least some COT sharing mechanism may no longer work, for example, due to the hidden node problem described herein. In sidelink operation, for example, sidelink operation mode 2, as opposed to Uu link, there may be no centralized scheduler of the network (as a base station), and the resource allocation may be performed based on sensing and reservation. As the sensing and reservation mechanism is operable within a sensing/communication range of a device, there may be the issue of hidden node, whose transmissions/reservations may not be detected. This may result in an interruption of a COT and/or a shared COT. Thus, resources within the shared COT may not be proper/available resources for the COT sharing wireless device's transmissions and the shared COT may be/become invalid. This problem may arise more often in some technologies (such as mode 2 sidelink operation) than in other technologies (such as mode 1 sidelink operation and/or technologies that may be based on centralized COT sharing).

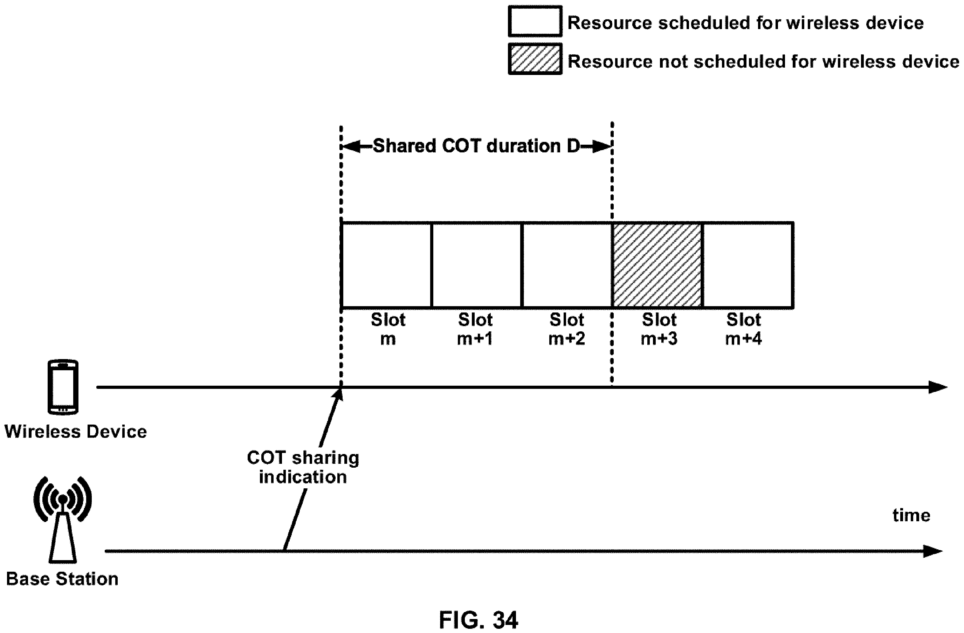

FIG. 34 shows an example of COT sharing between a base station and a wireless device. As shown in this example, the base station, initiating a COT, may send (e.g., transmit) a signal (e.g., DCI/MAC-CE) to the wireless device comprising a COT sharing indication. For example, the signal may indicate COT sharing information for the wireless device. The COT sharing indication/information may indicate a shared COT duration D (e.g., portion/duration of the COT that is shared with the wireless device). In this example, D is 3 slots. For example, the wireless device may determine (a location of) the shared COT, based on the COT sharing indication, to be over slot m, slot m+1, and slot m+2. The wireless device may determine, for example, based on starting time and/or duration indicated by the COT sharing information, that the shared COT expires/ends at the end of slot m+2. The wireless device may have a second transmission after the expiration/end of the (shared) COT, for example, in slot m+4. The base station may determine the location and/or starting/ending time and/or duration of the shared COT such that the wireless device can use resources within the shared COT for transmission. For example, resources in slots m to m+2 may be scheduled by the base station for the wireless device.

The above COT sharing with the wireless device may work without problems, because the base station is the scheduler of the network and can guarantee the resources within the shared COT to be available for transmission by the wireless device. For example, as shown in FIG. 34, transmissions occasions/resources within the shared COT, for example, in slot m, slot m+1 and slot m+2, are allocated to the wireless device. For example, the base station may send control signals indicating resources in the slot m, slot m+1 and slot m+2 are scheduled for the wireless device's transmissions. Thus, no transmission by other wireless devices may interrupt this wireless device's transmission within the shared COT. In the example of FIG. 34, the resource in slot m+3 is not allocated to/scheduled for the wireless device. For example, the base station may schedule a second wireless device's transmission/reception in slot m+3. The base station can guarantee that the seconds wireless device's transmission/reception is located outside the shared COT of this wireless device (e.g., does not overlap with the duration of the shard COT). A COT initiator wireless device may not be able to guarantee this, for example, due to hidden node problem, in at least some unlicensed sidelink operations.

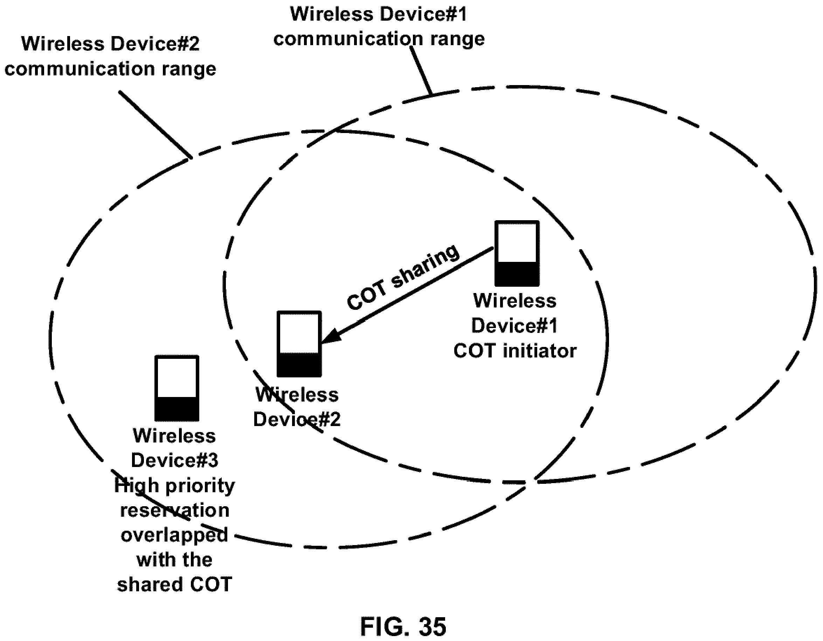

FIG. 35 shows an example of sidelink wireless devices operating in unlicensed spectrum. A first wireless device (e.g., wireless device#1) may initiate a COT and share it with a second wireless device (e.g., wireless device#2). A second wireless device (e.g., wireless device#2) may be within a communication and/or sensing range of a first wireless device (e.g., wireless device#1). For example, the first wireless device (e.g., wireless device#1) may be able to detect reservations of the second wireless device (e.g., wireless device#2) and vice versa. For example, the first wireless device (e.g., wireless device#1) may be able to send (e.g., transmit) and/or receive signals to/from the second wireless device (e.g., wireless device#2). The first wireless device (e.g., wireless device#1) and the second wireless device (e.g., wireless device#2) may be able to gain/retain access to a same channel based on COT sharing, for example, during a mutual/shared channel occupancy time. A third wireless device (e.g., wireless device#3) may be outside/not within the communication and/or sensing range of the first wireless device (e.g., wireless device#1). For example, the first wireless device (e.g., wireless device#1) may not be able to detect reservations of the third wireless device (e.g., wireless device#3) and vice versa. For example, the first wireless device (e.g., wireless device#1) may not be able to send (e.g., transmit) and/or receive signals to/from the third wireless device (e.g., wireless device#3). Therefore, the third wireless device (e.g., wireless device#3) may be a hidden node to the first wireless device (e.g., wireless device#1), and the first wireless device (e.g., wireless device#1) and the third wireless device (e.g., wireless device#3) may not be able to gain/retain access to a same channel based on COT sharing. Nevertheless, the third wireless device (e.g., wireless device#3) may be within the communication/sensing range of the second wireless device (e.g., wireless device#2), for example, as shown in FIG. 35. For example, the second wireless device (e.g., wireless device#2) may be able to detect reservations of the third wireless device (e.g., wireless device#3) and vice versa. Forexample, the second wireless device (e.g., wireless device#2) may be able to send (e.g., transmit) and/or receive signals to/from the third wireless device (e.g., wireless device#3). For example, transmissions from the third wireless device (e.g., wireless device#3) may interfere transmissions or receptions of the second wireless device (e.g., wireless device#2).

For example (e.g., as shown in FIG. 35), if a first wireless device (e.g., wireless device#1) shares a COT with a second wireless device (e.g., wireless device#2), based on at least some wireless communications, the shared COT duration may overlap with a reservation/transmission of a third wireless device (e.g., wireless device#3). This overlap may happen because the third wireless device (e.g., wireless device#3) is outside the communication/sensing range of the first wireless device (e.g., wireless device#1), and the first wireless device (e.g., wireless device#1) is not able to detect the reservation by the third wireless device (e.g., wireless device#3). As the third wireless device (e.g., wireless device#3) is within the communication/sensing range of the second wireless device (e.g., wireless device#2), the second wireless device (e.g., wireless device#2) may detect the reservation of the third wireless device (e.g., wireless device#3) that overlaps with the shared COT received from the first wireless device (e.g., wireless device#1). Based on at least some wireless communications, the second wireless device (e.g., wireless device#2) may not transmit during/via the resource that is reserved by the third wireless device (e.g., wireless device#3). For example, the reservation by the third wireless device (e.g., wireless device#3) may have a higher priority than the second wireless device (e.g., wireless device#2) transmission. As a result, the second wireless device (e.g., wireless device#2) may pre-empt/exclude/not send (e.g., transmit) via a slot within the shared COT. This operation results in a long gap (e.g., longer than the threshold for retaining a COT consistency) within the duration of the COT. Thus, the COT may be interrupted and/or lost. This issue may impact the sidelink operation in unlicensed spectrum.

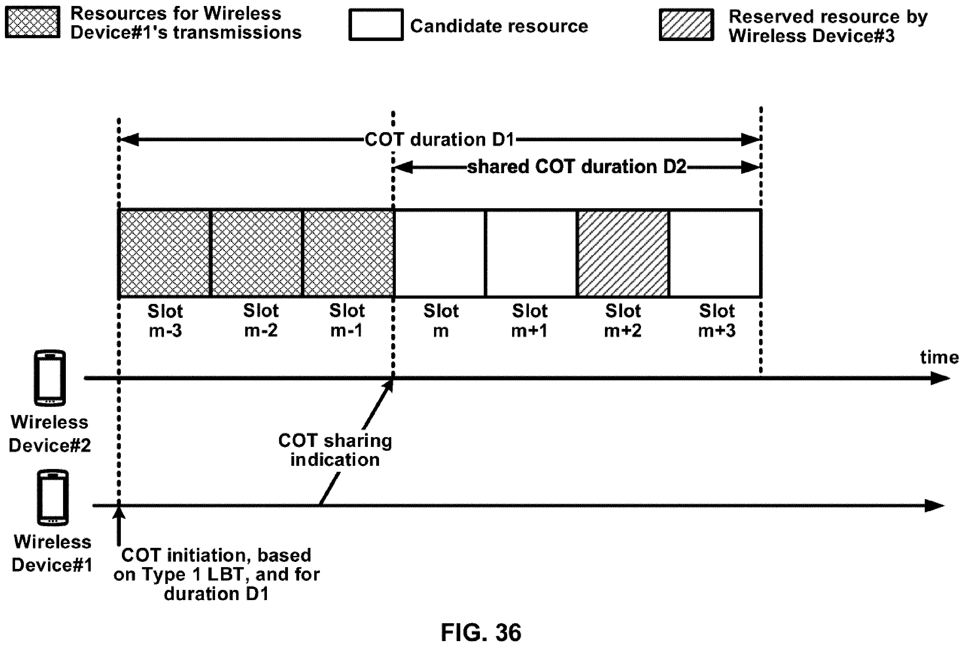

FIG. 36 shows an example of wireless-device-to-wireless-device (e.g., UE-to-UE) COT sharing in SL-U. A first wireless device (e.g., wireless device#1) may initiate a COT, for example, based on a successful Type 1 LBT (performed before slot m-3) and for a duration of D1 (e.g., D1=7 slots). The COT may comprise a duration of D1=7 slots starting from slot m-1 and ending at the end of slot m+3. The first wireless device may determine the duration of the COT based on the corresponding MCOT, for example, D1=<MCOT duration. The first wireless device may use the first three resources/slots within the COT, for example, in slot m-3 and slot m-2 and slot m-1. The first wireless device may determine to share the COT, for example, the remainder duration of the COT, with a second wireless device (e.g., wireless device#2). For example, the first wireless device may be expecting one or more transmissions from the second wireless device.

A first wireless device (e.g., wireless device#1) may send (e.g., transmit) a signal (e.g., SCI/MAC-CE), to a second wireless device (e.g., wireless device#2). The signal may comprise a COT sharing indication/information. For example, the signal may indicate COT sharing information for the second wireless device. The COT sharing indication/information may indicate a location (e.g., starting time/point and/or ending time/point) and/or duration of a shared COT (e.g., portion/duration of the COT that is shared with the second wireless device). For example (e.g., as shown in FIG. 36), the shared COT starts at the first symbol of slot m, and its duration, D2, is 4 slots (D2=4). For example, the second wireless device may determine a starting time/point of the shared COT, based on the COT sharing indication, to be at the first symbol of slot m. For example, the COT sharing indication may comprise a field indicating an offset (e.g., time/slot/symbol offset), and the offset may be from the slot/symbol of receiving the COT sharing indication to the starting time of the shared COT. The second wireless device may determine (a location of) the shared COT, for example, based on the COT sharing indication, to be over slot m, slot m+1, slot m+2, and slot m+3. For example, the second wireless device may have selected and/or indicated reservation of resources in slot m, slot m+1, slot m+2, and slot m+3. The second wireless device may determine, for example, based on starting time/location and/or duration indicated by the COT sharing information, that the shared COT expires/ends at the end of slot m+3.

A second wireless device (e.g., wireless device#2) may determine a reservation of a resource (e.g., in slot m+2), for example, based on its sensing results. For example, the second wireless device may detect SCI from a third wireless device (e.g., wireless device#3) indicating reservation of the resource in slot m+2. For example, the reservation may indicate a higher PHY priority than the second wireless device's intended transmission in slot m+2. Based on at least some wireless communications, the second wireless device may pre-empt/exclude and/or not send (e.g., transmit) via slot m+2. This results in a long gap (e.g., multiple symbols, one or more slots) or an interruption or early termination of the COT/shared COT caused by the third wireless device in slot m+2. For example, based on the regulation of unlicensed spectrum, the second wireless device may send (e.g., transmit) a transmission in slot m or slot m+1 based on a first type of (e.g., Type 2/2A/2B/2C) LBT or channel access procedure. The second wireless device may send (e.g., transmit) a transmission in slot m+3 based on a second type of (e.g., Type 1) LBT or channel access procedure, for example, due to the gap in slot m+2. The shared COT may be lost due to the time gap/discontinuity. This problem occurs in sidelink because of the hidden node issue, for example, because COT initiator wireless device (e.g., wireless device#1), as opposed to a base station in Uu operation, is not aware of time/frequency resources that are available to the COT sharing wireless device (e.g., wireless device#2), based on its own local sensing results. Thus, resources within the shared COT may not be proper/available resources for the COT sharing wireless device's transmissions. The shared COT may be/become invalid, for example, because of such collisions (overlaps of the COT with reserved resources).

Consequences of hidden node issue for COT sharing in sidelink unlicensed operation may comprise interruption or early termination/expiration of a COT/shared COT. Thus, COT sharing in SL-U may face practical barriers that result in significant shortcoming of COT sharing benefits. It may be impossible for a wireless device to use a shared COT, for example, due to hidden node issue. To increase channel access opportunities and/or to achieve full benefits of COT sharing in a shared spectrum operation, enhanced COT sharing in SL-U may be performed as described herein.

A COT initiator wireless device may decide to use the remainder of the COT duration, for example, after the shared COT duration, for its own transmission (e.g., switching point, where the ownership of the COT is returned from the COT sharing wireless device to the COT initiator wireless device). If the COT is interrupted due to a hidden node reservation, the COT initiator wireless device may not know it, and may perform Type 2 LBT/channel access procedure, assuming transmissions are within the COT. This may be against the regulations of unlicensed spectrum. For example (e.g., as shown in FIG. 36), none of wireless device#1 or wireless device#2 is using the channel in slot m+2, and a Wi-Fi node or NR-U/LAA wireless device may start their transmission in slot m+2. To be fair to that Wi-Fi node or NR-U/LAA wireless device, an SL-U wireless device must perform Type 1 LBT/channel access procedure after the gap in slot m+2.

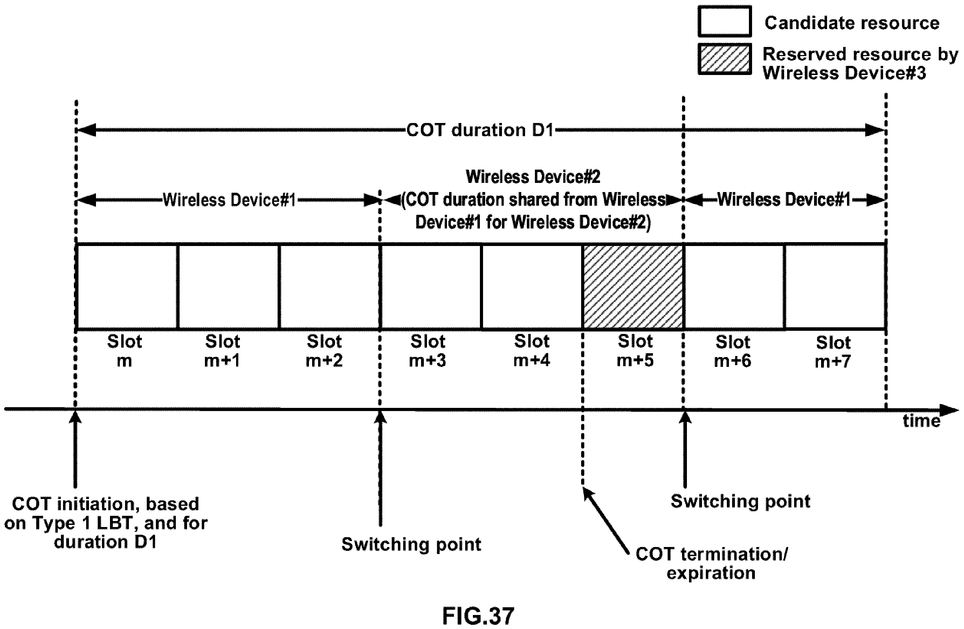

FIG. 37 shows an example of COT sharing in SL-U with multiple switching points. A first wireless device (e.g., wireless device#1) may initiate a COT based on Type 1 LBT and for duration D1 (D1=8 slots). The first wireless device may use a first portion of the COT (e.g., slots m to m+2), and may share a portion of the remainder of the COT (e.g., slots m+3 to m+5) with a second wireless device (e.g., wireless device#2) for the second wireless device's transmissions. For example, a first switching point of the COT may be at the boundary of slot m+2 and slot m+3. The first wireless device may use the rest/remainder of the COT after the shared portion (e.g., slot m+6 and slot m+7) by itself. For example, a second switching point of the COT may be at the boundary of slot m+5 and slot m+6. The second wireless device may detect a resource reservation by a third wireless device (e.g., wireless device#3) for the resource in slot m+5. The second wireless device may pre-empt/exclude/not send (e.g., transmit) via slot m+5. The COT may be terminated/expired, for example, before the beginning of slot m+5, due to the detected interruption. Based on at least some wireless communications, the first wireless device may continue sending (e.g., transmitting) in slot m+6 and slot m+7 using Type 2 LBT, assuming they are within the COT duration. This may be against regulations of unlicensed spectrum, as described herein.

A COT initiator wireless device may decide to share the remainder of the COT duration with a fourth wireless device, for example, after a first duration shared with a second wireless device. This may be multi-wireless-device COT sharing (e.g., the ownership of the COT is transferred from the second wireless device to the fourth wireless device). If the COT is interrupted, the fourth wireless device may not know it (e.g., the reservation may be by a wireless device that is hidden from the fourth wireless device) and may perform Type 2 LBT/channel access procedure, assuming transmissions are within the COT. This may be against the regulations of unlicensed spectrum. For example, a Wi-Fi node or NR-U/LAA wireless device may start their transmission during the interruption/gap, and to be fair to that Wi-Fi node or NR-U/LAA wireless device, the fourth wireless device must perform Type 1 LBT/channel access procedure after the gap in slot m+2.

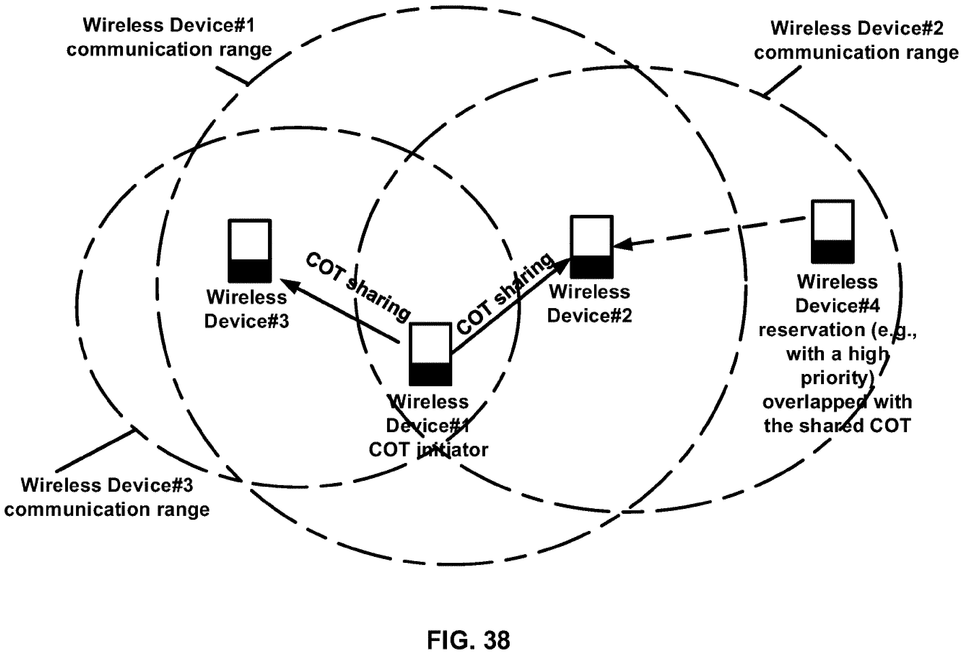

FIG. 38 shows an example of hidden node issue in sidelink operation in unlicensed spectrum. A first wireless device (e.g., wireless device#1, the COT initiator wireless device) shares a COT with a second wireless device (e.g., wireless device#2) and a third wireless device (e.g., wireless device#3). For example, a first wireless device (e.g., wireless device#1) may send (e.g., transmit) a first signal/message (e.g., SCI and/or MAC-CE) to a second wireless device (e.g., wireless device#2) (e.g., a unicast signal/message). The signal/message may comprise a first COT sharing information. The first COT sharing information may indicate a first portion of a COT duration shared with the second wireless device (e.g., wireless device#2), for example, as a first shared COT for the second wireless device. For example, the first wireless device (e.g., wireless device# 1) may send (e.g., transmit) a second signal/message (e.g., SCI and/or MAC-CE) to a third wireless device (e.g., wireless device#3) (e.g., a unicast signal/message). The signal/message may comprise a second COT sharing information. The second COT sharing information may indicate a second portion of the COT duration shared with the third wireless device (e.g., wireless device#3), for example, as a second shared COT for the third wireless device. For example, the first shared COT and the second shared COT may be disjoint (e.g., may not overlap) and/or may be contiguous (e.g., no gap above a threshold (16us or 25 us) between the two shared COTs). The first shared COT may be followed by the second shared COT. The second shared COT may be/start after the first shared COT. The first shared COT and the second shared COT may both be subsets of the (same) COT initiated by the first wireless device (e.g., wireless device#1). The first wireless device (e.g., wireless device#1) may send (e.g., transmit) a multicast/groupcast/broadcast message/signal (e.g., SCI and/or MAC-CE) to the second wireless device (e.g., wireless device#2) and the third wireless device (e.g., wireless device#3), indicating the first portion/shared COT and/or the second portion/shared COT for the second wireless device and the third wireless device, respectively.

A fourth wireless device (e.g., wireless device#4) may be within the communication/sensing range of the second wireless device (e.g., wireless device#2), but not within the communication/sensing range of the first wireless device (e.g., wireless device#1) and/or the third wireless device (e.g., wireless device#3). For example, the fourth wireless device may be a hidden node to the first wireless device and the third wireless device. The second wireless device (e.g., wireless device#2) may detect a resource reservation, by the fourth wireless device (e.g., wireless device#4), that overlaps with the first portion/shared COT shared with the second wireless device. The second wireless device (e.g., wireless device#2) may preemp/exclude and/or not send (e.g., transmit) via the resource, within the COT, that is/overlaps with the reserved resource of the fourth wireless device (e.g., wireless device#4), and the COT may be interrupted/lost due to the gap. The third wireless device (e.g., wireless device#3), not able to detect the fourth wireless device reservation and unaware of the COT termination, may assume the shared COT is valid/available and send (e.g., transmit) transmissions using a Type 2 LBT.

In at least some wireless communications, this hidden node issue may lead to significant shortcomings of COT due to interruption/early termination/expiration, and/or confusions about the ending point/time of the COT. The at least some wireless communications may fail to avoid the above situations with UE-to-UE COT sharing in SL-U operations. Examples propose solutions that help to prevent above problem resulted from hidden node(s). Using coordination or assistance information signaling, examples provide solutions that enable enhanced COT sharing that avoids interruption by hidden node(s).

A wireless device may communicate with one or more (other) wireless devices, for example, by using sidelink resources for sidelink transmissions. A wireless device may access a channel for a time period and may share the time period with one or more other wireless devices. To avoid collision and improve efficiency, the wireless device may request for assistance information from candidate wireless devices, and may determine, based on the assistance information, whether and/or how to share with one or more of the candidate wireless devices. For example, a COT initiator wireless device, for example, before initiating the COT and/or before sharing the COT, may send (e.g., transmit) a request of COT assistance information (e.g., COT assistance information (AI) request) to one or more wireless devices. The one or more wireless devices may or may not be intended/candidate recipient wireless devices of COT sharing. The COT assistance information request may trigger a wireless device procedure for determining a set of time and/or frequency resources for the COT initiator wireless device. The COT assistance information request may trigger a wireless device procedure for determining a set of preferred or non-preferred time/frequency resources for the COT initiator wireless device's COT initiation/sharing/determination.

A COT assistance information (AI) request may indicate a time interval (e.g., a reference duration and/or a selection window) as a reference for determining the COT AI. For example, a responding/coordinator wireless device may determine the set of time/frequency resources for COT AI within the duration of the indicated time interval. For example, the COT initiator wireless device may determine the COT and/or shared portion of the COT, based on the received COT AI, and within the indicated time interval. The COT AI request may comprise a field indicating a priority value or a priority of the COT, for example, as a reference priority for determining the set of resources for the COT AI. The responding/coordinator wireless device may determine the set of time/frequency resources for COT AI, for example, based on the indicated priority of the COT. The COT initiator wireless device may initiate the COT, for example, based on the indicated priority and the received set of resources indicated by the COT AI.

A second wireless device receiving the COT AI request may be an intended/candidate COT sharing wireless device (e.g., the COT initiator wireless device may determine to share the COT with the second wireless device, for example, based on the received COT AI). The COT AI request may be addressed to the second wireless device. For example, the destination ID indicated by the message/SCI/MAC-CE comprising the COT AI request may match the second wireless device's destination ID. The second wireless device may be a responding wireless device and/or a COT coordinator wireless device.

The set of time/frequency resources may comprise one or more resources (e.g., single-slot or multi-slot or mini-slot-based resources). The one or more resources may be preferred resources of the responding wireless device for sharing the COT. The COT initiator wireless device may determine a portion/location/stating/duration/end of the shared COT to be shared with this wireless device, for example, based on the received COT AI indicating the one or more resources. For example, the portion/duration of the COT shared with the responding wireless device may comprise at least one resource from the one or more preferred resources indicated by the COT AI. The one or more resources may be non-preferred resources of the responding wireless device for sharing the COT. For example, the COT initiator wireless device may determine a portion/location/stating/duration/end of the shared COT to be shared with this wireless device, for example, based on the received COT AI indicating the one or more resources. For example, the portion/duration of the COT shared with the responding/coordinator wireless device may exclude/not comprise any resource of the one or more non-preferred resources indicated by the COT AI. The set of time/frequency resources may comprise one or more candidate resource for COT sharing, for example, such that the shared portion/duration of the COT comprises/includes at least one resource from the set. The COT assistance information may be/comprise the inter-wireless-device coordination information.

A COT AI request may indicate multiple candidate COTs or time intervals. The candidate COTs or time intervals may be portions of a COT (e.g., of a same COT) to be shared, for example, with the responding/coordinator wireless device. The COT may be shared with a different wireless device. The COT may not be shared. For example, the candidate COTs or time intervals may be different COTs that the COT initiator wireless device can/intend to initiate. The responding/coordinating/coordinator wireless device may determine a preferred/non-preferred COT or time interval from among the multiple candidate COTs or time intervals indicated. For example, the responding/coordinator wireless device may select one of the multiple candidate COTs or time intervals indicated. The responding/coordinator wireless device may send/provide the COT AI indicating the determined selected candidate COT or time interval.

A COT AI request may indicate one or more candidate locations/starting times/ending times/durations for a COT, for example, a shared COT. The responding/coordinator wireless device may determine at least one of the one or more candidate locations/starting times/ending times/durations as a preferred/non-preferred candidate COT. The responding/coordinator wireless device may send/provide the COT AI indicating the at least one of the one or more candidate locations/starting times/ending times/durations as a preferred/non-preferred candidate COT.

A COT AI request may indicate a time interval (e.g., a reference/selection window) for determining a candidate COT/shared COT. The responding/coordinator wireless device may determine one or more preferred/non-preferred location and/or starting time and/or ending time and/or duration of the candidate COT, for example, such that the candidate COT is within the indicated time interval. The responding/coordinator wireless device may send/provide the COT AI indicating the candidate COT.

The COT initiator wireless device may determine the COT and/or the shared portion of the COT and/or the COT sharing/recipient wireless device such that no collision happens to/within the shared COT and/or the COT is not interrupted by a hidden node. The COT initiator wireless device may collect one or more COT AIs, for example, from one or more responding/coordinator wireless devices, indicating their local sensing information. The COT initiator wireless device may, for example, based on the received COT AIs, estimate/determine available time and/or frequency domain resources that are suitable for COT and/or for COT sharing, by avoiding reserved resources reported/indicated/provided by the responding/coordinator wireless device(s). Maximal spatial and spectral efficiency of the unlicensed spectrum utilization in sidelink system may be achieved by avoiding COT interruption and early COT termination. Through enhanced COT determination and enhanced COT sharing, COT durations may be preserved and simultaneous transmission of wireless devices by sharing and accessing a COT may be allowed, which may help to reduce system level collision and increase spatial efficiency of the sidelink system.

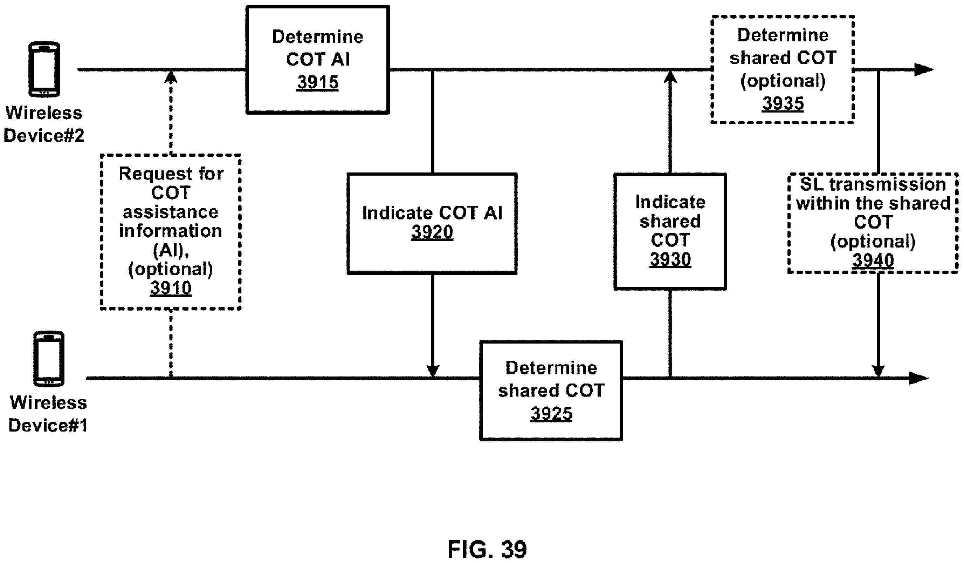

FIG. 39 shows an example of COT assistance information (AI) signaling between two wireless devices in SL-U. A first wireless device (e.g., wireless device#1) may (optionally) send (e.g., transmit) a first message/signal to a second wireless device (e.g., wireless device#2) via sidelink, for example, as indicated in step 3910. The first message/signal may be a control message/signal (e.g., SCI and/or MAC-CE). The first message/signal may comprise a COT AI request. The first message/signal may indicate a request for providing a COT AI. For example, an RRC message, received from a base station or another wireless device, may comprise a parameter indicating that the explicit COT AI request is enabled.

A first wireless device (e.g., wireless device#1) may be COT initiator wireless device. For example, the first wireless device may intend to initiate and/or share a COT, for example, with a second wireless device (e.g., wireless device#2).

The first message/signal (e.g., the request for COT AI) may comprise a field indicating a first time interval. The first time interval may be a reference sensing window or a resource selection window or a COT AI window. For example, the first message/signal may indicate a location, in time domain and/or frequency domain, of the first time interval.

The first message/signal may comprise one or more first fields indicating a starting time and/or ending time and/or duration in time domain for the location of the first time interval in time domain. For example, a first field (e.g., a 'COT AI window location' field) may indicate a starting time/starting time location and an ending time/ending time location of the first time interval. The first field may indicate a first frame number (e.g., a direct frame number (DFN)) and/or a first slot/mini-slot/multi-slot and/or a first symbol for the starting time/starting time location of the first interval. For example, the starting time location may be encoded as a combination of a first frame number index (e.g., a direct frame number (DFN)) and a first slot/mini-slot/multi-slot index and/or a first symbol index. The first field (or a second field of the first signal/message indicating the COT AI request) may indicate a second frame number and/or a second slot/mini-slot/multi-slot and/or second symbol for the ending time/ending time location of the first interval. For example, the ending time location may be encoded as a combination of a second frame number index (e.g., DFN) and a second slot/mini-slot/multi-slot index and/or a second symbol index. The starting time location and the ending time location of the first time interval may be encoded and concatenated in a field. For example, the first field may comprise a concatenation of the starting time/starting time location and the ending time/ending time location of the first time interval.

The first message/signal (e.g., the COT AL request) may comprise another first field indicating a duration of the first time interval (window). For example, the second field may indicate a first number of consecutive slots/mini-slots/multi-slots (e.g., logical slot or SL slots) and/or a second number of consecutive symbols (e.g., logical symbols or SL symbols and/or UL symbols and/or flexible symbols) for the duration of the first time interval. For example, the duration may start from the indicated starting time location. For example, the duration may start from/based on a slot/mini-slot/multi-slot and/or symbol where the COT AI request is detected.

The first message/signal may comprise one or more second fields indicating a starting subchannel/PRB/interlace/subband and/or a number of subchannels/PRBs/interlaces/subbands (e.g., consecutive subchannels/PRBs/interlaces/subbands) for the location of the first time interval in frequency domain. The first message/signal (e.g., the COT AI request) may comprise a third field indicating a priority of/associated with the COT AI (e.g., the priority of a COT to be initiated/shared based on the COT AI). The first message/signal (e.g., the COT AI request) may comprise a fourth field indicating a periodicity of/associated with the COT AI (e.g., the periodicity of a COT to be initiated/shared based on the COT AI).

A first wireless device (e.g., wireless device#1) may not send (e.g., transmit) the first message/signal (e.g., no explicit request). For example, an RRC message, received from abase station or another wireless device, may comprise a parameter indicating that the explicit COT AI request is disabled.

Sidelink configuration parameters may indicate that COT AI procedure (e.g., COT assistance) triggered by an explicit request is enabled (e.g., via *sl-COTAI-Explicit=enabled*). A first wireless device (e.g., wireless device#1) may send/transmit, to a second wireless device (e.g., wireless device#2) and via sidelink, a request message, for the requesting of the COT AI to trigger the COT AI procedure. For example, the first wireless device may send (e.g., transmit) a control signal (e.g., SCI or SCI format 2-C or 2-D and/or MAC-CE), comprising a COT AI request, to the second wireless device. The second wireless device may trigger the COT AI procedure, for example, based on receiving the request message from the first wireless device. The first wireless device may not send (e.g., transmit) a request message to trigger the COT AI. For example, the sidelink configuration parameters may indicate that COT AI triggered by an explicit request is disabled (e.g., via *sl-COTAI-Explicit-disabled*). The second wireless device may trigger the COT AI procedure, for example, based on an event and/or condition. For example, the sidelink configuration parameters may indicate that COT AI triggered by a condition is enabled (e.g., via sl-COTAI-Condition=enabled), for example, other than/independent of the explicit request reception

A first wireless device (e.g., wireless device#1) may broadcast/groupcast/multicast the COT AI request to multiple wireless devices. The COT AI request may be sent (e.g., transmitted) to one or more wireless devices via unicast signaling. The first wireless device may collect COT AI received from the one or more wireless devices to determine a COT location/duration and/or to determine a location/duration of a shared COT, for example, for a specific wireless device or group of wireless devices. The first wireless device may collect COT AI received from the one or more wireless devices to determine a COT-sharing wireless device (e.g., a sharee or a COT sharing recipient) of a first shared COT.

A first wireless device (e.g., wireless device#1) may send (e.g., transmit) an uplink signal/message (e.g., a UCI and/or MAC-CE) to a base station indicating the COT AI request, for example, in SL RA mode 1. For example, the base station may forward the COT AI request to the second wireless device. The base station may provide the COT AI to the first EU, for example, based on (e.g., in response to) receiving the uplink signa/message comprising the COT AI request.

A second wireless device (e.g., wireless device#2) may detect SCI, for example, from a first wireless device (e.g., wireless device#1). The SCI may comprise a COT AI request. The SCI may schedule a MAC-CE comprising the COT AI request. The second wireless device may trigger the COT assistance or the COT AI procedure, for example, based on (e.g., in response to) receiving/detecting the COT AI request from the first wireless device, or based on (e.g., in response to) determining an event or condition triggering the COT assistance/COT AI procedure. The event or condition triggering may comprise a periodic trigger. For example, the sidelink configuration parameters may comprise a periodicity for triggering COT AI procedure. A MAC-CE from the base station or a wireless device may activate the COT AI procedure, for example, if the periodic COT AI is configured. The event or condition triggering may comprise determining a transmission (e.g., transport block and/or CSI-RS/CSI report and/or control information e.g., HARQ feedback and/or conflict information) for the first wireless device, which triggers COT sharing. For example, the second wireless device may determine that the destination ID of the transmission matches the destination ID of the first wireless device. The second wireless device may trigger COT AI procedure for the first wireless device. The trigger event/condition may comprise receiving a COT sharing indication from the first wireless device and/or a third wireless device and/or a base station. The second wireless device may receive a message/signal (e.g., DCI and/or MAC-CE) from the base station indicating a trigger of the COT AI for the first wireless device. The trigger even/condition may comprise determining a measurement (e.g., RSRP/CBR/LBT success or failure ratio/RSSI, or time/TA, etc....) falling below or going above a threshold (e.g., a pre-defined or pre-configured threshold).

A second wireless device (e.g., wireless device#2) may determine the COT AI (e.g., step 3915), for example, if the COT AI procedure is triggered. For example, the second wireless device may detect/receive SCI comprising a COT AI request. For example, the second wireless device may detect/receive SCI scheduling a MAC-CE comprising the COT AI request. For example, the second wireless device may receive DCI/MAC-CE from the base station indicating the COT AI request. For example, the second wireless device may detect/determine a first event/condition triggering the COT AI procedure.

A second wireless device (e.g., wireless device#2) may determine the first time interval (e.g., the reference sensing window or a resource selection window or a COT AI window), for example, based on the received COT AI request and/or based on one or more sidelink configuration parameters indicated by an RRC message (e.g., a pre-defined/pre-configured/provided duration for the first time interval and/or a starting time, for example, a periodic starting time for the first time interval). The second wireless device may determine the starting time (e.g., starting time location), of the first time interval, comprising frame number and/or slot/mini-slot/multi-slot/symbol number of the starting time. The second wireless device may determine the ending time (e.g., ending time location), of the first time interval, comprising frame number and/or slot/mini-slot/multi-slot/symbol number of the ending time. The second wireless device may determine the duration of the first time interval, comprising one or more frames and/or slots/mini-slots/multi-slots/symbols and/or milli/micro second. For example, the COT AI request may indicate a number/quantity of frames and/or slots/mini-slots/multi-slots/symbols for the duration of the first time interval.

A second wireless device (e.g., wireless device#2) may determine one or more subchannels/interlaces/PRBs of one or more resource pools for the first time interval (window), for example, based on the received COT AI request and/or based on one or more sidelink configuration parameters indicated by an RRC message (e.g., a pre-defined/pre-configured/provided number of subchannels/interlaces/PRBs for the first time interval and/or a starting subchannel/interlace/PRB for the first time interval).

A first time interval may comprise a first set of resource, for example, time domain and frequency domain (time/frequency) resources, for sidelink transmissions. For example, the first time interval may comprise a set of slot-mini-slot/multi-slot-based resources across a first subchannel/subband/interlace/RB set. For example, the time domain resources may be/comprise single-slot resources, and/or mini-slot resources and/or multi-slot resources/transmission occasions. The resources may be/comprise one (or more) transmission occasions, for example, sidelink transmission occasions. The transmission occasions may be PSSCH transmission occasions and/or PSCCH transmission occasions and/or PSFCH transmission occasions and/or S-SSB transmission occasions.

A transmission occasion/resource, for example, for PSCCH/PSSCH transmission, may be slot based (e.g., comprising 12 or 13 or 14 symbols of a slot). For example, a slot may comprise one transmission occasion/resource. A transmission occasion/resource, for example, for PSCCH/PSSCH transmission, may be mini-slot based (e.g., comprising 6 or 7 symbols of a slot). For example, a slot may comprise two or more transmission occasions/resources. A transmission occasion/resource, for example, for PSCCH/PSSCH transmission, may be multi-slot based (e.g., comprising 2 or 4 or 8 slots).

A second wireless device (e.g., wireless device#2) may determine the first set of resources/transmission occasions within the indicated/provided first time interval for determining the COT AI. The first time interval may comprise the intended/candidate/potential COT or shared COT.

A second wireless device (e.g., wireless device#2) may determine the COT AI, for example, based on (e.g., in response to) triggering the COT AI procedure. For example, the second wireless device may determine a second set of resources from the first set of resources within the first time interval. The COT AI may comprise at least one resource of the second set of resources. The second set of resources may comprise one or more second resources, from the first set of resources. The second wireless device may determine the one or more second resources based on its sensing results/information.

The COT AI procedure may be/comprise/trigger the inter-wireless-device coordination process. The second wireless device may determine/select a subset of the indicated resources (e.g., the first set) as preferred or non-preferred or conflicting resources for a COT/shared COT.

A second wireless device (e.g., wireless device#2) may determine a second set of resources, comprising one or more second resources, within the first time interval, for the COT AI. The one or more second resources may be time/frequency resource for sidelink transmission occasions. The second set of resources may be a subset of the first set of resources, and the first time interval may comprise the first set of resources. The first set of resources may be referred to as candidate set of resources, and/or the resources of the first set (e.g., all resources within the first time interval) may be referred to as candidate resources. For example, the first wireless device (the COT initiator wireless device) may request the COT AI to determine a location and/or duration of a COT and/or a shared portion of a COT based on the COT AI. For example, the first wireless device may be able to determine best/available resources, among the candidate resources of the first set within the first time interval, for a COT (e.g., a COT to be shared with a second wireless device), for example, based on one or more received COT AIs (e.g., including a first COT AI received from the second wireless device).

A COT AI may indicate the second wireless device's sensing results about/related to the (candidate) resources of the first set. For example, based on the second wireless device's sensing results, the second wireless device may determine one or more second resources, of the candidate resources of the first set, that are good/available/preferred resources for the second wireless device. For example, the second wireless device may not expect any interference in the one or more second resources, and/or the second wireless device may not detect any resource reservation of the one or more second resources. For example, based on the second wireless device's sensing information, no third wireless device has reserved any of the one or more second resources. The COT AI request may indicate, for example, by a flag/field, that good/available/preferred resources are requested. The determination of resource reservation, by the second wireless device, may be based on RSRP measurement of SCI received from a third wireless device, and comparing it with a RSRP threshold, wherein the RSRP threshold may be a function of a first priority in the SCI, and a second priority. The second priority may be the priority of the (intended) COT/COT AI, for example, indicated by the COT AI request. The second priority may be the priority of an intended transmission by the second wireless device within the (intended) COT/shared COT.

The second wireless device may determine that the first resource is good/available/preferred resource, for example, if the second wireless device detects SCI, with a RSRP below the corresponding RSRP threshold, indicating reservation of a first resource of the first set of resources. The second wireless device may include the first resource in the second set of resources. The second wireless device may determine that the first resource is not a good/available/preferred resource, for example, if the second wireless device detects SCI, with a RSRP above the corresponding RSRP threshold, indicating reservation of a first resource of the first set of resources. The second wireless device may exclude the first resource from the second set of resources.

The second wireless device may determine that the first resource is good/available/preferred resource, for example, if the second wireless device detects SCI, for example, with a RSRP above the corresponding RSRP threshold, indicating reservation of a first resource of the first set of resources, and/or if the first priority indicated by the SCI is lower than the second priority (e.g., of the COT/COT AI). The second wireless device may include the first resource in the second set of resources. The second wireless device may determine that the first resource is not good/available/preferred resource, for example, if the second wireless device detects SCI, for example, with a RSRP above the corresponding RSRP threshold, indicating reservation of a first resource of the first set of resources, and/or if the first priority indicated by the SCI is higher than the second priority (e.g., of the COT/COT AI). The second wireless device may exclude the first resource from the second set of resources.

The second wireless device may receive a second signal/message (e.g., a second SCI and/or second MAC) indicating a first COT with a first priority. The second wireless device may determine the location and the duration of the first COT, for example, based on the second signal/message. The second wireless device may determine that the duration of the first COT overlaps with one or more second resources of the first set. The second wireless device may determine that the one or more second resources are good/available/preferred resources, for example, if the first priority of the detected COT/second signal is lower than the second priority (e.g., of the COT indicated by the COT AI). The second wireless device may include the one or more second resources in the second set of resources. The second wireless device may determine that the one or more second resources are not good/available/preferred resources, for example, if the first priority of the detected COT/second signal is higher than the second priority (e.g., of the COT indicated by the COT AI). The second wireless device may exclude the one or more second resources from the second set of resources. The second wireless device may be the intended receiver of the second signal/message. The second wireless device may determine that the first COT is shared with the second wireless device.

A COT AI may indicate the second wireless device's sensing results about/related to the (candidate) resources of the first set. For example, based on the second wireless device's sensing results, the second wireless device may determine one or more second resources, of the candidate resources of the first set, that are bad/unavailable/non-preferred resources for the second wireless device. For example, the second wireless device may expect interference in the one or more second resources, and/or the second wireless device may detect resource reservation of the one or more second resources. For example, based on the second wireless device's sensing information, a third wireless device may have reserved the one or more second resources. The COT AI request may indicate, for example, by a flag/field, that bad/unavailable/non-preferred resources are requested. The determination of resource reservation, by the second wireless device, may be based on RSRP measurement of SCI received from a third wireless device, and comparing it with a RSRP threshold, wherein the RSRP threshold may be a function of a first priority in the SCI, and a second priority. The second priority may be the priority of the (intended) COT/COT AI, for example, indicated by the COT AI request. The second priority may be the priority of an intended transmission by the second wireless device within the (intended) COT/shared COT.

The second wireless device may determine that the first resource is not a bad/unavailable/non-preferred resource, for example, if the second wireless device detects SCI, with a RSRP below the corresponding RSRP threshold, indicating reservation of a first resource of the first set of resources. The second wireless device may exclude the first resource from the second set of resources, to be reported/provided in the COT AI. The second wireless device may determine that the first resource is a bad/unavailable/non-preferred resource, for example, if the second wireless device detects SCI, with a RSRP above the corresponding RSRP threshold, indicating reservation of a first resource of the first set of resources. The second wireless device may include the first resource in the second set of resources.

The second wireless device may determine that the first resource is not a bad/unavailable/non-preferred resource, for example, if the second wireless device detects SCI, for example, with a RSRP above the corresponding RSRP threshold, indicating reservation of a first resource of the first set of resources, and/or if the first priority indicated by the SCI is lower than the second priority (e.g., of the COT/COT AI). The second wireless device may exclude the first resource from the second set of resources. The second wireless device may determine that the first resource is a bad/unavailable/non-preferred resource, for example, if the second wireless device detects SCI, for example, with a RSRP above the corresponding RSRP threshold, indicating reservation of a first resource of the first set of resources, and/or if the first priority indicated by the SCI is higher than the second priority (e.g., of the COT/COT AI). The second wireless device may include the first resource in the second set of resources.

The second wireless device may receive a second signal/message (e.g., second SCI and/or second MAC) indicating a first COT with a first priority. The second wireless device may determine the location and the duration of the first COT based on the second signal/message. The second wireless device may determine that the duration of the first COT overlaps with one or more second resources of the first set. The second wireless device may determine that the one or more second resources are not bad/unavailable/non-preferred resources, for example, if the first priority of the detected COT/second signal is lower than the second priority (e.g., of the COT indicated by the COT AI). The second wireless device may exclude the one or more second resources from the second set of resources. The second wireless device may determine that the one or more second resources are bad/unavailable/non-preferred resources, for example, if the first priority of the detected COT/second signal is higher than the second priority (e.g., of the COT indicated by the COT AI). The second wireless device may include the one or more second resources in the second set of resources. The second wireless device may be the intended receiver of the second signal/message. The second wireless device may determine that the first COT is shared with the second wireless device.

A COT AI request may indicate a priority of a COT. The COT may be an intended COT, for example, a wireless device sending the COT AI request, may intend to initiate the COT based on the received COT AI. The COT may be an intended shared COT, for example, the wireless device sending the COT AI request or the COT initiator wireless device, may intend to share a portion of the initiated COT with a second wireless device or a third wireless device. The COT AI request may indicate the intended wireless devices with which the COT is/may be shared. Only the one or more intended wireless devices with which the COT is/may be shared (e.g., CTO recipient/sharee/responder) may respond/provide the COT AI, for example, if the COT AI is multicast or broadcast. The COT AI request may indicate a priority of the COT.

An RRC message may configure the priority of a COT, for example, for a resource pool/BWP/carrier. The COT initiator wireless device may determine the priority of the COT based on a first priority of a first transmission (e.g., SL or UL transmission) with which the COT is initiated. For example, the COT initiator wireless device may perform a Type 1 LBT/channel access procedure, to send (e.g., transmit) the first transmission with the first priority. For example, the CAPC of the Type 1 LBT/channel access procedure may be based on the first priority or vice versa. The COT initiator wireless device may determine the first priority to be a maximum/minimum of priorities (e.g., priority values) of multiple transmissions within the COT. For example, the COT initiator wireless device may initiate the COT for a bust of transmissions (e.g., SL and/or UL) comprising the multiple transmissions within the COT. The COT initiator wireless device may indicate the first priority of the COT in the COT AI and/or in the COT sharing indication. For example, a responding wireless device may determine the COT AI based on the first priority of the COT. A COT sharing wireless device (sharee) may send (e.g., transmit) a first transmission within the shared duration of the COT, only if the second priority of the first transmission is higher than the first priority of the COT. A COT sharing wireless device (sharee) may send (e.g., transmit) a first transmission within the shared duration of the COT only if the second priority of the first transmission is lower than the first priority of the COT.

The second wireless device may determine the first time interval based on one or more pre-defined/pre-configured parameters and/or one or more rules, for example, if the COT AI is triggered but COT AI request is received and/or if the COT AI request does not indicate a first time interval (e.g., the COT AI window). For example, a first duration (e.g., a number/quantity of time slots/mini-slots/multi-slots and/or symbols and/or seconds/milli seconds/micro seconds) may be pre-defined or configured by sidelink RRC configuration parameters for the COT AI window (the first time interval). A time offset (e.g., a number of time slots/mini-slots/multi-slots and/or symbols and/or seconds/milli seconds/micro seconds) may be pre-defined or configured by sidelink RRC configuration parameters for starting the COT AI window (the first time interval). For example, the second wireless device may apply/use the time offset to/for a time instance/slot (e.g., a first/last symbol of the slot) where the COT AI is triggered (e.g., where the COT AI request is received and/or triggering condition/event is met and/or at the COT AI period). The second wireless device may perform the COT AI procedure based on the indicated/determined COT AI window (the first time interval).

The second wireless device may trigger a procedure for determining the second set of preferred or non-preferred resources for the first wireless device's COT or COT sharing, for example, based on (e.g., in response to) the triggering the COT AI procedure (e.g., based on an explicit request and/or one or more conditions being met). The second wireless device may determine a resource selection window, for example, based on the first time interval, within which the preferred or non-preferred resources are to be determined for the COT AI.

A COT AI request may comprise a field/flag indicating a COT AI set type. For example, the COT AI set type may comprise a preferred set type and a non-preferred (or conflicting) set type. The second wireless device may trigger a procedure for determining preferred set COT AI (e.g., preferred resource set), for example, if the COT AI request indicates, via the resource set type, preferred set is requested. The second wireless device may trigger a procedure for determining non-preferred set COT AI (e.g., non-preferred resource set), for example, if the COA AI request indicates, via the resource set type, non-preferred set is requested.

The second wireless device may, for example, when determining a preferred resource set (e.g., if the resource set type indicates preferred set for COT AI), perform wireless device procedure for determining the subset of resources, within the first time interval, to be reported to higher layers in PSSCH resource selection in sidelink resource allocation mode 2 (e.g., resource selection procedure), for example, based on the resource selection window. The second wireless device may determine the resource selection window based on the first time interval. For example, the resource selection window may be the first time interval, for example, indicated by the COT AI request. The second wireless device may exclude candidate resource(s) belonging to slot(s)/mini-slots/multi-slots where the second wireless device does not expect to perform SL reception of a TB due to half-duplex operation.

The second wireless device may, for example, when determining a non-preferred resource set (e.g., if the resource set type indicates non-preferred set for COT AI), consider any resource(s) within the resource selection window (or the first time interval), if indicated by a received explicit request, and satisfying at least one of the following conditions as non-preferred resource(s): resource(s) indicated by a received SCI (e.g., SCI format 1-A) wherein the RSRP measurement performed for the received SCI is higher than a threshold, and the threshold is associated with the priority field in the received SCI; and/or resource(s) indicated by a received SCI (e.g., SCI format 1-A) wherein the second wireless device is a destination wireless device of a TB associated with the received SCI and the RSRP measurement performed for the received SCI is lower than a threshold, where the threshold is associated with the priority field in the received SCI; and/or resources(s) in slot(s) in which the second wireless device does not expect to perform SL reception due to half duplex operation.

The second wireless device may select a second set of resources, for example, a subset of the first set of resources indicated via the request, for the inter-wireless-device coordination, for example, based on (e.g., in response to) triggering the COT AI procedure. The second wireless device may trigger a first resource selection procedure for selecting the second set of resources. The second wireless device may not trigger a first resource selection procedure for selecting the first set of resources. The second wireless device may select the second set of resources based on resource reservation/allocation information at the second wireless device. For example, the second wireless device may select the second set of resources based on that the second set of resources are reserved for uplink transmissions of the intended receiver of the one or more sidelink transmissions. For example, the second wireless device may select the second set of resources based on that the intended receiver of the one or more sidelink transmissions would receive other sidelink transmissions via the second set of resources. The second set of resources may be a set of preferred resources by the first wireless device for the one or more sidelink transmissions. The second set of resources may be a set of preferred resources by an intended receiver of the one or more sidelink transmissions. The second set of resources may be a set of non-preferred resources by the first wireless device for the one or more sidelink transmissions. The second set of resources may be a set of non-preferred resources by the intended receiver of the one or more sidelink transmissions.

The second wireless device may send (e.g., transmit), to the first wireless device and via sidelink, a message (e.g., the coordination information or the COT AI) comprising/indicating the second set of resources. The message may comprise a RRC, MAC-CE, and/or SCI. Referring to FIG. 19, the SCI may comprise first stage SCI and/or second stage SCI. The first stage of the SCI may comprise/indicate the second set of resources. The second stage of the SCI may comprise/indicate the second set of resources

Referring to FIG. 39, the second wireless device may send (e.g., transmit) a second signal/message (e.g., SCI (e.g., SCI format 2-C or 2-D) or MAC-CE) via the sidelink to the first wireless device. The second signal/message may comprise/indicate COT AI, as indicated in step 3920. For example, the second signal/message may comprise one or more fields indicting the determined second set of resources for the COT AI. The COT AI may indicate the second set of slots and/or resource blocks (e.g., preferred or non-preferred) for the (intended) COT/shared COT. For example, a first field in the COT AI message/signal may be a reference slot location field indicating a reference slot/mini-slot/multi-slot/symbol. For example, the first field may indicate a combination of DFN index and/or slot/mini-slot/multi-slot index and/or symbol index of the reference slot location. For example, a second field in the COT AI message/signal may be a resource combinations field. The resource combinations field may indicate the second set of resources based on the reference slot location. The resource combinations field may indicate one or more (e.g., M) tuples (e.g., $(TRIV_m, FRIV_m)$ or $(TRIV_m, FRIV_m, P_{rsvp,m})$, $1 \le m \le M$). For each tuple, a timing resource indicator value (e.g., $TRIV_m$) may be followed by a frequency resource indicator value (e.g., $FRIV_m$), and/or a period $P_{rsvp,m}$. For example, a third field in the COT AI message/signal may be a first resource location field indicating a location of a first resource, for example, in time domain. For example, the third field may indicate one or more first resource locations, each corresponding to a timing resource indicator value, for example, indicated by the second field ($TRIV_m$). For example, each of the first resources locations (of each tuple) may be determined by a slot offset (e.g., 0 or more logical/SL slots) with respect to the reference slot location indicated by the first field. For example, a fourth field in the COT AI message/signal may be a lowest subchannel indices field, indicating a starting subchannel of the first resource of each tuple. The second set of resources may comprise a union of the one or more resources indicated by the above fields in the COT AI message/signal.

The COT AI message/signal may comprise a fifth field, for example, a resource set type field, indicating whether the indicated set of resources (the second set of resources) is preferred resource set (e.g., by value 0) or non-preferred resource set (e.g., by value 1). The resource set type may match the resource set type in the first signal/message, for example, if the first message/signal comprising COT AI request is received by the second wireless device. The first wireless device may determine the resource set type of the indicated resources via the COT AI based on this field, for example, if the first wireless device did not send a COT AI request.

The second wireless device may send (e.g., transmit) the second signal/message comprising the COT AI to a base station, for example, via UCI and/or MAC-CE. The second wireless device may send (e.g., transmit) an uplink signal/message (e.g., a UCI and/or MAC-CE) to the base station, for example, in SL RA mode 1, comprising the COT AI. For example, the second wireless device may receive the COT AI request from the base station, for example, via DCI and/or MAC-CE.

The second wireless device may send via broadcast/groupcast/multicast signaling the COT AI (response) to multiple wireless devices, for example, including the first wireless device. The COT AI may be sent (e.g., transmitted) to one or more wireless devices, for example, including the first wireless device, via unicast signaling. A wireless device receiving the COT AI may or may not use it to determine a COT location/duration and/or to determine a location/duration of a shared COT, for example, shared with the second wireless device.

A first wireless device (e.g., wireless device#1) may detect SCI, from a second wireless device (e.g., wireless device#2). The SCI may comprise the COT AI. The SCI may schedule a MAC-CE comprising the COT AI. The first wireless device may determine the second set of resources, comprising one or more second resources, for example, based on (e.g., in response to) receiving a second signal/message (e.g., SCI and/or MAC-CE) indicating the COT AI. The first wireless device may determine the one or more second resources based on the fields in the received COT AI. Consequently, the first wireless device will be aware of local sensing information of the second wireless device, for example, so as to share a COT with the second wireless device that the second wireless device can properly and efficiently use, without a third wireless device's interruption or overriding the shared COT.

The first wireless device may receive DCI and/or MAC-CE (e.g., scheduled by DCI) from a base station, comprising the COT AI. For example, in SL RA mode 1, the base station may forward the COT AI from a second wireless device to the first wireless device.

The first wireless device may determine a COT based on a received COT AI. For example, the first wireless device may initiate a COT with a first duration, and the first duration is based on the received COT AI. The first wireless device may determine the first duration based on the second set of resources indicated by the COT AI. For example, the first wireless device may determine the first duration such that it comprises/includes/overlaps in time domain with at least one resource (e.g., time domain resource of a transmission occasion/resource) of the one or more second resources in the second set, for example, if the resource set type is set to 'preferred'. For example, the first wireless device may determine the first duration such that it excludes and/or does not comprises/overlap in time domain with the one or more second resources (e.g., time domain resources of transmission occasions/resources) in the second set, for example, if the resource set type is set to 'non-preferred'.

The first wireless device may select a third set of resources based on the second set of resources, for example, based on (e.g., in response to) receiving the message comprising the COT AI. The first wireless device may trigger a second resource selection procedure for the selecting of the third set of resources. The first wireless device may not trigger a second resource selection procedure for the selecting of the third set of resources. The first wireless device may select the third set of resources based on (e.g., from) the second set of resources. The first wireless device may select the third set of resources for the intended (shared) COT. For example, the first wireless device may select the third set of resources such that the COT duration comprises at least one resource of the third set.

The first wireless device may determine a first COT based on a received COT AI (e.g., step 3925). For example, the first wireless device may share a first COT, for example, a first COT initiated with a first duration, with the second wireless device and/or a third wireless device. For example, the first wireless device may determine a portion of the first COT, for example, a portion of the first duration of the first COT (e.g., as a second COT) to share with the second wireless device or the third wireless device based on the received COT AI. For example, the first wireless device may determine a starting time location of the shared portion of the first COT (e.g., starting time location of the second COT) within the first duration of the COT, based on the COT AI. For example, the first wireless device may determine a second duration of the shared portion of the first COT (e.g., second duration of the second COT) within the first duration of the first COT, based on the COT AI. For example, the first wireless device may determine an ending time location of the shared portion of the first COT (e.g., ending time location of the second COT) within the first duration of the COT, based on the COT AI. The first wireless device may determine the shared portion of the first COT (e.g., the second COT) such that it comprises/includes/overlaps in time domain with at least one resource (e.g., time domain resource of a transmission occasion/resource) of the one or more second resources in the second set indicated by the COT AI, for example, if the resource set type is set to 'preferred'. For example, the first wireless device may determine the shared portion of the first COT (e.g., the second COT) such that it excludes and/or does not comprises/overlap in time domain with the one or more second resources (e.g., time domain resources of transmission occasions/resources) in the second set indicated by the COT AI, for example, if the resource set type is set to 'non-preferred'.

The first COT may comprise the second COT. For example, the second COT may be a portion/subset of the first COT shared with one or more wireless devices. For example, the first COT may comprise a third COT. For example, the third COT may be a portion/subset of the first COT shared with a third wireless device. For example, the second COT and the third COT may be disjoint and/or back-to-back (e.g., continuous with no gap longer than a threshold, e.g., 16 us or 25 us).

A first wireless device (e.g., wireless device#1) may send (e.g., transmit) a third signal/message (e.g., SCI and/or MAC-CE) indicating shared COT to a second wireless device (e.g., wireless device#2), for example, as indicated in step 3930. The first wireless device may not send the third signal/message. The first wireless device may send the third signal/message to a third wireless device.

A second wireless device (e.g., wireless device#2) may detect SCI, from a first wireless device (e.g., wireless device#1). The SCI may comprise the COT sharing indication. The SCI may schedule a MAC-CE comprising the COT sharing indication. The second wireless device may determine the location (e.g., starting time location and/or ending time location) and/or duration of the shared portion of the COT (e.g., in step 3935), for example, based on (e.g., in response to) receiving the shared COT indication. The second wireless device may determine and/or select one or more third resources within the duration of the indicated shared COT, for one or more SL/LTL transmissions. The second wireless device may perform one or more LBT/channel access procedures based on a Type 2 (e.g., 2A/2B/2C) LBT/channel access procedure for the one or more SL/LTL transmissions within the duration of the indicated shared COT (e.g., the shared duration of the COT). At least one of the one or more SL/LTL transmissions may be addressed/destined to the first wireless device, for example, as indicated in step 3940.

The COT AI request may indicate whether COT AI is for a shared COT or not. For example, if a first field in the COT AI request is set to a first value, it indicates that the second wireless device (whose destination ID matches the destination ID associated with the signal/message comprising the COT AI request) is an intended recipient of the COT sharing (e.g., is a sharee or COT sharing wireless device). For example, if the first field in the COT AI request is set to a second value, it indicates that the second wireless device (whose destination ID matches the destination ID associated with the signal/message comprising the COT AI request) is not an intended recipient of the COT sharing (e.g., is a sharee or COT sharing wireless device). For example, the first wireless device may not share the COT. For example, the first wireless device may share the COT with a third wireless device. For example, the second wireless device may determine the one or more second resources of the second set to report via the COT AI based on the value of the first field.

What described herein may apply to or be used for frequency domain too. For example, it may apply to or be used for a frequency interval comprising one or more candidate frequency domain resources.

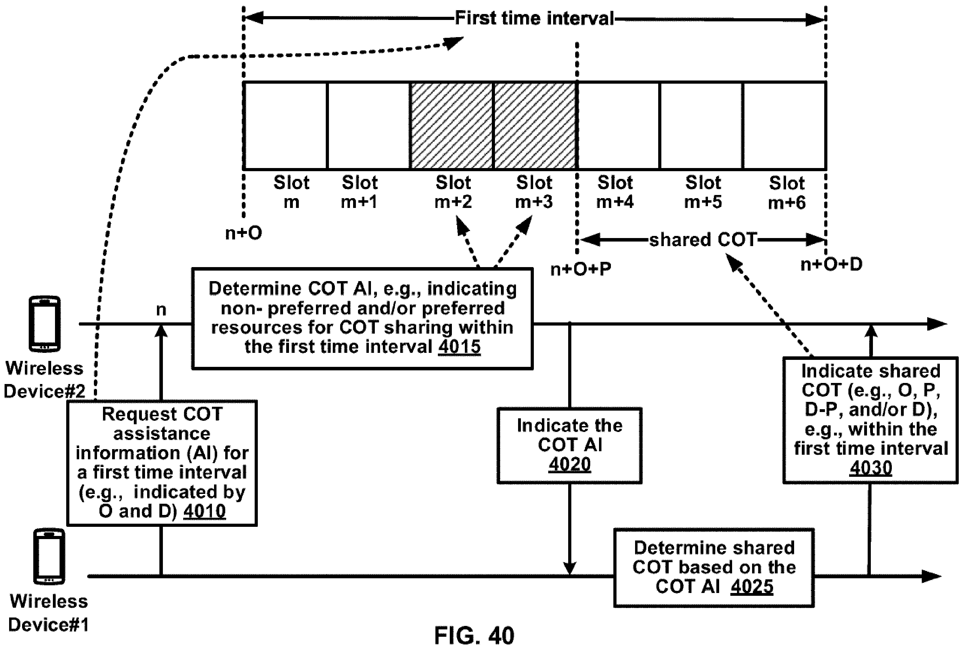

FIG. 40 shows an example of COT sharing using COT AI. A first wireless device (e.g., wireless device#1) may send (e.g., transmit) a signal (e.g., SCI and/or MAC-CE and/or RRC) to a second wireless device (e.g., wireless device#2) at time/slot n, requesting COT assistance information (AI) associated with a first time interval, for example, as indicated in step 4010. For example, the COT AI request may indicate a starting time and/or ending time and/or duration of the first time interval. For example, the COT AI request may comprise one or more fields/parameters indicating a time offset, O, and/or a duration D for the first time interval. For example, the time offset may be one or more slots and/or one or more symbols. For example, the duration be one or more slots and/or one or more symbols.

A second wireless device (e.g., wireless device#2) may receive a signal indicating the COT AI request. The second wireless device may determine the first time interval, for example, based on the one or more fields/parameters in the COT AI request. The second wireless device may determine a starting time location of the first time interval, for example, based on the time offset, O. For example, the second wireless device may determine that the first time interval starts in a first symbol of a first slot that is O slots and/or symbols after a reference time (e.g., after n+O). The reference time may be the time/slot where the COT AI request is received. The reference time may be indicated by a field in the COT AI. The second wireless device may determine a duration (D) and/or ending time of the first time interval (e.g., n+O+D). As shown in FIG. 40, the first time interval comprises 7 slots from slot m to slot m+6.

A second wireless device (e.g., wireless device#2) may determine COT AI based on the first time interval, for example, as indicated in step 4015. For example, the second wireless device may determine a set comprising one or more resources within the first time interval. The one or more resources may be preferred resources for COT sharing. The one or more resources may be non-preferred resources for COT sharing. For example, a field in the COT AI request may indicate whether the second wireless device indicates preferred or non-preferred resources. For example, a SL RRC configuration parameter may indicate whether the second wireless device indicates preferred or non-preferred resources. The second wireless device may always indicate preferred resources (e.g., recommended shared COT locations/durations). The COT AI may comprise one or more fields indicating the one or more resources within the first time interval. The COT AI may comprise one or more fields indicating frequency domain resources (e.g., subchannel(s)/PRB set(s)/interlace(s)) to determine the shared COT in frequency domain. As shown in FIG. 40, the second wireless device may determine resources/transmission occasions in slot m+2 and slot m+3 as non-preferred resources for a shared COT. For example, the second wireless device may detect a third wireless device's reservation of the resources in slot m+3 and slot m+4. The COT AI may indicate that the resources in slot m+2 and slot m+3 are non-preferred/unavailable resources for the second wireless device and/or for COT sharing.

A second wireless device (e.g., wireless device#2) may send (e.g., transmit) a second signal (e.g., SCI and/or MAC-CE and/or RRC) comprising the COT AI, for example, as indicated in step 4020. A first wireless device (e.g., wireless device#1) may determine shared COT (e.g., a shared portion of a COT), for example, based on the COT AI (e.g., as shown in step 4025). The first wireless device may determine shared COT, for example, based on (e.g., in response to) receiving/determining the COT AI. For example, the shared COT may comprise at least one of the resources (e.g., in time and/or frequency domain) indicated by the COT AI, for example, if the one or more resources are preferred resources. For example, the shared COT may exclude the resources (e.g., in time and/or frequency domain) indicated by the COT AI, for example, if the one or more resources are non-preferred resources. In the example of FIG. 40, the shared COT excludes resources of slots m+2 and m+3. For example, the shared COT may not overlap with the slots m+2 and m+3. For example, the shared COT may start after slot m+3, for example, P slots from the starting time location of the first time interval. For example, P may be a second time offset indicating the starting time location of the shared COT. The first wireless device may send (e.g., transmit), to the second wireless device, a COT sharing indication indicating the shared COT, for example, the location (starting ending time location, P and/or ending time location) and/or duration of the shared COT (e.g., the shared portion of the COT), for example, as indicated in step 4030. In the example of FIG. 40, the ending time location of the shared COT is the ending time location of the first time interval (e.g., may not be indicated via the COT sharing indication). In another example, the ending time location of the shared COT may be at n+O+P+S =< n+O+D, where S is the shared COT duration. The first wireless device may send (e.g., transmit) a third signal (e.g., SCI and/or MAC-CE) indicating the shared COT (e.g., shared portion of the COT) to the second wireless device.

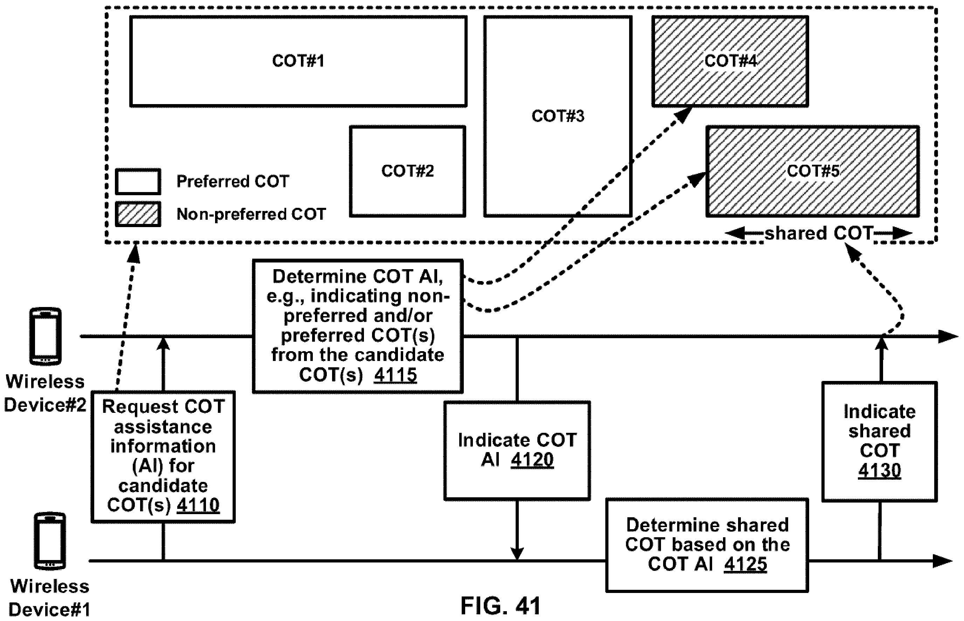

FIG. 41 shows an example of COT assistance mechanism in SL-U. A first wireless device (e.g., wireless device#1) may send (e.g., transmit) a signal (e.g., SCI and/or MAC-CE and/or RRC) to a second wireless device (e.g., wireless device#2), requesting COT assistance information (AI), for example, as shown in step 4110. For example, the COT AI request may indicate one or more candidate COTs, for example, comprising COT#1, COT#2, COT#3, COT#4, and COT#5 in the figure. For example, the COT AI request may indicate time and/or frequency domain locations of the one or more candidate COTs. For example, the COT AI request may comprise one or more fields/parameters indicating, for each candidate COT, a starting time and/or ending time and/or duration and/or starting subchannel/interlace and/or number of subchannels/interlaces.

A second wireless device (e.g., wireless device#2) may receive a signal indicating a COT AI request. The second wireless device may determine one or more candidate COTs, for example, based on one or more fields/parameters in the COT AI request. The second wireless device may determine COT AI (e.g., as shown in step 4115), for example, based on the one or more candidate COTs indicated by the COT AI request. For example, the second wireless device may determine/select at least one first COT from among the one or more candidate COTs. The at least one first COT may be a preferred COT, for example, for COT sharing. The at least one first COT may be non-preferred COT, for example, for COT sharing. For example, a field in the COT AI request may indicate whether the second wireless device indicates preferred or non-preferred COT(s). For example, a SL RRC configuration parameter may indicate whether the second wireless device indicates preferred or non-preferred COT(s). The second wireless device may always indicate preferred COTs (e.g., recommended shared COT). The COT AI may comprise one or more fields indicating the at least one first COT. The COT AI may comprise one or more fields indicating frequency domain resources (e.g., subchannel(s)/PRB set(s)/interlace(s)) and/or time domain resources of the at least one first COT. The COT AI may comprise a bitmap field indicating the at least one first COT. For example, the size of the bitmap field may be equal to or greater than the number of candidate COTs in the COT AI request. SL RRC configuration parameters may indicate the size of the bitmap field in the COT AI. Each bit in the bitmap field, for example, from the MSB to LSB, may correspond to one of the candidate COTs, for example, in the order of starting time/slot index followed by starting subchannel/interlace index (or vice versa) followed by resource pool index. The field may be padded with 0s or 1s if the number of candidate COTs are less than the size of the bitfield. A first value of a bit (e.g., 0) may indicate that the corresponding candidate COT is non-preferred/unavailable. A second value of a bit (e.g., 1) may indicate that the corresponding candidate COT is preferred/available.

In the example of FIG. 41, a second wireless device (e.g., wireless device#2) may determine candidate COT#4 and candidate COT#5 as preferred/available COTs, for example, for a shared COT. For example, the second wireless device may detect a third wireless device's reservation of the resources overlapping with candidate COT#1 and COT#2 and COT#3. The COT AI may indicate that COT#1 and COT#2 and COT#3 are non-preferred and/or COT#4 and COT#5 are preferred for COT sharing. For example, the COT AI may comprise a filed indicating {0,0,0,1,1}, or {0,0,0,1,1,0,0,0} (e.g., three 0s padded for size 8 bits), etc.

A second wireless device (e.g., wireless device#2) may send (e.g., transmit) a second signal (e.g., SCI and/or MAC-CE and/or RRC) comprising the COT AI (e.g., as indicated in step 4120). A first wireless device (e.g., wireless device#1) may determine the shared COT (e.g., a shared portion of a COT), for example, based on the COT AI (e.g., as indicated in step 4125). The first wireless device may determine the shared COT, for example, based on (e.g., in response to) receiving/determining the COT AI. For example, the shared COT may comprise at least one of the candidate COTs indicated by the COT AI, for example, if the COT AI indicates preferred COTs. For example, the shared COT may exclude the candidate COTs indicated by the COT AI, for example, if the COT AI indicates non-preferred COTs. The first wireless device may select/determine at least one of the candidate COTs indicated by the COT AI for COT sharing. In the example of FIG. 41, the first wireless device selects COT#5 for COT sharing based on the COT AI. For example, the shared COT may be/comprise candidate COT#5. The first wireless device may send (e.g., transmit) a third signal (e.g., SCI and/or MAC-CE) indicating COT#5 as the shared COT (e.g., shared portion of the COT) to the second wireless device, for example, as indicated in step 4130.

A first wireless device, for example, a COT initiator wireless device, may receive one or more COT AI from one or more second wireless devices. The first wireless device may determine to share a COT with at least one of the one or more second wireless devices. For example, the first wireless device may send (e.g., transmit) (e.g., via multiple unicast signaling or a multicast/broadcast signaling) COT AI request to the one or more second wireless devices. The first wireless device may determine whether and/or which portion of the COT to share with each of the one or more second wireless devices, for example, based on the one or more received COT AI.

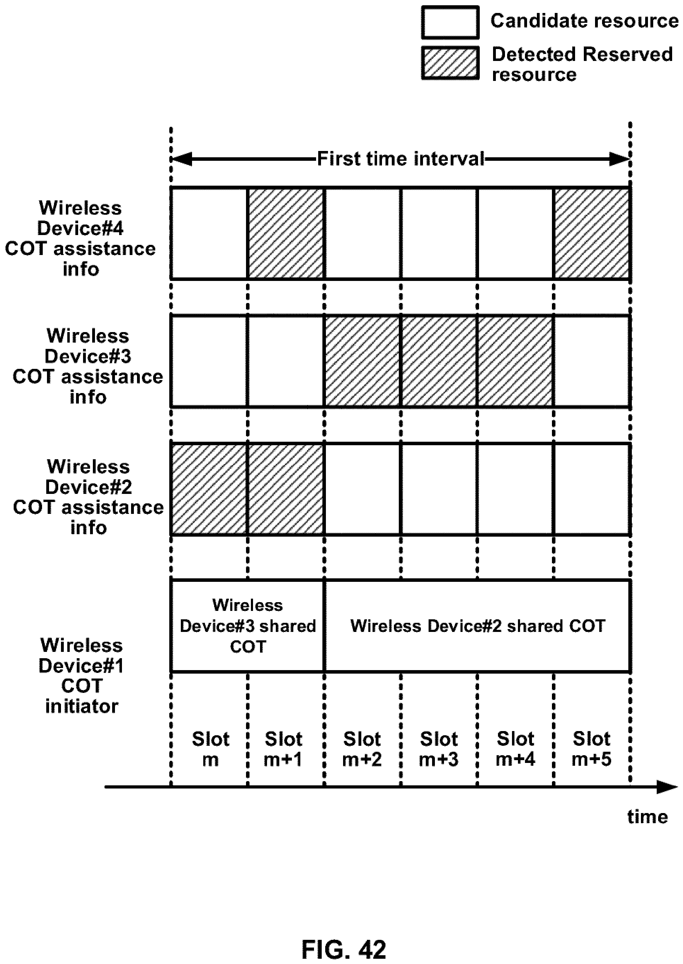

FIG. 42 shows an example of COT sharing based on COT AI. A first wireless device (e.g., wireless device#1) may receive a first COT AI from a second wireless device (e.g., wireless device#2), a second COT AI from a third wireless device (e.g., wireless device#3), and a third COT AI from a fourth wireless device (e.g., wireless device#4). For example, before this, the first wireless device (e.g., wireless device#1) may have sent COT AI request(s) to the second wireless device (e.g., wireless device#2) and the third wireless device (e.g., wireless device#3) and the fourth wireless device (e.g., wireless device#4). The COT AI request(s) may indicate a first time interval. The second wireless device, the third wireless device, and the fourth wireless device may determine the first time interval, for example, starting from slot m and ending in slot m+5. The first time interval may be a remainder/remaining duration of the COT, initiated by the first wireless device, that is going to be shared with other wireless devices. The second wireless device may determine resources in slot m and slot m+1 to be reserved, for example, may detect resource reservation corresponding to them, and determine them as non-preferred resources. The third wireless device may determine resources in slot m+2 and slot m+3 and slot m+4 to be reserved, for example, may detect resource reservation corresponding to them, and determine them as non-preferred resources. The fourth wireless device may determine resources in slot m+1 and slot m+5 to be reserved, for example, may detect resource reservation corresponding to them, and determine them as non-preferred resources. The second wireless device may send (e.g., transmit) a first COT AI to the first wireless device indicating the determined reserved/non-preferred resources. The third wireless device may send (e.g., transmit) a second COT AI to the first wireless device indicating the determined reserved/non-preferred resources. The fourth wireless device may send (e.g., transmit) a third COT AI to the first wireless device indicating the determined reserved/non-preferred resources. Alternatively, the second wireless device may send (e.g., transmit) a first COT AI to the first wireless device indicating the determined unreserved/preferred resources. The third wireless device may send (e.g., transmit) a second COT AI to the first wireless device indicating the determined unreserved/preferred resources. The fourth wireless device may send (e.g., transmit) a third COT AI to the first wireless device indicating the determined unreserved/preferred resources. The first wireless device may determine the preferred/non-preferred resources within the first time interval for each of the wireless devices, for example, as a response. The first wireless device may determine whether and which portion of the first time interval to shared with each of the wireless devices, for example, based on the union of the received COT AIs. As shown in FIG. 42, the first wireless device may determine to share a first portion of the COT, comprising slot m and slot m+1 with the third wireless device. The first wireless device may determine to share a second portion of the COT, comprising slot m+2 to slot m+5 with the second wireless device. The first wireless device may determine not to share any portion of the COT with the fourth wireless device. The first wireless device may send a first COT sharing indicator to the second wireless device indicating the second wireless device's shared COT, which overlaps with and/or comprises at least one of the available/preferred resources indicated by the first COT AI. The first wireless device may send a second COT sharing indicator to the third wireless device indicating the third wireless device's shared COT, which overlaps with and/or comprises at least one of the available/preferred resources indicated by the second COT AI. The first wireless device may not send a COT sharing indicator to the fourth wireless device and/or may send a COT sharing indicator to the fourth wireless device indicating no shared COT for the fourth wireless device.

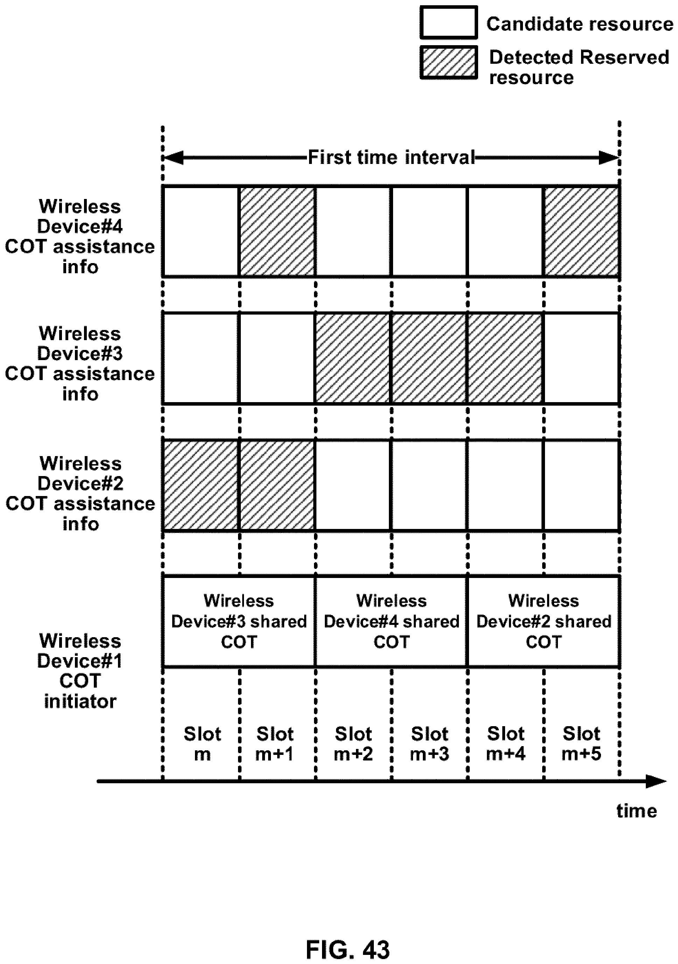

FIG. 43 shows another example of COT sharing based on COT AI. A first wireless device (e.g., wireless device#1) may receive a first COT AI from a second wireless device (e.g., wireless device#2), a second COT AI from a third wireless device (e.g., wireless device#3), and a third COT AI from a fourth wireless device (e.g., wireless device#4). For example, before this, the first wireless device (e.g., wireless device#1) may have sent COT AI request(s) to the second wireless device (e.g., wireless device#2) and the third wireless device (e.g., wireless device#3) and the fourth wireless device (e.g., wireless device#4). The COT AI request(s) may indicate a first time interval. The second wireless device, the third wireless device, and the fourth wireless device may determine the first time interval, for example, starting from slot m and ending in slot m+5. The first time interval may be a remainder/remaining duration of the COT, initiated by the first wireless device, that is going to be shared with other wireless devices. The second wireless device may determine resources in slot m and slot m+1 to be reserved, for example, may detect resource reservation corresponding to them, and determine them as non-preferred resources. The third wireless device may determine resources in slot m+2 and slot m+3 and slot m+4 to be reserved, for example, may detect resource reservation corresponding to them, and determine them as non-preferred resources. The fourth wireless device may determine resources in slot m+1 and slot m+5 to be reserved, for example, may detect resource reservation corresponding to them, and determine them as non-preferred resources. The second wireless device may send (e.g., transmit) a first COT AI to the first wireless device indicating the determined reserved/non-preferred resources. The third wireless device may send (e.g., transmit) a second COT AI to the first wireless device indicating the determined reserved/non-preferred resources. The fourth wireless device may send (e.g., transmit) a third COT AI to the first wireless device indicating the determined reserved/non-preferred resources. Alternatively, the second wireless device may send (e.g., transmit) a first COT AI to the first wireless device indicating the determined unreserved/preferred resources. The third wireless device may send (e.g., transmit) a second COT AI to wireless device#1 indicating the determined unreserved/preferred resources. The fourth wireless device may send (e.g., transmit) a third COT AI to the first wireless device indicating the determined unreserved/preferred resources. The first wireless device may determine the preferred/non-preferred resources within the first time interval to each of the wireless devices, for example, as a response. The first wireless device may determine whether and which portion of the first time interval to shared with each of the wireless devices, for example, based on the union of the received COT AIs. As shown in FIG. 43, the first wireless device may determine to share a first portion of the COT, comprising slot m and slot m+1 with the third wireless device. The first wireless device may determine to share a second portion of the COT, comprising slot m+2 and slot m+3 with the fourth wireless device. The first wireless device may determine to share a third portion of the COT, comprising slot m+4 and slot m+5 with the second wireless device. The first wireless device may send a first COT sharing indicator to the second wireless device indicating the second wireless device's shared COT, which overlaps with and/or comprises at least one of the available/preferred resources indicated by the first COT AI. The first wireless device may send a second COT sharing indicator to the third wireless device indicating the third wireless device's shared COT, which overlaps with and/or comprises at least one of the available/preferred resources indicated by the second COT AI. The first wireless device may send a third COT sharing indicator to the fourth wireless device indicating the fourth wireless device's shared COT, which overlaps with and/or comprises at least one of the available/preferred resources indicated by the third COT AI.

Alternatively, for each time resource (e.g., slot/mini-slot/multi-slot) of/within the first time interval (e.g., the remaining duration of the COT), the first wireless device may determine which wireless device to share the time resource (portion of the shared COT with), for example, based on the received COT AIs. For example, in FIG. 43: slot m with wireless device#3, slot m+1 with wireless device#3, slot m+2 with wireless device#4, slot m+3 with wireless device#4, slot m+4 with wireless device#2, slot m+5 with wireless device#2.

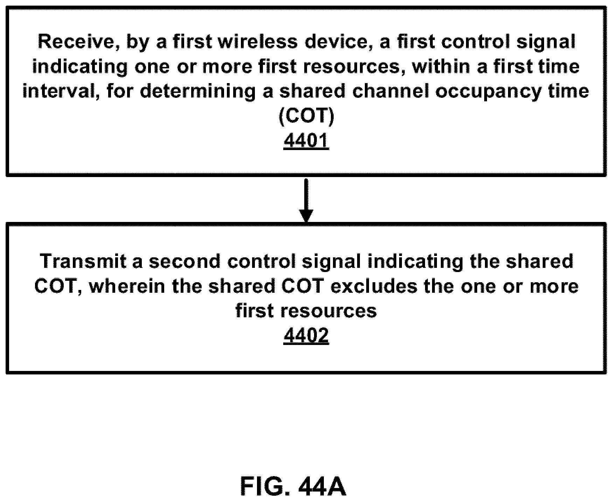

FIG. 44A shows an example method of COT sharing based on COT AI. A first wireless device may receive a first control signal (e.g., sidelink control signal) indicating one or more first resources, within a first time interval, for determining a shared channel occupancy time (COT) within the first time interval (e.g., in step 4401). The first wireless device may send (e.g., transmit) a second control signal (e.g., sidelink control signal) indicating the shared COT, wherein the shared COT excludes the one or more first resources (e.g., in step 4402).

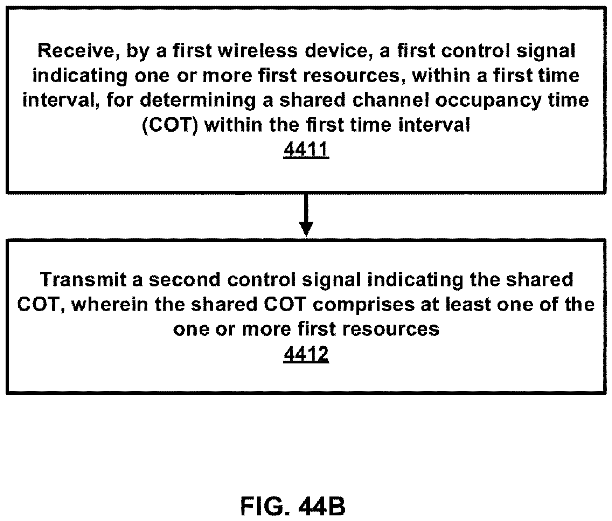

FIG. 44B shows an example method of COT sharing based on COT AI. A first wireless device may receive, a first control signal (e.g., sidelink control signal) indicating one or more first resources, within a first time interval, for determining a shared channel occupancy time (COT) within the first time interval (e.g., in step 4411). The first wireless device may send (e.g., transmit) a second control signal (e.g., sidelink control signal) indicating the shared COT, wherein the shared COT comprises at least one of the one or more first resources (e.g., in step 4412).

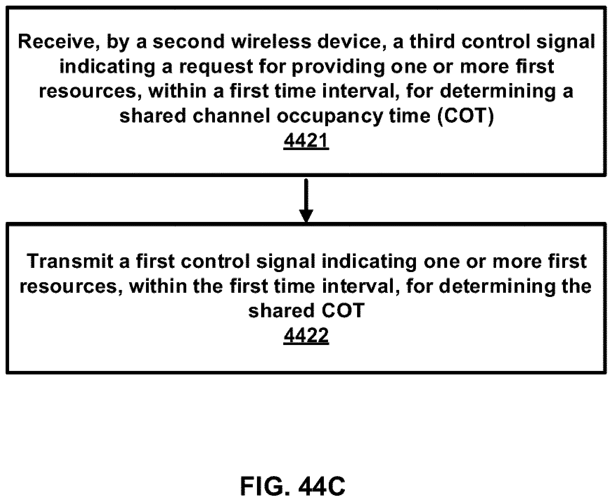

FIG. 44C shows an example method of COT AI signaling. A second wireless device may receive, a third control signal (e.g., sidelink control signal) indicating a request for providing one or more first resources, within a first time interval, for determining a shared channel occupancy time (COT) within the first time interval (e.g., in step 4421). The second wireless device may send (e.g., transmit) a first control signal (e.g., sidelink control signal) indicating one or more first resources, within the first time interval, for determining the shared COT (e.g., in step 4422).

The first time interval may comprise a plurality of time domain resources for sidelink transmissions, and the plurality of time domain resources may comprise the one or more first resources. The first control signal may be first sidelink control information (SCI). The first control signal may be a first medium access control-control element (MAC-CE) scheduled by first sidelink control information (SCI). The first wireless device may receive the first control signal from a base station or a second wireless device. The first control signal may be downlink control information (DCI) or a medium access control-control element (MAC-CE) scheduled by a first downlink control information (DCI).

The first wireless device may send (e.g., transmit) to the second wireless device, for example, before receiving the first control signal, a third control signal indicating a request for providing the one or more first resources within the first time interval. The first wireless device may receive from the second wireless device, the first control signal, for example, based on (e.g., in response to) sending (e.g., transmitting) the third control signal. The third control signal may indicate the first time interval. The third control signal may comprise a field indicating a starting time and/or an ending time of the first time interval. The third control signal may comprise a field indicating a first duration of the first time interval and a reference time for starting the first time interval. The third control signal may be third sidelink control information (SCI) or a third medium access control-control element (MAC-CE), scheduled by third sidelink control information (SCI), comprising a request for providing the one or more first resources within the first time interval.

The one or more first resources may be preferred resources of a second wireless device within the first time interval, from the plurality of time domain resources. The one or more first resources may be candidate resources for transmission by a second wireless device within the first time interval. The one or more first resources may not be associated with a reservation detected by a second wireless device. The one or more first resources may be selected and/or reserved for transmission by a second wireless device within the first time interval.

The first wireless device may send (e.g., transmit) to the second wireless device, a third control signal indicating a request for providing one or more second resources, from the plurality of time domain resources, within the first time interval. The first wireless device may receive, from the second wireless device, the first control signal, for example, based on (e.g., in response to) sending (e.g., transmitting) the third control signal, wherein the first control signal comprises one or more fields indicating the one or more second resources. The first wireless device may determine the one or more first resources based on the one or more second resources. The first wireless device may exclude the one or more second resources from the plurality of time domain resources. The first wireless device may determine the one or more first resources from remaining resources of the plurality of time domain resources within the first time interval.

The one or more second resources may be non-preferred resources of the second wireless device from the plurality of time domain resources. The one or more second resources may be associated with a reservation detected by the second wireless device.

The first wireless device may determine the first time interval based on a first duration and a location, for example, a starting point location and/or an ending point location for the first time interval. The first duration of the first time interval may be predefined. The first wireless device may receive a radio resource control message comprising a parameter indicating a first duration of the first time interval. The first time interval may be periodic. The first time interval may be a resource selection window.

The first wireless device may determine the shared COT based on the one or more first resources, for example, a duration of the shared COT, a starting time of the shared COT, an ending time of the shared COT. The first wireless device may determine a portion of the first time interval as the shared COT, and the portion may comprise/overlap in time with at least one of the one or more first resources. The second control signal may indicate a starting time and/or duration and/or ending time of the shared COT. The second control signal may be second sidelink control information (SCI) or a second medium access control-control element (MAC-CE) scheduled by second sidelink control information (SCI).

The first wireless device may initiate a first COT based on one or more channel access procedures. The first COT may comprise the shared COT. The shared COT may be a portion of the first COT that the first wireless device shares with a second wireless device.

The first control signal may comprise one or more fields indicating time domain resources/locations of the one or more first resources within the first time interval. The first wireless device may determine one or more first resource locations based on a location of reference slot indicated by a field in the first control signal. The first wireless device may determine the one or more first resources based on the one or more first resource locations and a number of reserved resources. The first control signal may comprise one or more fields indicating one or more subchannels of the one or more first resources. The first control signal may be a first a medium access control-control element (MAC-CE), scheduled by a first sidelink control information (SCI), comprising information providing the one or more first resources within the first time interval.

The first wireless device may send (e.g., transmit) to the second wireless device, a third control signal indicating a request for providing COT assistance information within the first time interval. The third control signal may indicate one or more candidate shared COTs within the first time interval. Each candidate shared COT of the one or more candidate shared COT may comprise/overlap with one or more resources for sidelink transmission. The first wireless device may receive, from the second wireless device, the first control signal, for example, based on (e.g., in response to) sending (e.g., transmitting) the third control signal.

The first control signal may comprise the COT assistance information indicating at least one candidate shared COT, of the one or more candidate shared COTs, comprising/overlapping with the one or more first resources. The at least one candidate shared COT do not overlap in time with a reservation detected by the second wireless device. The first wireless device may determine the shared COT based on the at least one candidate shared COTs. The first wireless device may select the shared COT from among the at least one candidate shared COTs. The first control signal may comprise the COT assistance information indicating at least one candidate shared COT, of the one or more candidate shared COTs, not comprising/not overlapping with the one or more first resources. The at least one candidate shared COT may overlaps in time with a reservation detected by the second wireless device. The first wireless device may determine the shared COT by excluding the at least one candidate shared COTs.

The first time interval may be a maximum duration of a first COT, comprising the shared COT, initiated by the first wireless device. The first control signal may indicate the first time interval. The first control signal may indicate a starting time and/or duration and/or ending time of the first time interval.

The first wireless device may receive from a third wireless device, a third control signal indicating one or more third resources within the first time interval. The first wireless device may select, for example, based on the one or more first resources and the one or more third resources, one of the second wireless device and the third wireless device as a recipient of the shared COT. The first wireless device may send (e.g., transmit) the second control signal, indicating the shared COT, to the second wireless device, for example, based on (e.g., in response to) the one or more first resources overlapping with the COT. The first wireless device may send (e.g., transmit) the second control signal, indicating the shared COT, to the third wireless device, for example, based on (e.g., in response to) the one or more third resources overlapping with the COT. The first wireless device may determine a first shared COT, as a first portion of a COT initiated by the first wireless device, for the second wireless device. The first portion may comprise at least one of the one or more first resources. The first wireless device may determine a second shared COT, as a second portion of the COT, for the third wireless device, and the second portion may comprise at least one of the one or more third resources. The shared COT may comprise the first shared COT and the second shared COT. The first wireless device may send (e.g., transmit) the second control signal indicating the first shared COT to the second wireless device, and a fourth control signal indicating the second shared COT to the third wireless device.

A first wireless device may send (e.g., transmit) to a second wireless device, a first sidelink control information (SCI) indicating a first duration comprising a plurality of sidelink resources. The first wireless device may receive, from the second wireless device, a second SCI indicating one or more preferred resources, of the plurality of sidelink resources, for determining a shared COT within the first duration. The first wireless device may determine, based on the one or more preferred resources, a portion of the first duration as the shared COT, and the portion may comprise at least one of the one or more preferred resources. The first wireless device may send (e.g., transmit), to the second wireless device, a third SCI indicating the shared COT.

A first wireless device may send (e.g., transmit) to a second wireless device, a first sidelink control information (SCI) indicating a first duration comprising a plurality of sidelink resources. The first wireless device may receive, from the second wireless device, a second SCI indicating one or more non-preferred resources, of the plurality of sidelink resources, for determining a shared COT within the first duration. The first wireless device may determine, for example, based on the one or more non-preferred resources, a portion of the first duration as the shared COT, and the portion excludes the one or more non-preferred resources. The first wireless device may send (e.g., transmit), to the second wireless device, a third SCI indicating the shared COT.

A wireless device may perform a method comprising multiple operations. A first wireless device may transmit, to a second wireless device, a first control signal. The first control signal may indicate: a channel occupancy time (COT) for COT sharing; and a request for COT assistance information. The first wireless device may receive, from the second wireless device, a second control signal comprising the COT assistance information and indicating one or more resources within the COT. The first wireless device may determine, based on the one or more resources, to share the COT with the second wireless device. The first wireless device may transmit, to the second wireless device, a third control signal indicating information for the COT sharing. The transmitting the first control signal may comprise transmitting the first control signal to a plurality of candidate wireless devices. The plurality of candidate wireless devices may comprise the second wireless device. The receiving the second control signal may comprise receiving the second control signal from each of the plurality of candidate wireless devices. The transmitting the third control signal may comprise transmitting the third control signal to each of the one or more candidate wireless devices. The determining may further comprise determining a portion of the COT as a shared COT, and the shared COT may comprise at least one of the one or more resources. The determining may further comprise determining a portion of the COT as a shared COT, and the shared COT may exclude the one or more resources. At least one of the first control signal, the second control signal, and the third control signal may comprise sidelink control information (SCI). The first control signal may comprise at least one of: sidelink control information (SCI); downlink control information (DCI); a medium access control-control element (MAC-CE); or radio resource control (RRC) information. The first control signal may indicate at least one of: a time interval of the COT; a starting time of the time interval; an ending time of the time interval; a duration of the time interval; or one or more time domain resources within the COT. The information for the COT sharing may comprise at least one of: a time interval of shared COT; a starting time of the time interval; an ending time of the time interval; or a duration of the time interval. The first control signal may indicate at least one of: a time interval of the COT; a starting time of the time interval; an ending time of the time interval; a duration of the time interval; or one or more frequency resources within the COT. The determining may further comprise determining a portion of the COT as a shared COT, and the information for the COT sharing may comprise a maximum duration of a time interval of the shared COT. The COT assistance information may comprise at least one of: preferred resources; or non-preferred resources, of the second wireless device, within the COT. The one or more resources may be associated with a reservation detected by the second wireless device. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

A wireless device may perform a method comprising multiple operations. A first wireless device may transmit, to a plurality of candidate wireless devices, a first control signal. The first control signal may indicate: a channel occupancy time (COT) for COT sharing; and a request for COT assistance information. The first wireless device may receive, from each of the plurality of candidate wireless devices, a second control signal comprising COT assistance information and indicating one or more resources within the COT. The first wireless device may determine, based on the second control signal, to share the COT with one or more candidate wireless devices of the plurality of candidate wireless devices. The first wireless device may transmit, to each of the one or more candidate wireless devices, a third control signal indicating information for the COT sharing. The determining may further comprise determining a first portion of the COT as a first shared COT to be shared with a first candidate wireless device of the plurality of candidate wireless devices, and the first shared COT may comprise at least one of the one or more resources indicated by the second control signal received from the first candidate wireless device. The determining may further comprise determining a second portion of the COT as a second shared COT to be shared with a second candidate wireless device of the plurality of candidate wireless devices, and the second shared COT may exclude the one or more resources indicated by the second control signal received from the second candidate wireless device. The determining may further comprise determining: a first portion of the COT as a first shared COT to be shared with a first candidate wireless device of the plurality of candidate wireless devices, and a second portion of the COT as a second shared COT to be shared with a second candidate wireless device of the plurality of candidate wireless devices. The first shared COT and the second shared COT may not overlap with each other. The first control signal may comprise at least one of: sidelink control information (SCI); downlink control information (DCI); a medium access control-control element (MAC-CE); or radio resource control (RRC) information. The first control signal may indicate at least one of: a time interval of the COT; a starting time of the time interval; an ending time of the time interval; a duration of the time interval; or one or more time domain resources within the COT. The information for the COT sharing may comprise at least one of: a time interval of shared COT; a starting time of the time interval; an ending time of the time interval; or a duration of the time interval. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

A wireless device may perform a method comprising multiple operations. A second wireless device may receive, from a first wireless device, a first control signal. The first control signal may indicate: a candidate channel occupancy time (COT) for COT sharing; and a request for COT assistance information based on the candidate COT. The second wireless device may transmit, to the first wireless device, a second control signal comprising the COT assistance information and indicating one or more resources within the candidate COT. The COT assistance information may be for the first wireless device to determine COT sharing. The second wireless device may receive, from the first wireless device, a third control signal indicating information for the COT sharing. At least one of the one or more resources may be included in the information for the COT sharing. The one or more resources may be excluded from the information for the COT sharing. The second control signal may comprise at least one of: sidelink control information (SCI); a medium access control-control element (MAC-CE); or radio resource control (RRC) information. The first control signal may indicate a plurality of resources within the COT, and the plurality of resources indicated by the first control signal may comprise the one or more resources indicated by the second control signal. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

A wireless device may perform a method comprising multiple operations. A first wireless device may transmit, to a second wireless device, a first sidelink control information (SCI). The first SCI may indicate: a candidate channel occupancy time (COT), for COT sharing with the second wireless device; and a request for COT assistance information based on the candidate COT. The first wireless device may receive, from the second wireless device, a second SCI comprising the COT assistance information indicating one or more resources within the candidate COT. The first wireless device may determine, based on the one or more resources, a portion of the candidate COT as a shared COT. The first wireless device may transmit, to the second wireless device, a third SCI indicating the shared COT. The first wireless device may receive from the second wireless device a transport block via a first resource within the shared COT. The first resource may be from the one or more resources. The first wireless device may receive from the second wireless device a transport block via a first resource within the shared COT. The first resource may not be from the one or more resources. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

A wireless device may perform a method comprising multiple operations. A first wireless device may transmit, to a second wireless device, a first sidelink control information (SCI) and a request for COT assistance information based on a candidate channel occupancy time (COT). The first SCI may indicate the candidate COT, for COT sharing, and may comprise a plurality of sidelink resources. The first wireless device may receive, from the second wireless device, a second SCI. The second SCI may comprise the COT assistance information indicating one or more non-preferred resources, of the plurality of sidelink resources, for a shared COT within the candidate COT. The first wireless device may determine, based on the one or more non-preferred resources, a portion of the candidate COT as the shared COT. The shared COT may exclude the one or more non-preferred resources. The first wireless device may transmit, to the second wireless device, a third SCI indicating the shared COT. A first wireless device may transmit, to a second wireless device, a first sidelink control information (SCI) indicating a first duration comprising a plurality of sidelink resources. The first wireless device may receive, from the second wireless device, a second SCI indicating one or more non-preferred resources, of the plurality of sidelink resources, for determining a shared COT within the first duration. The first wireless device may determine, based on the one or more non-preferred resources, a portion of the first duration as the shared COT. The portion may exclude the one or more non-preferred resources. The first wireless device may transmit, to the second wireless device, a third SCI indicating the shared COT. A first wireless device may receive, a first sidelink control signal indicating one or more first resources, within a first time interval, for determining a shared channel occupancy time (COT). The first wireless device may transmit a second sidelink control signal indicating the shared COT. The shared COT may exclude the one or more first resources. A first wireless device may transmit, to a second wireless device, a first sidelink control information (SCI) and a request for COT assistance information based on a candidate channel occupancy time (COT). The first SCI may indicate the candidate COT, for COT sharing, and may comprise a plurality of sidelink resources. The first wireless device may receive, from the second wireless device, a second SCI comprising the COT assistance information indicating one or more preferred resources, of the plurality of sidelink resources, for a shared COT within the candidate COT. The first wireless device may determine, based on the one or more preferred resources, a portion of the candidate COT as the shared COT. The portion may include the one or more preferred resources. The first wireless device may transmit, to the second wireless device, a third SCI indicating the shared COT. A first wireless device may transmit, to a second wireless device, a first sidelink control information (SCI) indicating a first duration comprising a plurality of sidelink resources. The first wireless device may receive, from the second wireless device, a second SCI indicating one or more preferred resources, of the plurality of sidelink resources, for determining a shared COT within the first duration. The first wireless device may determine, based on the one or more preferred resources, a portion of the first duration as the shared COT. The portion may comprise at least one of the one or more preferred resources. The first wireless device may transmit, to the second wireless device, a third SCI indicating the shared COT. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

A wireless device may perform a method comprising multiple operations. A first wireless device may receive, a first control signal indicating one or more first resources, within a first time interval, for determining a shared channel occupancy time (COT) within the first time interval. The first wireless device may transmit a second control signal indicating the shared COT. The shared COT may comprise at least one of the one or more first resources. The first time interval may comprise a plurality of time domain resources for sidelink transmissions, and the plurality of time domain resources may comprise the one or more first resources. The first wireless device may receive the first control signal from a second wireless device. The first control signal may be a first sidelink control information (SCI). The first control signal may be a first medium access control-control element (MAC-CE) scheduled by a first sidelink control information (SCI). The first wireless device may receive the first control signal from a base station. The first control signal may be a downlink control information (DCI). The first control signal may be a medium access control-control element (MAC-CE) scheduled by a first downlink control information (DCI). The first wireless device may transmit, to the second wireless device, a third control signal indicating a request for providing the one or more first resources within the first time interval. The first wireless device may receive, from the second wireless device, the first control signal in response to transmitting the third control signal. The third control signal may indicate the first time interval. The third control signal may comprise a field indicating a starting time and/or an ending time of the first time interval. The third control signal may comprise a field indicating a first duration of the first time interval and a reference time for starting the first time interval. The third control signal may be a third sidelink control information (SCI). The third control signal may be a third medium access control-control element (MAC-CE), scheduled by a third sidelink control information (SCI), comprising a request for providing the one or more first resources within the first time interval. The one or more first resources may be preferred resources of a second wireless device within the first time interval. The one or more first resources may be preferred resources, of the second wireless device, from the plurality of time domain resources. The one or more first resources may be candidate resources for transmission by a second wireless device within the first time interval. The one or more first resources may not be associated with a reservation detected by a second wireless device. The one or more first resources may be selected and/or reserved for transmission by a second wireless device within the first time interval. The first wireless device may transmit, to the second wireless device, a third control signal indicating a request for providing one or more second resources, from the plurality of time domain resources, within the first time interval. The first wireless device may receive, from the second wireless device, the first control signal in response to transmitting the third control signal. The first control signal may comprise one or more fields indicating the one or more second resources. The first wireless device may determine the one or more first resources based on the one or more second resources. The one or more first resources may exclude the one or more second resources from the plurality of time domain resources. The first wireless device may determine the one or more first resources from remaining resources of the plurality of time domain resources within the first time interval. The one or more second resources may be non-preferred resources of the second wireless device from the plurality of time domain resources. The one or more second resources may be associated with a reservation detected by the second wireless device. The first wireless device may determine the first time interval based on a first duration and a location. The first wireless device may determine a starting point location and/or an ending point location for the first time interval. A first duration of the first time interval may be predefined. The first wireless device may receive a radio resource control message comprising a parameter indicating a first duration of the first time interval. The first time interval may be periodic. The first time interval may be a resource selection window. The first wireless device may determine the shared COT based on the one or more first resources. The first wireless device may determine a duration of the shared COT. The first wireless device may determine a starting time of the shared COT. The first wireless device may determine an ending time of the shared COT. The portion may comprise and/or overlap in time with at least one of the one or more first resources. The second control signal may indicate a starting time and/or duration and/or ending time of the shared COT. The second control signal may be a second sidelink control information (SCI). The second control signal may be a second medium access control-control element (MAC-CE) scheduled by a second sidelink control information (SCI). The first wireless device may initiate a first COT based on one or more channel access procedures. The first COT may comprise the shared COT. The shared COT may be a portion of the first COT that the first wireless device shares with a second wireless device. The first control signal may comprise one or more fields indicating time domain resources/locations of the one or more first resources within the first time interval. The first wireless device may determine one or more first resource locations based on a location of reference slot indicated by a field in the first control signal. The first wireless device may determine the one or more first resources based on the one or more first resource locations and a number of reserved resources. The first control signal may comprise one or more fields indicating one or more subchannels of the one or more first resources. The first control signal may be first a medium access control-control element (MAC-CE), scheduled by a first sidelink control information (SCI), comprising information providing the one or more first resources within the first time interval. The first wireless device may transmit, to the second wireless device, a third control signal indicating a request for providing COT assistance information within the first time interval. The third control signal may indicate one or more candidate shared COTs within the first time interval. Each candidate shared COT of the one or more candidate shared COT may comprise and/or overlap with one or more resources for sidelink transmission. The first wireless device may receive, from the second wireless device, the first control signal in response to transmitting the third control signal. The first control signal may comprise the COT assistance information indicating at least one candidate shared COT, of the one or more candidate shared COTs, and may comprise and/or overlap with the one or more first resources. The at least one candidate shared COT may not overlap in time with a reservation detected by the second wireless device. The first wireless device may determine the shared COT based on the at least one candidate shared COTs. The first wireless device may select the shared COT from among the at least one candidate shared COTs. The first control signal may comprise the COT assistance information indicating at least one candidate shared COT, of the one or more candidate shared COTs. The first control signal may not comprise or overlap with the one or more first resources. The at least one candidate shared COT may overlap in time with a reservation detected by the second wireless device. The first wireless device may determine the shared COT by excluding the at least one candidate shared COTs. The first time interval may be a maximum duration of a first COT, comprising the shared COT, initiated by the first UE. The first control signal may indicate the first time interval. The first control signal may indicate a starting time and/or duration and/or ending time of the first time interval. The first wireless device may receive, from a third wireless device, a third control signal indicating one or more third resources within the first time interval. The first wireless device may select, based on the one or more first resources and the one or more third resources, one of the second wireless device and the third wireless device as a recipient of the shared COT. The first wireless device may transmit the second control signal, indicating the shared COT, to the second wireless device in response to the one or more first resources overlapping with the COT. The first wireless device may transmit the second control signal, indicating the shared COT, to the third wireless device in response to the one or more third resources overlapping with the COT. The first wireless device may determine a first shared COT, as a first portion of a COT initiated by the first wireless device, for the second wireless device. The first portion may comprise at least one of the one or more first resources; and a second shared COT, as a second portion of the COT, for the third wireless device. The second portion may comprise at least one of the one or more third resources. The shared COT may comprise the first shared COT and the second shared COT. The first wireless device may transmit: the second control signal indicating the first shared COT to the second wireless device; and a fourth control signal indicating the second shared COT to the third wireless device. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

A wireless device may perform a method comprising multiple operations. A first wireless device may transmit, to a second wireless device, a first sidelink control information (SCI) and a request for COT assistance information. The first SCI may indicate a channel occupancy time (COT) for COT sharing. The first wireless device may receive, from the second wireless device, a second SCI comprising the COT assistance information indicating one or more resources within the COT. The first wireless device may transmit, to the second wireless device, a third SCI indicating information to share the COT with the second wireless device. A first wireless device may transmit, to a plurality of second wireless devices comprising a second wireless device, a first sidelink control information (SCI) indicating a request for COT assistance information; The first wireless device may receive, from the plurality of second wireless devices, second SCIs comprising COT assistance information. The second SCIs comprise a second SCI from the second wireless device with a second COT assistance information. The first wireless device may transmit, based on the second COT assistance information and to the second wireless device, a third SCI indicating information to share the COT with the second wireless device. The wireless device may comprise one or more processors and memory, storing instructions, that when executed by the one or more processors perform the method described herein. A system may comprise the wireless device configured to perform the described method, additional operations, and/or include the additional elements; and a base station configured to communicate with one or more wireless devices. A computer-readable medium may store instructions that, when executed, cause performance of the described method, additional operations, and/or include additional elements. A base station may perform a corresponding method comprising multiple operations.

Clause 1. A method comprising: transmitting, by a first wireless device and to a second wireless device, a first control signal indicating: a channel occupancy time (COT) for COT sharing; and a request for COT assistance information; receiving, from the second wireless device, a second control signal comprising the COT assistance information and indicating one or more resources within the COT; determining, based on the one or more resources, to share the COT with the second wireless device; and transmitting, to the second wireless device, a third control signal indicating information for the COT sharing.

Clause 2. The method of clause 1, wherein the transmitting the first control signal comprises transmitting the first control signal to a plurality of candidate wireless devices, the plurality of candidate wireless devices comprises the second wireless device; the receiving the second control signal comprises receiving the second control signal from each of the plurality of candidate wireless devices; and the transmitting the third control signal comprises transmitting the third control signal to each of the one or more candidate wireless devices.

Clause 3. The method of any one of clauses 1 or 2, wherein the determining further comprises determining a portion of the COT as a shared COT, and the shared COT comprises at least one of the one or more resources.

Clause 4. The method of any one of clauses 1 to 3, wherein the determining further comprises determining a portion of the COT as a shared COT, and the shared COT excludes the one or more resources.

Clause 5. The method of any one of clauses 1 to 4, wherein at least one of the first control signal, the second control signal, and the third control signal comprises sidelink control information (SCI).

Clause 6. The method of any one of clauses 1 to 5, wherein the first control signal comprises at least one of: sidelink control information (SCI); downlink control information (DCI); a medium access control-control element (MAC-CE); or radio resource control (RRC) information.

Clause 7. The method of any one of clauses 1 to 6, wherein the first control signal indicates at least one of: a time interval of the COT; a starting time of the time interval; an ending time of the time interval; a duration of the time interval; or one or more time domain resources within the COT.

Clause 8. The method of any one of clauses 1 to 7, wherein the information for the COT sharing comprises at least one of: a time interval of shared COT; a starting time of the time interval; an ending time of the time interval; or a duration of the time interval.

Clause 9. The method of any one of clauses 1 to 8, wherein the first control signal indicates at least one of: a time interval of the COT; a starting time of the time interval; an ending time of the time interval; a duration of the time interval; or one or more frequency resources within the COT.

Clause 10. The method of any one of clauses 1 to 9, wherein the determining further comprises determining a portion of the COT as a shared COT, and the information for the COT sharing comprises a maximum duration of a time interval of the shared COT.

Clause 11. The method of any one of clauses 1 to 10, wherein the COT assistance information comprises at least one of: preferred resources; or non-preferred resources, of the second wireless device, within the COT.

Clause 12. The method of any one of clauses 1 to 11, wherein the one or more resources are associated with a reservation detected by the second wireless device.

Clause 13. A computing device comprising: one or more processors; and memory storing instructions that, when executed by the one or more processors, cause the computing device to perform: the method of any one of clauses 1 to 12.

Clause 14. A system comprising: a wireless device configured to perform the method of any one of clauses 1 to 12.

Clause 15. A computer-readable medium storing instructions that, when executed, cause performance of: the method of any one of clauses 1 to 12.

Clause 16. A method comprising: transmitting, by a first wireless device and to a plurality of candidate wireless devices, a first control signal indicating: a channel occupancy time (COT) for COT sharing; and a request for COT assistance information; receiving, from each of the plurality of candidate wireless devices, a second control signal comprising COT assistance information and indicating one or more resources within the COT; determining, based on the second control signal, to share the COT with one or more candidate wireless devices of the plurality of candidate wireless devices; and transmitting, to each of the one or more candidate wireless devices, a third control signal indicating information for the COT sharing.

Clause 17. The method of clause 16, wherein the determining further comprises determining a first portion of the COT as a first shared COT to be shared with a first candidate wireless device of the plurality of candidate wireless devices, and the first shared COT comprises at least one of the one or more resources indicated by the second control signal received from the first candidate wireless device.

Clause 18. The method of any one of clauses 16 or 17, wherein the determining further comprises determining a second portion of the COT as a second shared COT to be shared with a second candidate wireless device of the plurality of candidate wireless devices, and the second shared COT excludes the one or more resources indicated by the second control signal received from the second candidate wireless device.

Clause 19. The method of any one of clauses 16 to 18, wherein the determining further comprises determining: a first portion of the COT as a first shared COT to be shared with a first candidate wireless device of the plurality of candidate wireless devices, and a second portion of the COT as a second shared COT to be shared with a second candidate wireless device of the plurality of candidate wireless devices, and the first shared COT and the second shared COT do not overlap with each other.

Clause 20. The method of any one of clauses 16 to 19, wherein the first control signal comprises at least one of: sidelink control information (SCI); downlink control information (DCI); a medium access control-control element (MAC-CE); or radio resource control (RRC) information.

Clause 21. The method of any one of clauses 16 to 20, wherein the first control signal indicates at least one of: a time interval of the COT; a starting time of the time interval; an ending time of the time interval; a duration of the time interval; or one or more time domain resources within the COT.

Clause 22. The method of any one of clauses 16 to 21, wherein the information for the COT sharing comprises at least one of: a time interval of shared COT; a starting time of the time interval; an ending time of the time interval; or a duration of the time interval.

Clause 23. A computing device comprising: one or more processors; and memory storing instructions that, when executed by the one or more processors, cause the computing device to perform: the method of any one of clauses 16 to 22.

Clause 24. A system comprising: a wireless device configured to perform the method of any one of clauses 16 to 22.

Clause 25. A computer-readable medium storing instructions that, when executed, cause performance of: the method of any one of clauses 16 to 22.

Clause 26. A method comprising: receiving, by a second wireless device and from a first wireless device, a first control signal indicating: a candidate channel occupancy time (COT) for COT sharing; and a request for COT assistance information based on the candidate COT; transmitting, to the first wireless device, a second control signal comprising the COT assistance information and indicating one or more resources within the candidate COT, wherein the COT assistance information is for the first wireless device to determine COT sharing; and receiving, from the first wireless device, a third control signal indicating information for the COT sharing.

Clause 27. The method of clause 26, wherein at least one of the one or more resources is included in the information for the COT sharing.

Clause 28. The method of any one of clauses 26 or 27, wherein the one or more resources are excluded from the information for the COT sharing.

Clause 29. The method of any one of clauses 26 to 28, wherein the second control signal comprises at least one of: sidelink control information (SCI); a medium access control-control element (MAC-CE); or radio resource control (RRC) information.

Clause 30. The method of any one of clauses 26 to 29, wherein the first control signal indicates a plurality of resources within the COT, and the plurality of resources indicated by the first control signal comprises the one or more resources indicated by the second control signal.

Clause 31. A computing device comprising: one or more processors; and memory storing instructions that, when executed by the one or more processors, cause the computing device to perform: the method of any one of clauses 26 to 30.

Clause 32. A system comprising: a wireless device configured to perform the method of any one of clauses 26 to 30.

Clause 33. A computer-readable medium storing instructions that, when executed, cause performance of: the method of any one of clauses 26 to 30.

Clause 34. A method comprising: transmitting, by a first wireless device to a second wireless device, a first sidelink control information (SCI) indicating: a candidate channel occupancy time (COT), for COT sharing with the second wireless device; and a request for COT assistance information based on the candidate COT; receiving, from the second wireless device, a second SCI comprising the COT assistance information indicating one or more resources within the candidate COT; determining, based on the one or more resources, a portion of the candidate COT as a shared COT; and transmitting, to the second wireless device, a third SCI indicating the shared COT.

Clause 35. The method of clause 34, further comprising receiving from the second wireless device a transport block via a first resource within the shared COT, wherein the first resource is from the one or more resources.

Clause 36. The method of any one of clauses 34 or 35, further comprising receiving from the second wireless device a transport block via a first resource within the shared COT, wherein the first resource is not from the one or more resources.

Clause 37. A method comprising: transmitting, by a first wireless device to a second wireless device, a first sidelink control information (SCI) indicating: a candidate channel occupancy time (COT), for COT sharing, comprising a plurality of sidelink resources; and a request for COT assistance information based on the candidate COT; receiving, from the second wireless device, a second SCI comprising the COT assistance information indicating one or more non-preferred resources, of the plurality of sidelink resources, for a shared COT within the candidate COT; determining, based on the one or more non-preferred resources, a portion of the candidate COT as the shared COT, wherein the shared COT excludes the one or more non-preferred resources; and transmitting, to the second wireless device, a third SCI indicating the shared COT.

Clause 38. A method comprising: transmitting, by a first wireless device to a second wireless device, a first sidelink control information (SCI) indicating a first duration comprising a plurality of sidelink resources; receiving, from the second wireless device, a second SCI indicating one or more non-preferred resources, of the plurality of sidelink resources, for determining a shared COT within the first duration; determining, based on the one or more non-preferred resources, a portion of the first duration as the shared COT, wherein the portion excludes the one or more non-preferred resources; and transmitting, to the second wireless device, a third SCI indicating the shared COT.

Clause 39. A method comprising: receiving, by a first wireless device, a first sidelink control signal indicating one or more first resources, within a first time interval, for determining a shared channel occupancy time (COT); transmitting a second sidelink control signal indicating the shared COT, wherein the shared COT excludes the one or more first resources.

Clause 40. A method comprising: transmitting, by a first wireless device to a second wireless device, a first sidelink control information (SCI) indicating: a candidate channel occupancy time (COT), for COT sharing, comprising a plurality of sidelink resources; and a request for COT assistance information based on the candidate COT; receiving, from the second wireless device, a second SCI comprising the COT assistance information indicating one or more preferred resources, of the plurality of sidelink resources, for a shared COT within the candidate COT; determining, based on the one or more preferred resources, a portion of the candidate COT as the shared COT, wherein the portion includes the one or more preferred resources; and transmitting, to the second wireless device, a third SCI indicating the shared COT.

Clause 41. A method comprising: transmitting, by a first wireless device to a second wireless device, a first sidelink control information (SCI) indicating a first duration comprising a plurality of sidelink resources; receiving, from the second wireless device, a second SCI indicating one or more preferred resources, of the plurality of sidelink resources, for determining a shared COT within the first duration; determining, based on the one or more preferred resources, a portion of the first duration as the shared COT, wherein the portion comprises at least one of the one or more preferred resources; and transmitting, to the second wireless device, a third SCI indicating the shared COT.

Clause 42. A method comprising: receiving, by a first wireless device, a first control signal indicating one or more first resources, within a first time interval, for determining a shared channel occupancy time (COT) within the first time interval; transmitting a second control signal indicating the shared COT, wherein the shared COT comprises at least one of the one or more first resources.

Clause 43. The method of clause 42, wherein the first time interval comprises a plurality of time domain resources for sidelink transmissions, and the plurality of time domain resources comprise the one or more first resources.

Clause 44. The method of any one of clauses 42 or 43, further comprising receiving the first control signal from a second wireless device.

Clause 45. The method of any one of clauses 42 to 44, wherein the first control signal is a first sidelink control information (SCI).

Clause 46. The method of any one of clauses 42 to 45, wherein the first control signal is a first medium access control-control element (MAC-CE) scheduled by a first sidelink control information (SCI).

Clause 47. The method of any one of clauses 42 to 46, further comprising receiving the first control signal from a base station.

Clause 48. The method of any one of clauses 42 to 47, wherein the first control signal is a downlink control information (DCI).

Clause 49. The method of any one of clauses 42 to 48, wherein the first control signal is a medium access control-control element (MAC-CE) scheduled by a first downlink control information (DCI).

Clause 50. The method of any one of clauses 42 to 49, further comprising transmitting, by the first wireless device to the second wireless device, a third control signal indicating a request for providing the one or more first resources within the first time interval.

Clause 51. The method of any one of clauses 42 to 50, further comprising receiving, from the second wireless device, the first control signal in response to transmitting the third control signal.

Clause 52. The method of any one of clauses 42 to 51, wherein the third control signal indicates the first time interval.

Clause 53. The method of any one of clauses 42 to 52, wherein the third control signal comprises a field indicating a starting time and/or an ending time of the first time interval.

Clause 54. The method of any one of clauses 42 to 53, wherein the third control signal comprises a field indicating a first duration of the first time interval and a reference time for starting the first time interval.

Clause 55. The method of any one of clauses 42 to 54, wherein the third control signal is a third sidelink control information (SCI).

Clause 56. The method of any one of clauses 42 to 55, wherein the third control signal is a third medium access control-control element (MAC-CE), scheduled by a third sidelink control information (SCI), comprising a request for providing the one or more first resources within the first time interval.

Clause 57. The method of any one of clauses 42 to 56, wherein the one or more first resources are preferred resources of a second wireless device within the first time interval.

Clause 58. The method of any one of clauses 42 to 57, wherein the one or more first resources are preferred resources, of the second wireless device, from the plurality of time domain resources.

Clause 59. The method of any one of clauses 42 to 58, wherein the one or more first resources are candidate resources for transmission by a second wireless device within the first time interval.

Clause 60. The method of any one of clauses 42 to 59, wherein the one or more first resources are not associated with a reservation detected by a second wireless device.

Clause 61. The method of any one of clauses 42 to 60, wherein the one or more first resources are selected and/or reserved for transmission by a second wireless device within the first time interval.

Clause 62. The method of any one of clauses 42 to 61, further comprising transmitting, by the first wireless device to the second wireless device, a third control signal indicating a request for providing one or more second resources, from the plurality of time domain resources, within the first time interval.

Clause 63. The method of any one of clauses 42 to 62, further comprising receiving, from the second wireless device, the first control signal in response to transmitting the third control signal, the first control signal comprises one or more fields indicating the one or more second resources.

Clause 64. The method of any one of clauses 42 to 63, further comprising determining the one or more first resources based on the one or more second resources.

Clause 65. The method of any one of clauses 42 to 64, further comprising: excluding the one or more second resources from the plurality of time domain resources; and determining the one or more first resources from remaining resources of the plurality of time domain resources within the first time interval.

Clause 66. The method of any one of clauses 42 to 65, wherein the one or more second resources are non-preferred resources of the second wireless device from the plurality of time domain resources.

Clause 67. The method of any one of clauses 42 to 66, wherein the one or more second resources are associated with a reservation detected by the second wireless device.

Clause 68. The method of any one of clauses 42 to 67, further comprising determining, by the first wireless device, the first time interval based on a first duration and a location.

Clause 69. The method of any one of clauses 42 to 68, further comprising determining, by the first wireless device, a starting point location and/or an ending point location for the first time interval.

Clause 70. The method of any one of clauses 42 to 69, wherein a first duration of the first time interval is predefined.

Clause 71. The method of any one of clauses 42 to 70, further comprising receiving a radio resource control message comprising a parameter indicating a first duration of the first time interval.

Clause 72. The method of any one of clauses 42 to 71, wherein the first time interval is periodic.

Clause 73. The method of any one of clauses 42 to 72, wherein the first time interval is a resource selection window.

Clause 74. The method of any one of clauses 42 to 73, further comprising determining the shared COT based on the one or more first resources.

Clause 75. The method of any one of clauses 42 to 74, further comprising determining a duration of the shared COT.

Clause 76. The method of any one of clauses 42 to 75, further comprising determining a starting time of the shared COT.

Clause 77. The method of any one of clauses 42 to 76, further comprising determining an ending time of the shared COT.

Clause 78. The method of any one of clauses 42 to 77, further comprising determining a portion of the first time interval as the shared COT, wherein the portion comprises/overlaps in time with at least one of the one or more first resources.

Clause 79. The method of any one of clauses 42 to 78, wherein the second control signal indicates a starting time and/or duration and/or ending time of the shared COT.

Clause 80. The method of any one of clauses 42 to 79, wherein the second control signal is a second sidelink control information (SCI).

Clause 81. The method of any one of clauses 42 to 80, wherein the second control signal is a second medium access control-control element (MAC-CE) scheduled by a second sidelink control information (SCI).

Clause 82. The method of any one of clauses 42 to 81, further comprising initiating a first COT based on one or more channel access procedures.

Clause 83. The method of any one of clauses 42 to 82, wherein the first COT comprises the shared COT.

Clause 84. The method of any one of clauses 42 to 83, wherein the shared COT is a portion of the first COT that the first wireless device shares with a second wireless device.

Clause 85. The method of any one of clauses 42 to 84, wherein the first control signal comprises one or more fields indicating time domain resources/locations of the one or more first resources within the first time interval.

Clause 86. The method of any one of clauses 42 to 85, further comprising determining one or more first resource locations based on a location of reference slot indicated by a field in the first control signal.

Clause 87. The method of any one of clauses 42 to 86, further comprising determining the one or more first resources based on the one or more first resource locations and a number of reserved resources.

Clause 88. The method of any one of clauses 42 to 87, wherein the first control signal comprises one or more fields indicating one or more subchannels of the one or more first resources.

Clause 89. The method of any one of clauses 42 to 88, wherein the first control signal is first a medium access control-control element (MAC-CE), scheduled by a first sidelink control information (SCI), comprising information providing the one or more first resources within the first time interval.

Clause 90. The method of any one of clauses 42 to 89, further comprising transmitting, by the first wireless device to the second wireless device, a third control signal indicating a request for providing COT assistance information within the first time interval.

Clause 91. The method of any one of clauses 42 to 90, wherein the third control signal indicates one or more candidate shared COTs within the first time interval, each candidate shared COT of the one or more candidate shared COT comprising/overlapping with one or more resources for sidelink transmission.

Clause 92. The method of any one of clauses 42 to 91, further comprising receiving, from the second wireless device, the first control signal in response to transmitting the third control signal.

Clause 93. The method of any one of clauses 42 to 92, wherein the first control signal comprises the COT assistance information indicating at least one candidate shared COT, of the one or more candidate shared COTs, comprising/overlapping with the one or more first resources.

Clause 94. The method of any one of clauses 42 to 93, wherein the at least one candidate shared COT do not overlap in time with a reservation detected by the second wireless device.

Clause 95. The method of any one of clauses 42 to 94, further comprising determining the shared COT based on the at least one candidate shared COTs.

Clause 96. The method of any one of clauses 42 to 95, further comprising selecting the shared COT from among the at least one candidate shared COTs.

Clause 97. The method of any one of clauses 42 to 96, wherein the first control signal comprises the COT assistance information indicating at least one candidate shared COT, of the one or more candidate shared COTs, not comprising/not overlapping with the one or more first resources.

Clause 98. The method of any one of clauses 42 to 97, wherein the at least one candidate shared COT overlaps in time with a reservation detected by the second wireless device.

Clause 99. The method of any one of clauses 42 to 98, further comprising determining the shared COT by excluding the at least one candidate shared COTs.

Clause 100. The method of any one of clauses 42 to 99, wherein the first time interval is a maximum duration of a first COT, comprising the shared COT, initiated by the first UE.

Clause 101. The method of any one of clauses 42 to 100, wherein the first control signal indicates the first time interval.

Clause 102. The method of any one of clauses 42 to 101, wherein the first control signal indicates a starting time and/or duration and/or ending time of the first time interval.

Clause 103. The method of any one of clauses 42 to 102, further comprising receiving, by the first wireless device from a third wireless device, a third control signal indicating one or more third resources within the first time interval.

Clause 104. The method of any one of clauses 42 to 103, further comprising selecting, based on the one or more first resources and the one or more third resources, one of the second wireless device and the third wireless device as a recipient of the shared COT.

Clause 105. The method of any one of clauses 42 to 104, further comprising transmitting the second control signal, indicating the shared COT, to the second wireless device in response to the one or more first resources overlapping with the COT.

Clause 106. The method of any one of clauses 42 to 105, further comprising transmitting the second control signal, indicating the shared COT, to the third wireless device in response to the one or more third resources overlapping with the COT.

Clause 107. The method of any one of clauses 42 to 106, further comprising determining a first shared COT, as a first portion of a COT initiated by the first wireless device, for the second wireless device, the first portion comprises at least one of the one or more first resources; and a second shared COT, as a second portion of the COT, for the third wireless device, the second portion comprises at least one of the one or more third resources.

Clause 108. The method of any one of clauses 42 to 107, wherein the shared COT comprises the first shared COT and the second shared COT.

Clause 109. The method of any one of clauses 42 to 108, further comprising transmitting: the second control signal indicating the first shared COT to the second wireless device; and a fourth control signal indicating the second shared COT to the third wireless device.

Clause 110. A method comprising: transmitting, by a first wireless device to a second wireless device, a first sidelink control information (SCI) indicating: a channel occupancy time (COT) for COT sharing; and a request for COT assistance information; receiving, from the second wireless device, a second SCI comprising the COT assistance information indicating one or more resources within the COT; and transmitting, to the second wireless device, a third SCI indicating information to share the COT with the second wireless device.

Clause 111. A method comprising: transmitting, by a first wireless device to a plurality of second wireless devices comprising a second wireless device, a first sidelink control information (SCI) indicating a request for COT assistance information; receiving, from the plurality of second wireless devices, second SCIs comprising COT assistance information, wherein the second SCIs comprise a second SCI from the second wireless device with a second COT assistance information; and transmitting, based on the second COT assistance information and to the second wireless device, a third SCI indicating information to share the COT with the second wireless device.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, abase station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the scope of the descriptions herein. Accordingly, the foregoing description is by way of example only, and is not limiting.

**Claims**

1.   A method comprising:

transmitting, by a first wireless device and to a second wireless device, a first control signal indicating:

a channel occupancy time (COT) for COT sharing; and
a request for COT assistance information;

receiving, from the second wireless device, a second control signal comprising the COT assistance information and indicating one or more resources within the COT;
determining, based on the one or more resources, to share the COT with the second wireless device; and
transmitting, to the second wireless device, a third control signal indicating information for the COT sharing.

2.   The method of claim 1, wherein:

the transmitting the first control signal comprises transmitting the first control signal to a plurality of candidate wireless devices, wherein the plurality of candidate wireless devices comprises the second wireless device;
the receiving the second control signal comprises receiving the second control signal from each of the plurality of candidate wireless devices; and
the transmitting the third control signal comprises transmitting the third control signal to each of the one or more candidate wireless devices.

3.   The method of any one of the preceding claims, wherein the determining further comprises determining a portion of the COT as a shared COT, and wherein the shared COT comprises at least one of the one or more resources.

4.   The method of any one of the preceding claims, wherein the determining further comprises determining a portion of the COT as a shared COT, and wherein the shared COT excludes the one or more resources.

5.   The method of any one of the preceding claims, wherein at least one of the first control signal, the second control signal, and the third control signal comprises sidelink control information (SCI).

6.   The method of any one of the preceding claims, wherein the first control signal comprises at least one of:

sidelink control information (SCI);
downlink control information (DCI);
a medium access control-control element (MAC-CE); or
radio resource control (RRC) information.

7.   The method of any one of the preceding claims, wherein the first control signal indicates at least one of:

a time interval of the COT;
a starting time of the time interval;
an ending time of the time interval;
a duration of the time interval; or
one or more time domain resources within the COT.

8. The method of any one of the preceding claims, wherein the information for the COT sharing comprises at least one of:

a time interval of shared COT;
a starting time of the time interval;
an ending time of the time interval; or
a duration of the time interval.

9. The method of any one of the preceding claims, wherein the first control signal indicates at least one of:

a time interval of the COT;
a starting time of the time interval;
an ending time of the time interval;
a duration of the time interval; or
one or more frequency resources within the COT.

10. The method of any one of the preceding claims, wherein the determining further comprises determining a portion of the COT as a shared COT, and wherein the information for the COT sharing comprises a maximum duration of a time interval of the shared COT.

11. The method of any one of the preceding claims, wherein the COT assistance information comprises at least one of:

preferred resources; or
non-preferred resources,
of the second wireless device, within the COT.

12. The method of any one of the preceding claims, wherein the one or more resources are associated with a reservation detected by the second wireless device.

13. A computing device comprising: one or more processors; and memory storing instructions that, when executed by the one or more processors, cause the computing device to perform:
the method of any one of claims 1 - 12.

14. A system comprising:
a wireless device configured to perform the method of any one of claims 1 - 12.

15. A computer-readable medium storing instructions that, when executed, cause performance of:
the method of any one of claims 1 - 12.

**FIG. 1A**

**FIG. 1B**

**FIG. 2A**

**FIG. 2B**

IP Packets

QoS
Flows

SDAP
215/225

QoS Flow Handling

Radio
Bearers

PDCP
214/224

Header Comp.,
Ciphering

Header Comp.,
Ciphering

Reordering,
Retransmission

Reordering,
Retransmission

RLC
Channels

RLC
213/223

Segmentation,
ARQ

Segmentation,
ARQ

Logical
Channels

MAC
212/222

Multiplexing

HARQ

Transport
Channel

PHY
211/221

Coding, Resource Mapping

FIG. 3

| | | IP Packet | | | IP Packet | | | IP Packet | |
|---|---|---|---|---|---|---|---|---|---|

*n* | *n+1* | *m*

SDAP 225 | radio bearer 402 | H | SDAP SDU | | H | SDAP SDU | radio bearer 404 | H | SDAP SDU

SDAP PDU

PDCP 224 | H | PDCP SDU | | H | PDCP SDU | | H | PDCP SDU

RLC 223 | H | RLC SDU | | H | RLC SDU | | H | SDU Seg. | | H | SDU Seg.

MAC 222 | H | MAC SDU | H | MAC SDU | H | MAC SDU | | H | MAC SDU

PHY 221 | PHY SDU (Transport Block) | | PHY SDU

**FIG. 4A**

| R | F | LCID | SDU Length |
|---|---|---|---|

| H | MAC CE | H | MAC CE | H | MAC SDU | H | MAC SDU |

MAC PDU

**FIG. 4B**

**FIG. 5A**

**FIG. 5B**

Downlink

Uplink

EP 4 346 302 A1

**FIG. 6**

FIG. 7

**Resource Element (RE)**
**1 Symbol x 1 Subcarrier**

**Resource Block (RB)**
**12 Subcarriers**

Frequency

Time

NR Carrier Bandwidth
(Up to 3300 Subcarriers)

One Slot (14 Symbols)

**FIG. 8**

EP 4 346 302 A1

**FIG. 9**

EP 4 346 302 A1

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

FIG. 10A

PUCCH Group
1010

PUCCH Group
1050

Downlink
Component
Carriers

PCell
1011

SCell
1012

SCell
1013

PSCell
1051

SCell
1052

SCell
1053

UCI
1032

UCI
1031

UCI
1033

UCI
1072

UCI
1071

UCI
1073

Uplink
Component
Carriers

PCell
1021

SCell
1022

SCell
1023

PSCell
1061

SCell
1062

SCell
1063

FIG. 10B

**FIG. 11A**

**FIG. 11B**

**FIG. 12A**

**FIG. 12B**

EP 4 346 302 A1

FIG. 13A    FIG. 13B    FIG. 13C

EP 4 346 302 A1

**FIG. 14A**

**FIG. 14B**

FIG. 15A

Base Station 1504

Peripheral(s) 1516

Memory 1514

GPS Chipset 1517

TX Processing System 1510

Processing System 1508

RX Processing System 1512

Air Interface 1506

Wireless Device 1502

TX Processing System 1520

Processing System 1518

RX Processing System 1522

Peripheral(s) 1526

Memory 1524

GPS Chipset 1527

**FIG. 15B**

**FIG. 16A**

**FIG. 16B**

**FIG. 16D**

**FIG. 16C**

EP 4 346 302 A1

network coverage area

1721

1720

base station 1711

base station 1710

wireless device 1704

wireless device 1703

wireless device 1705

wireless device 1702

wireless device 1701

sidelink 1724

sidelink 1725

sidelink 1723

sidelink 1722

FIG. 17

**FIG. 18**

FIG. 19

FIG. 20

EP 4 346 302 A1

```
SL-ResourcePool::=            SEQUENCE {
...
    sl-UE-SelectedConfigRP            SL-UE-SelectedConfigRP
...
    sl-PreemptionEnable               ENUMERATED {enabled, pl1, pl2, pl3, pl4,
pl5, pl6, pl7, pl8}
...
    sl-TxPercentageList               SL-TxPercentageList
...
}


sl-UE-SelectedConfigRP ::=    SEQUENCE {
...
    sl-ThresPSSCH-RSRP-List           SL-ThresPSSCH-RSRP-List
    sl-MultiReserveResource           ENUMERATED {enabled}
    sl-MaxNumPerReserve               ENUMERATED {n2, n3}
    sl-SensingWindow                  ENUMERATED {ms100, ms1100}
    sl-SelectionWindowList            SL-SelectionWindowList
    sl-ResourceReservePeriodList      SEQUENCE (SIZE (1..16)) OF SL-
ResourceReservePeriod
    sl-RS-ForSensing                  ENUMERATED {pscch, pssch},
    ...
}
```

**FIG. 21**

EP 4 346 302 A1

```
SL-ResourceReservePeriod ::=          CHOICE {
    sl-ResourceReservePeriod1             ENUMERATED {ms0, ms100, ms200,
ms300, ms400, ms500, ms600, ms700, ms800, ms900, ms1000},
    sl-ResourceReservePeriod2             INTEGER (1..99)
}

SL-SelectionWindowList ::=            SEQUENCE (SIZE (8)) OF SL-
SelectionWindowConfig

SL-SelectionWindowConfig ::=         SEQUENCE {
    sl-Priority                           INTEGER (1..8),
    sl-SelectionWindow                    ENUMERATED {n1, n5, n10, n20}
}

SL-TxPercentageList ::=               SEQUENCE (SIZE (8)) OF SL-
TxPercentageConfig

SL-TxPercentageConfig ::=            SEQUENCE {
    sl-Priority                           INTEGER (1..8),
    sl-TxPercentage                       ENUMERATED {p20, p35, p50}
}
```

**FIG. 22**

EP 4 346 302 A1

FIG. 23

**FIG. 24**

**FIG. 25**

Trigger, by a wireless device, a resource selection procedure for transmitting a TB via sidelink 2605

Determine a sensing window, a selection window, and one or more reservation periods for resource reservation based on the triggering the resource selection procedure 2630

Initialize a candidate resource set to a set of candidate resources in the selection window 2635

First exclusion 2640

Determine first resources in the sensing window that have not been monitored by the wireless device 2641

Exclude second resources from the candidate resource set based on the first resources and the one or more reservation periods 2642

Second exclusion 2650

Exclude third resources from the candidate resource set with an RSRP higher than an RSRP threshold 2651

Resource evaluation action 2610

Remaining candidate resources are more than X%? 2655

NO

Increase the RSRP threshold with a value Y 2670

YES

Select resources from a remaining candidate resource set (after the first exclusion and the second exclusion) for transmitting the TB

Resource selection action 2620

**FIG. 26**

**higher layer (e.g., MAC layer and/or RRC layer) of the wireless device 2730**

**wireless device 2710**

Provide a set of resources $(r_0, r_1, r_2, ...)$ which is subject to re-evaluation and a set of resources $(r_0', r_1', r_2', ...)$ which is subject to pre-emption
2740

Request a set of resources (e.g., a remaining candidate resource set) from which the higher layer can select resources for transmitting a TB (e.g., PSCCH/PSSCH transmissions/retransmissions)
2750

Report the set of resources (e.g., the remaining candidate resources)
2760

Perform resource selection action of the resource selection procedure for selecting resources from the set of resources (e.g., the remaining candidate resource set) based on the report
2775

Report re-evaluation of a resource $r_i$ from the set of $(r_0, r_1, r_2, ...)$ and/or pre-emption of a resource $r_i'$ from the set of $(r_0', r_1', r_2', ...)$ based on the resource $r_i$ and/or $r_i'$ being not a member of the set of resources
2770

**Physical layer (e.g., layer 1) of the wireless device 2720**

Perform resource evaluation action of a resource selection procedure for selecting the set of resources (e.g., the remaining candidate resources)
2755

FIG. 27

**FIG. 28**

EP 4 346 302 A1

FIG. 29

**FIG. 30**

FIG. 31

| Channel Access Priority Class (CAPC: p) | m_p | CW_min, p | CW_max,p | T_slm cot,p | Allowed CW_p sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 ms or 10 ms | {15,31,63,127,255,511,1023} |
| 4 | 7 | 15 | 1023 | 6 ms or 10 ms | {15,31,63,127,255,511,1023} |

**FIG. 32**

EP 4 346 302 A1

**FIG. 33**

**Resource scheduled for wireless device**

**Resource not scheduled for wireless device**

|←—Shared COT duration D—→|

| Slot m | Slot m+1 | Slot m+2 | Slot m+3 | Slot m+4 |

**Wireless Device**

COT sharing indication

**Base Station**

time

**FIG. 34**

Wireless Device#2 communication range

Wireless Device#1 communication range

COT sharing

Wireless Device#1 COT initiator

Wireless Device#2

Wireless Device#3 High priority reservation overlapped with the shared COT

FIG. 35

FIG. 36

FIG.37

Wireless Device#1
communication range

Wireless Device#2
communication range

EP 4 346 302 A1

Wireless
Device#3

COT sharing

COT sharing

Wireless
Device#2

Wireless
Device#4
reservation (e.g.,
with a high
priority)
overlapped with
the shared COT

Wireless
Device#1
COT initiator

Wireless Device#3
communication range

FIG. 38

FIG. 39

FIG. 40

FIG. 41

EP 4 346 302 A1

EP 4 346 302 A1

Candidate resource

Detected Reserved resource

First time interval

Wireless Device#4 COT assistance info

Wireless Device#3 COT assistance info

Wireless Device#2 COT assistance info

Wireless Device#1 COT initiator

Wireless Device#3 shared COT

Wireless Device#2 shared COT

Slot m | Slot m+1 | Slot m+2 | Slot m+3 | Slot m+4 | Slot m+5

time

FIG. 42

121

FIG. 43

Receive, by a first wireless device, a first control signal indicating one or more first resources, within a first time interval, for determining a shared channel occupancy time (COT)
4401

Transmit a second control signal indicating the shared COT, wherein the shared COT excludes the one or more first resources
4402

**FIG. 44A**

Receive, by a first wireless device, a first control signal indicating one or more first resources, within a first time interval, for determining a shared channel occupancy time (COT) within the first time interval
4411

Transmit a second control signal indicating the shared COT, wherein the shared COT comprises at least one of the one or more first resources
4412

FIG. 44B

Receive, by a second wireless device, a third control signal
indicating a request for providing one or more first
resources, within a first time interval, for determining a
shared channel occupancy time (COT)
4421

Transmit a first control signal indicating one or more first
resources, within the first time interval, for determining the
shared COT
4422

FIG. 44C

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/147310 A1 (QUALCOMM INC [US]) 7 July 2022 (2022-07-07) * paragraph [0002] * * paragraph [0007] * * paragraph [0078] – paragraph [0079] * * paragraph [0104] – paragraph [0106] * * paragraph [0111] * * paragraph [0139] – paragraph [0144] * * paragraph [0155] – paragraph [0156] * ----- | 1-15 | INV. H04W72/02 ADD. H04W72/20 |
| X | US 2021/195637 A1 (XUE YISHENG [US] ET AL) 24 June 2021 (2021-06-24) * paragraph [0007] * * paragraph [0045] – paragraph [0048] * * paragraph [0073] – paragraph [0075] * * paragraph [0115] – paragraph [0119] * * paragraph [0126] – paragraph [0134] * * paragraph [0148] – paragraph [0149] * * figure 9 * ----- | 1-15 | |
| A | US 2021/092783 A1 (SUN JING [US] ET AL) 25 March 2021 (2021-03-25) * paragraph [0007] – paragraph [0010] * * claims 1-30 * ----- | 1-15 | TECHNICAL FIELDS SEARCHED (IPC) H04W |

The present search report has been drawn up for all claims

| Place of search | Date of completion of the search | Examiner |
|---|---|---|
| The Hague | 5 February 2024 | Chassatte, Rémy |

EPO FORM 1503 03.82 (P04C01)

## ANNEX TO THE EUROPEAN SEARCH REPORT
## ON EUROPEAN PATENT APPLICATION NO.

EP 23 20 0948

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2024

| Patent document cited in search report | | Publication date | Patent family member(s) | | Publication date |
|---|---|---|---|---|---|
| WO 2022147310 | A1 | 07-07-2022 | CN | 116686318 A | 01-09-2023 |
| | | | EP | 4272509 A1 | 08-11-2023 |
| | | | JP | 2024501983 A | 17-01-2024 |
| | | | KR | 20230125788 A | 29-08-2023 |
| | | | TW | 202234935 A | 01-09-2022 |
| | | | WO | 2022147310 A1 | 07-07-2022 |
| US 2021195637 | A1 | 24-06-2021 | NONE | | |
| US 2021092783 | A1 | 25-03-2021 | CN | 114424640 A | 29-04-2022 |
| | | | EP | 4035468 A1 | 03-08-2022 |
| | | | US | 2021092783 A1 | 25-03-2021 |
| | | | WO | 2021061880 A1 | 01-04-2021 |

EPO FORM P0459

**REFERENCES CITED IN THE DESCRIPTION**

**Patent documents cited in the description**

- US 63411630